(19) **Europäisches Patentamt**
**European Patent Office**
**Office européen des brevets**

(11) **EP 2 726 827 B1**

(12) **EUROPEAN PATENT SPECIFICATION**

(45) Date of publication and mention
of the grant of the patent:
**11.12.2019 Bulletin 2019/50**

(21) Application number: **12805312.1**

(22) Date of filing: **29.06.2012**

(51) Int Cl.:
*G01F 1/86* (2006.01)          *G01F 1/66* (2006.01)
*G01F 1/34* (2006.01)          *G01N 11/04* (2006.01)

(86) International application number:
**PCT/NZ2012/000112**

(87) International publication number:
**WO 2013/002656 (03.01.2013 Gazette 2013/01)**

(54) **FLOW RATE DETERMINATION METHOD AND APPARATUS**

VERFAHREN UND VORRICHTUNG ZUR BESTIMMUNG EINER STRÖMUNGSRATE

PROCÉDÉ DE DÉTERMINATION DE DÉBIT ET APPAREIL ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.06.2011 US 201161503087 P**

(43) Date of publication of application:
**07.05.2014 Bulletin 2014/19**

(73) Proprietor: **University of Canterbury
Christchurch 8020 (NZ)**

(72) Inventor: **Lee Pedro, Jose
Christchurch 8020 (NZ)**

(74) Representative: **Grünecker Patent- und
Rechtsanwälte
PartG mbB
Leopoldstraße 4
80802 München (DE)**

(56) References cited:
WO-A1-00/19184          WO-A1-96/15427
WO-A2-2011/070343          US-A1- 2004 168 522
US-A1- 2010 070 240

- **Pedro J Lee ET AL: "Frequency Domain Analysis for Detecting Pipeline Leaks", Journal of Hydraulic Engineering, July 2005 (2005-07), pages 596-604, XP055176709, DOI: 10.1061/(ASCE)0733-9429(2005)131:7(596) Retrieved from the Internet: URL:http://www.researchgate.net/profile/Angus_Simpson/publication/245297392_Frequency_Domain_Analysis_for_Detecting_Pipeline_Leaks/links/00463520d890edfee1000000.pdf [retrieved on 2015-03-16]**
- **Mohammad Hanif Chaudhry: "Resonance in pressurized piping systems", Thesis Doctor of Philosophy in the department of Civil Engineering, 6 April 1970 (1970-04-06), XP055176723, Retrieved from the Internet: URL:http://hdl.handle.net/2429/35221 [retrieved on 2015-03-16]**
- **HUIQING CHEN ET AL: "Discussions on Accuracy of Modified KDP Method Applied to Simultaneous Measurements of Unsteady Flow Rates, Pressures and Impedances for Pulsating Oil Flows in a Pipe", TRANSACTIONS OF THE JAPAN SOCIETY OF MECHANICAL ENGINEERS SERIES B, vol. 71, no. 712, December 2005 (2005-12), pages 2934-2940, XP055176192, ISSN: 0387-5016, DOI: 10.1299/kikaib.71.2934**
- **KASHIMA, A. ET AL.: 'Accuracy of instantaneous flow rate estimation using pressure measurements' PROCEEDINGS OF THE 17TH AUSTRALASIAN FLUID MECHANICS CONFERENCE 05 December 2010, AUCKLAND, NEW ZEALAND, XP055142126**

**Description**

**FIELD OF THE INVENTION**

The present invention relates to a method and apparatus for flow rate determination in a pipeline. Particularly, the present invention relates to a method and apparatus for flow rate determination in a pressurised pipeline.

**BACKGROUND OF THE INVENTION**

Flow rate or velocity is the speed at which the fluid travels within a pipe. The accurate measurement of flow rate in pressurised pipelines is important in a large number of industrial, engineering research and laboratory processes. In the food and beverage sector, the quality of the product depends largely on the correct measurement of each ingredient and is carefully monitored using real time flow measurements. In the oil and gas industry where fluids are sold from one party to another, the costs associated with flow rate measurement errors can be significant as the quantity of transferred fluid may be inconsistent with the demand, or as the cost per unit volume of the fluid increases. Accurate flow rate measurement is also particularly important in the efficient operation of internal combustion engines for maintaining the optimum fuel to air ratio and to minimise the emission of exhaust gases.

Most existing devices/methods for measuring flow rate are only capable of determining a time-averaged flow rate. There are a few existing techniques/devices that are applicable to fluids in unsteady flow due to the rapidly-changing nature of flow. Examples of existing techniques/devices include the hot-wire method, electromagnetic flow meters and the Laser Doppler Velocimetry (LDV) technique.

The hot-wire method is based on the principle of heat transfer. A wire that is heated by an electrical circuit is inserted in the flow path of fluid in the pipeline. As the fluid flows through the pipeline around the wire, heat exchange by convection of the fluid and the wire occurs, and the wire is cooled accordingly. The flow velocity is proportional to the power required to maintain the wire at a constant temperature. The hot-wire method is insensitive to the flow direction of fluid in the pipeline and is intrusive. Further, the hot-wire method requires costly maintenance and is not suited for field use.

The electromagnetic flow meters are based on Faraday's law of induction. A voltage is induced as a conductive fluid passes at right angles through a magnetic field. The induced voltage is proportional to the velocity of that fluid. Electromagnetic flow meters consisting of magnetic coils are used to generate a magnetic field. As a conductive fluid flows through the magnetic field, a voltage is induced which is measured by electrodes of the meter. Electromagnetic flow meters do obstruct the flow path of the fluid. However, this method is intrusive as the electromagnetic flow meters need to be inserted at the point of flow measurement within the pipeline system. Additionally, the size of the meter increases with the pipe size. Further, since Faraday's law of induction only applies to conductive fluids, the electromagnetic flow meters are limited by the conductivities of working fluids. Some commercial electromagnetic flow meters can deal with fluids with conductivities as low as $0.5\mu$S/cm. However, gasoline which has a conductivity of $10^8\mu$S/cm cannot be measured by electromagnetic flow meters (Doebelin, E. O. (1990) "Measurement systems: application and design", McGraw-Hill). The pipeline material must also be non-conductive and metallic pipes require a non-conductive rubber liner installed for these meters to operate accurately.

The Laser Doppler Velocimetry (LDV) technique is based on the Doppler principle. This technique measures the local flow velocity using the Doppler principle and determines the velocity profile in the pipe. A flow rate can then be determined by integrating the measured velocity profiles over the pipe cross-section. In this technique, a coherent laser beam is emitted from a laser source and is split into two beams. The paths of these beams are made to cross at the measurement location inside a transparent pipe section. When the two beams cross, an interference pattern of superpositioned light waves occurs. This pattern is disturbed by reflecting particles in the fluid and the changes in the light intensity can be related to the fluid velocity. The drawbacks of this technique are the high costs associated with the apparatus, and the requirement for reflecting particles in the fluid as well as a transparent pipe section for beam transmission. At least these drawbacks mean that LDVs are not suited to field use.

Washio proposes an inexpensive and non-intrusive method for measuring flow rate which requires minimum system modification and no reflecting particles (Washio, S., Takahashi, S., Yu, Y., and Yamaguchi, S. (1996) "Study of unsteady orifice flow characteristics in hydraulic oil lines", Journal of Fluids Engineering, Transactions of the ASME, 118(4), 743-748). The Washio method is based on the dynamic relationship between pressure in pipelines and flow rate. The flow rate at a flow estimation point can be inferred from the measured pressure at two points along the pipeline. The pressure changes due to the unsteadiness of fluid flow can be measured using strain-gauge or piezoelectric pressure transducers (Catania, A. E., and Ferrari, A. (2009) "Development and assessment of a new operating principle for the measurement of unsteady flow rates in high-pressure pipelines", Flow Measurement and Instrumentation, 20(6), 230-240). The use of pressure for flow rate determination is advantageous because pressure transducers are available at a very low cost and have a relatively small physical size. Pressure transducers can be flush mounted into the pipe wall to be non-intrusive causing minimum disturbance to the fluid flow.

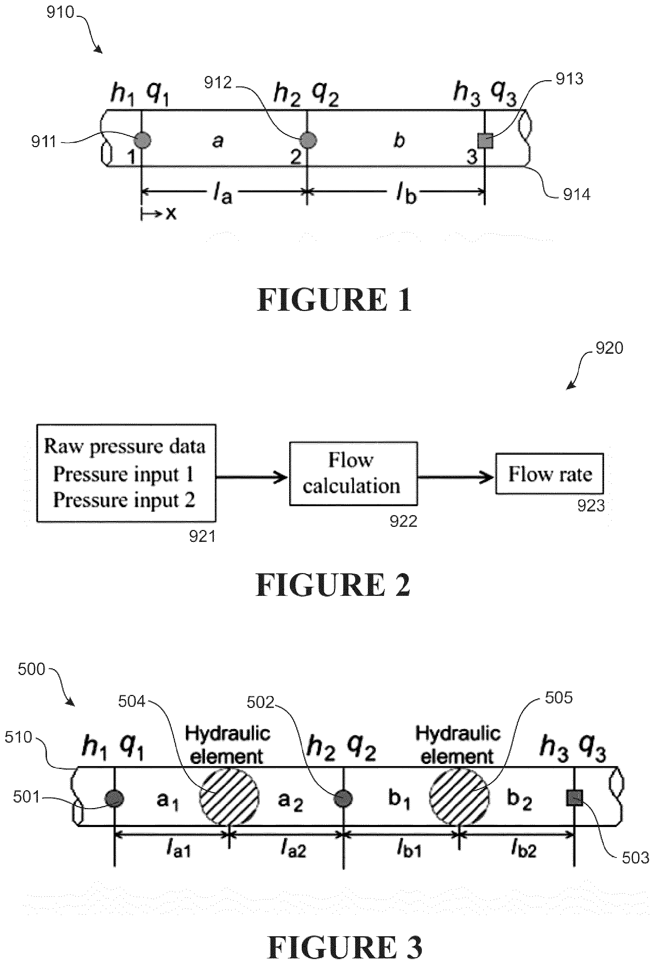

Figures 1 and 2 show a setup 910 and a flow chart 920 of the Washio method for estimating the flow rate of fluid at a flow estimation point. The Washio method for estimating flow rate involves calculating the time-varying flow rate at a flow estimation point 913 from the following relation between the flow rate and pressure head:

$$q_3 = -\frac{p_{b22}}{p_{a12}}\Delta h + \frac{p_{b21}p_{a12} + p_{b22}p_{a11} - p_{b22}}{p_{a12}}h_2 \qquad (1)$$

where

$q_3$ = time-varying flow rate at the flow estimation point 913,

$$\Delta h = h_2 - h_1,$$

$h_1$ = dimensionless time-varying pressure head measured by a first transducer 911,
$h_2$ = dimensionless time-varying pressure head measured by a second transducer 912,
$p_{a11} = cosh(\mu l_a)$,
$p_{a12} = - Z_c sinh(\mu l_a)$,
$p_{b21} = - sinh(\mu l_b)/Z_c$,
$p_{b22} = cosh(\mu l_b)$,
$l_a$ = distance between the transducers 911 and 912,
$l_b$ = distance between a transducer 911/912 and flow estimation point 913,

$$Z_c = \frac{\mu a^2}{j\omega g A},$$

$$\mu = \sqrt{-\frac{\omega^2}{a^2} + \frac{jgA\omega R}{a^2}},$$

$$j = \sqrt{-1},$$

$\omega$ = angular frequency,
$g$ = the acceleration due to gravity,
$A$ = the pipe cross-sectional area,
$R$= resistance term, and
$a$ = the wave speed.

Equation 1 shows that the time-varying flow component at a flow estimation point 913 can be calculated from two pressure measurements by transducers 911, 912 spaced a distance $l_a$ apart in the pipeline 914. The discharge prediction point 913 is located at a distance $l_b$ from one of the transducers 912.

One of the system parameters of Equation 1 is the system wave speed, a. In the Washio method, the system wave speed a is estimated from prior knowledge of the system. However, this parameter is extremely sensitive to the presence of air inside pipelines and can affect the accuracy of flow rate estimations. Even 1% of entrapped air reduces the wave speed by 75% (Wylie, E. B., and Streeter, V. L. (1993) "Fluid Transients in Systems", Prentice Hall, Englewood Cliffs, New Jersey, USA).

A transducer spacing *la* of 10cm is used in the Washio system. Given the wave speed of fluid in metal pipelines is typically around 1000m/s; the two transducers 911, 912 in the Washio method are essentially right next to each other implying that the 10cm spacing $l_a$ is virtually negligible. In the field, it is likely that the transducers will need to be spaced further apart. The implication of this requirement is that as the spacing between transducers increases, the time lag between the two pressure measurements increases, causing a difference in the pressure traces between the two transducers. The use of the Washio model in such arrangements leads to large errors in flow rate estimations. The inventors have found that the Washio model produces an estimation error of 140% in a numerical test with a transducer spacing of 152m in a 1000m pipeline.

Another system parameter of Equation 1 is the resistance term of the pipe R which relates to the flow regime of the flow under investigation. The Washio model provides a method for estimating flow rate of fluid where the flow is laminar. However, turbulent flows are more common in the pipeline systems. Not compensating for the different flow regimes in the model can lead to significant errors in the flow rate measurement.

The Washio model is limited to situations where a perfect stretch of pipe exists between the pressure transducers and the discharge prediction point. In reality, pressure ports on existing systems are often located on either side of key hydraulic elements such as valves, orifices, pumps, corners and junctions. In addition, the stretch of pipeline between the pressure transducers 911, 912 may contain additional elements not taken into account in the Washio model. For example, in a pipe section in which an orifice plate is inserted between the transducers 911, 912 and also between the transducer 912 and the flow estimation point 913, the application of the Washio model (Equation 1) resulted in an error between the actual and estimated flow rate of 16%.

A method for determination of a flow rate in a fluid is further known from WO 96/15427. Said document discloses, that a pressure pulse is generated by completely closing a valve 33. In said document it is determined the flow rate through direct measurement of the Joukowsky head rise from a complete valve closure.

Therefore, it is an object of the present invention to provide an improved apparatus and/or method for flow rate determination in pressurised pipelines for both laminar and turbulent flows or to at least provide the public with a useful choice.

In this specification where reference has been made to patent specifications, other external documents, or other sources of information, this is generally for the purpose of providing a context for discussing the features of the invention. Unless specifically stated otherwise, reference to such external documents is not to be construed as an admission that such documents, or such sources of information, in any jurisdiction, are prior art, or form any part of the common general knowledge in the art.

## SUMMARY OF INVENTION

In accordance with a first aspect of the present invention, there is provided a method of determining a flow rate of a fluid flowing in a pipe comprising:

generating a transient fluid wave using a generator, and measuring a pressure of the fluid wave at at least two locations in the pipe, the pressure being measured by sensors that are positioned on or in the pipe;

determining a wave speed of fluid based on the measured pressure of the fluid wave at the at least two locations in the pipe;

determining if a flow regime of fluid in the pipe comprises either a laminar or turbulent flow and comprises either a steady or unsteady flow; and

determining the flow rate of fluid based on the determined wave speed, on measured pressures of fluid at two locations in the pipe, and on the determined flow regime of fluid,

wherein the determining if a flow regime of fluid in the pipe comprises either a laminar or turbulent flow and comprises either a steady or unsteady flow is based on at least a Reynolds number of the fluid, and determination of the flow rate of the fluid at the flow determination point in the pipe is further based on a resistance term R associated with the flow regime, which is selected

a) if it is determined that the flow regime is a laminar steady flow to fulfil the following equation (1):

$$(1)\ R_S = \frac{32v}{gAD^2}$$

where

$g$ = acceleration due to gravity,
u = kinematic viscosity,
$A$ = pipe cross-sectional area, and
$D$ = pipe diameter;

b) if it is determined that the flow regime is a turbulent steady flow to fulfil the following equation (2):

$$(2)\quad R_S = \frac{fQ}{gDA^2}$$

where

    $g$ = acceleration due to gravity,
    $f$ = friction factor,
    Q = time-averaged mean discharge,
    $A$ = pipe cross-sectional area, and
    $D$ = pipe diameter;

c) if it is determined that the laminar or turbulent flow regime is an unsteady flow regime, an additional resistance term Ru defined by the following equation (3) is added to the resistance term Rs provided by equation (1) or (2):

$$(3)\quad R_U = \frac{4j\omega}{gA}\int_0^\infty e^{\left(-\frac{j\omega D^2}{4v}\tau\right)} W(t)\,d\tau$$

where

    u = kinematic viscosity,
    $g$ = acceleration due to gravity,
    $A$ = pipe cross-sectional area,
    $D$ = pipe diameter,

$$j = \sqrt{-1},$$

    $\omega$ = angular frequency,
    $W$ = weighting function, and

$\tau$ = dimensionless time ($= \frac{4v}{D^2}(t - t^*)$ where $t^*$ is the time used in the convolution integral).

The wave speed is an indication of how fast the transient wave (water hammer wave) propagates along the pipe.

As used herein, the term 'comprising' as used in this specification means 'consisting at least in part of'. When interpreting each statement in this specification that includes the term 'comprising', features other than that or those prefaced by the term may also be present. Related terms such as 'comprise' and 'comprises' are to be interpreted in the same manner.

In one embodiment, the method comprises adjusting the flow rate of the fluid through the pipe if the determined flow rate substantially differs from an expected flow rate.

In one embodiment, the wave speed is determined based on the pressure measured at a first pair of locations in the pipe, and the flow rate is determined based on the pressure measured at a second pair of locations in the pipe. Preferably, the locations of the first pair are the same as the locations of the second pair. In that embodiment, one pair of sensors may be used to determine both the wave speed and the measured pressures at two locations. Alternatively, the locations of the first pair may be different from the locations of the second pair. In that embodiment, four sensors may be used. Alternatively, only one location of the first pair and the second pair are the same, and three sensors may be used.

Preferably, the flow rate is determined based on pressure measured at the same location as the wave speed and on pressure measured at a different location. In that embodiment, the generator and two sensors may be used. Alternatively, the flow rate may be determined based on pressure measured at a different location. In that embodiment, the generator and three sensors may be used.

In one embodiment, the pressure of fluid is measured at two locations along a length of the pipe using two sensors, the sensors being positioned on or in the pipe; and the wave speed of the fluid is determined based on the pressure of fluid measured at each respective location.

In one embodiment, the sensors are pressure transducers for measuring the pressure property of the fluid.

Preferably, the sensors are piezoelectric transducers (PZTs) or strain gauges.

Preferably, the sensors are substantially flush with a wall of the pipe.

In a further embodiment, the wave speed is determined by determining a transfer function of the pipe between the two locations based on at least the measured pressure of fluid.

Preferably, the transfer function is a ratio of the measurements from the two locations.

Preferably, the transfer function is a ratio of Fourier transformed measurements from the two locations.

In a further embodiment, the method comprises determining a flow regime of the fluid flowing through the pipe, and the flow rate of the fluid at a flow determination point in the pipe based on at least the determined fluid wave speed and a resistance term R associated with the flow regime.

Preferably, the Reynolds number Re is determined from the following equation:

$$\mathrm{Re} = \frac{DQ}{\upsilon A}$$

where

$u$ = kinematic viscosity,
$Q$ = time-averaged mean discharge,
$A$ = pipe cross-sectional area, and
$D$ = pipe diameter.

Preferably, the flow is laminar when the Reynolds number of the fluid is less than about 2000.

Preferably, the flow is turbulent when the Reynolds number of the fluid is more than about 2000.

Preferably, for a laminar unsteady flow, the weighting function is:

$$W(\tau) = \sum_{i=1}^{6} m_i \tau^{\frac{1}{2}i-1}$$

for $\tau$ less than or equal to 0.02, and

$$W(\tau) = \sum_{i=1}^{5} e^{-n_i \tau}$$

for $\tau$ greater than 0.02
where
$m_i$ = {0.282095, -1.25, 1.057855, 0.9375, 0.396696, -0.351563}, i = 1, ..., 6, and

$$n_i = \{26.3744, 70.8493, 135.0198, 218.9216, 322.5544\}, i = 1, ..., 5.$$

Preferably, for a turbulent unsteady flow, the weighting function is:

$$W(\tau) = \frac{1}{2\sqrt{\pi\tau}} e^{\left(-\frac{1}{C^*}\tau\right)}$$

where $C^*$ = shear decay coefficient.

Preferably, the shear decay coefficient is a function of the Reynolds number Re and is given by:

$$C^* = \frac{7.41}{\text{Re}^\kappa}$$

where
Re = Reynolds number, and

$$\kappa = \log_{10}\left(\frac{14.3}{\text{Re}^{0.05}}\right)$$

In a further embodiment, the method comprises determining a type of pipe through which the fluid flows and the flow rate of the fluid at a flow determination point in the pipe based on at least the determined fluid wave speed and characteristics of the type of pipe.

Preferably, the characteristics of the type of pipe include a characteristic impedance of the pipe $Z_c$ and a propagation constant $\mu$.

Preferably, where the type of pipe is not plastic, the characteristic impedance of the pipe $Z_c$ and the propagation constant $\mu$ are given by:

$$Z_c = \frac{\mu a^2}{j\omega g A},$$

$$\mu = \sqrt{-\frac{\omega^2}{a^2} + \frac{jgA\omega R}{a^2}},$$

where

$$j = \sqrt{-1},$$

$\omega$ = angular frequency,
$g$ = acceleration due to gravity,
$A$ = pipe cross-sectional area,
$R$ = the resistance term of the pipe, and
$a$ = the determined wave speed.

Preferably, where the type of pipe is plastic, viscoelastic effects of pipe wall are taken into account for determining the flow rate.

Preferably, where the type of pipe is plastic, the characteristic impedance of the pipe $Z_c$ and the propagation constant $\mu$ are given by:

$$\mu = \sqrt{j\omega A\left(\frac{g}{a^2} + \frac{2CJ}{1 + j\omega\tau}\right)\left(\frac{j\omega}{gA} + R\right)}$$

$$Z_c = -\sqrt{\frac{j\omega}{gA} + R} \bigg/ \sqrt{j\omega A\left(\frac{g}{a^2} + \frac{2CJ}{1 + j\omega\tau}\right)}$$

where

$$j = \sqrt{-1},$$

$\omega$ = angular frequency,
$g$ = acceleration due to gravity,
$A$ = pipe cross-sectional area,
$R$ = the resistance term of the pipe,
$a$ = the determined wave speed,
$J$ and $\tau$ = parameters of the viscoelastic pipe material,
$C = \rho g \phi D / 2e$ = intermediate constant coefficient
$\phi$ = a pipe constraint coefficient,
$e$ = thickness of pipe-wall, and
$\rho$ = fluid density.

In one embodiment, the method comprises:

determining a first set of signal characteristics relating to a determined flow rate of the fluid between a first pair of sensors,
determining a second set of signal characteristics relating to a determined flow rate of fluid between a second pair of sensors, and
comparing the determined first and second sets of signal characteristics to correct for any errors in the flow rate of the fluid.

Preferably, the first pair of sensors and the second pair of sensors include a common sensor. Alternatively, the sensors of the first pair of sensors are different from the sensors of the second pair of sensors.
Preferably, the determined signal characteristics for the first and second set include phase and magnitude values relating to the flow rate.
Preferably, the determined wave speed is used in the following equations for determining flow rate of fluid at a flow determination point in a pipe with no hydraulic elements:

$$\begin{pmatrix} h_2 \\ q_2 \end{pmatrix} = \begin{bmatrix} p_{a11} & p_{a12} \\ p_{a21} & p_{a22} \end{bmatrix} \begin{pmatrix} h_1 \\ q_1 \end{pmatrix},$$

$$\begin{pmatrix} h_3 \\ q_3 \end{pmatrix} = \begin{bmatrix} p_{b11} & p_{b12} \\ p_{b21} & p_{b22} \end{bmatrix} \begin{pmatrix} h_2 \\ q_2 \end{pmatrix}$$

where

$q_3$ = time-varying flow rate at the flow determination point,
$q_1$ = time-varying flow rate at the location of the first sensor,
$q_2$ = time-varying flow rate at the location of the second sensor,
$h_3$ = dimensionless time-varying pressure head at the flow determination point,
$h_1$ = dimensionless time-varying pressure head measured by a first sensor,
$h_2$ = dimensionless time-varying pressure head measured by a second sensor,
$p_{a11} = cosh(\mu l_a)$,
$p_{a12} = - Z_c sinh(\mu l_a)$,
$p_{b21} = -sinh(\mu l_b)/Z_c$,
$p_{b22} = cosh(\mu l_b)$,
$l_a$ = distance between sensors,
$l_b$ = distance between one of the sensors and the flow determination point,
$Z_c$ = the characteristic impedance of the pipe, and
$\mu$ = the propagation constant,

wherein the characteristic impedance of the pipe $Z_c$ and the propagation constant $\mu$ are functions of the determined wave speed and of the resistance term R.

In one embodiment, the flow rate of the fluid at a flow determination point in the pipe with $n$ number of hydraulic element(s) between the locations at which pressure is measured for the flow rate determination and with m number of hydraulic element(s) between the flow determination point and one of the locations at which pressure is measured for flow rate determination, where $n$ and $m$ are integers, is determined from the following equation:

$$\begin{pmatrix} h_2 \\ q_2 \end{pmatrix} = \begin{bmatrix} p_{a(n+1),11} & p_{a(n+1),12} \\ p_{a(n+1),21} & p_{a(n+1),22} \end{bmatrix} \begin{bmatrix} e_{an,11} & e_{an,12} \\ e_{an,21} & e_{an,22} \end{bmatrix} \begin{bmatrix} p_{an,11} & p_{an,12} \\ p_{an,21} & p_{an,22} \end{bmatrix} \cdots \begin{bmatrix} e_{a1,11} & e_{a1,12} \\ e_{a1,21} & e_{a1,22} \end{bmatrix} \begin{bmatrix} p_{a1,11} & p_{a1,12} \\ p_{a1,21} & p_{a1,22} \end{bmatrix} \begin{pmatrix} h_1 \\ q_1 \end{pmatrix}$$

$$\begin{pmatrix} h_3 \\ q_3 \end{pmatrix} = \begin{bmatrix} p_{b(m+1),11} & p_{b(m+1),12} \\ p_{b(m+1),21} & p_{b(m+1),22} \end{bmatrix} \begin{bmatrix} e_{bm,11} & e_{bm,12} \\ e_{bm,21} & e_{bm,22} \end{bmatrix} \begin{bmatrix} p_{bm,11} & p_{bm,12} \\ p_{bm,21} & p_{bm,22} \end{bmatrix} \cdots \begin{bmatrix} e_{b1,11} & e_{b1,12} \\ e_{b1,21} & e_{b1,22} \end{bmatrix} \begin{bmatrix} p_{b1,11} & p_{b1,12} \\ p_{b1,21} & p_{b1,22} \end{bmatrix} \begin{pmatrix} h_2 \\ q_2 \end{pmatrix}$$

where

$q_3$ = time-varying flow rate at the flow determination point,
$q_1$ = time-varying flow rate at the location of the first sensor,
$q_2$ = time-varying flow rate at the location of the second sensor,
$h_3$ = dimensionless time-varying pressure head at the flow determination point,
$h_1$ = dimensionless time-varying pressure head measured by a first sensor,
$h_2$ = dimensionless time-varying pressure head measured by a second sensor,
$p_{x,11} = cosh(\mu l_x)$,
$p_{x,12} = - Z_c sinh(\mu l_x)$,
$p_{x,21} = - sinh(\mu l_x)/Z_c$,
$p_{x,22} = cosh(\mu l_x)$,

$$\begin{bmatrix} e_{x,11} & e_{x,12} \\ e_{x,21} & e_{x,22} \end{bmatrix}$$

is the matrix expression E for the hydraulic element at x,
where $x$ denotes pipe sections $a_1$, $a_2$, ..., $a_n$, and $b_1$, $b_2$, ..., $b_m$,
$l_x$ = length of pipe section x,
$Z_c$ = the characteristic impedance of the pipe, and
$\mu$ = the propagation constant.

Preferably, the flow rate of the fluid at a flow determination point in the pipe with one hydraulic element between the locations at which the pressure is measured for the flow rate determination and with one hydraulic element between the flow determination point and one of the locations at which the pressure is measured for flow determination is determined from the following equation:

$$\begin{pmatrix} h_2 \\ q_2 \end{pmatrix} = \begin{bmatrix} p_{a2,11} & p_{a2,12} \\ p_{a2,21} & p_{a2,22} \end{bmatrix} \begin{bmatrix} e_{a11} & e_{a12} \\ e_{a21} & e_{a22} \end{bmatrix} \begin{bmatrix} p_{a1,11} & p_{a1,12} \\ p_{a1,21} & p_{a1,22} \end{bmatrix} \begin{pmatrix} h_1 \\ q_1 \end{pmatrix}$$

$$\begin{pmatrix} h_3 \\ q_3 \end{pmatrix} = \begin{bmatrix} p_{b2,11} & p_{b2,12} \\ p_{b2,21} & p_{b2,22} \end{bmatrix} \begin{bmatrix} e_{b11} & e_{b12} \\ e_{b21} & e_{b22} \end{bmatrix} \begin{bmatrix} p_{b1,11} & p_{b1,12} \\ p_{b1,21} & p_{b1,22} \end{bmatrix} \begin{pmatrix} h_2 \\ q_2 \end{pmatrix}$$

Preferably, the flow rate of the fluid at a flow determination point in the pipe with two hydraulic elements between the locations at which the pressure is measured for the flow rate determination and with one hydraulic element between the flow determination point and one of the locations at which the pressure is measured for flow determination is determined from the following equation:

$$\begin{pmatrix} h_2 \\ q_2 \end{pmatrix} = \begin{bmatrix} p_{a3,11} & p_{a3,12} \\ p_{a3,21} & p_{a3,22} \end{bmatrix} \begin{bmatrix} e_{a2,11} & e_{a2,12} \\ e_{a2,21} & e_{a2,22} \end{bmatrix} \begin{bmatrix} p_{a2,11} & p_{a2,12} \\ p_{a2,21} & p_{a2,22} \end{bmatrix} \begin{bmatrix} e_{a1,11} & e_{a1,12} \\ e_{a1,21} & e_{a1,22} \end{bmatrix} \begin{bmatrix} p_{a1,11} & p_{a1,12} \\ p_{a1,21} & p_{a1,22} \end{bmatrix} \begin{pmatrix} h_1 \\ q_1 \end{pmatrix}$$

$$\begin{pmatrix} h_3 \\ q_3 \end{pmatrix} = \begin{bmatrix} p_{b2,11} & p_{b2,12} \\ p_{b2,21} & p_{b2,22} \end{bmatrix} \begin{bmatrix} e_{b11} & e_{b12} \\ e_{b21} & e_{b22} \end{bmatrix} \begin{bmatrix} p_{b1,11} & p_{b1,12} \\ p_{b1,21} & p_{b1,22} \end{bmatrix} \begin{pmatrix} h_2 \\ q_2 \end{pmatrix}$$

Preferably, the flow rate at the flow determination point can be determined from the following equation:

$$q_3 = \left( \frac{u_{b22}}{u_{a12}} \right) \Delta h + \left( \frac{u_{b21} u_{a12}}{u_{a12}} + \frac{u_{b22} u_{a11}}{u_{a12}} - \frac{u_{b22}}{u_{a12}} \right) h_2$$

where

$$u_a = \begin{bmatrix} p_{a2,11} & p_{a2,12} \\ p_{a2,21} & p_{a2,22} \end{bmatrix} \begin{bmatrix} e_{a11} & e_{a12} \\ e_{a21} & e_{a22} \end{bmatrix} \begin{bmatrix} p_{a1,11} & p_{a1,12} \\ p_{a1,21} & p_{a1,22} \end{bmatrix}$$

$$u_b = \begin{bmatrix} p_{b2,11} & p_{b2,12} \\ p_{b2,21} & p_{b2,22} \end{bmatrix} \begin{bmatrix} e_{b11} & e_{b12} \\ e_{b21} & e_{b22} \end{bmatrix} \begin{bmatrix} p_{b1,11} & p_{b1,12} \\ p_{b1,21} & p_{b1,22} \end{bmatrix}$$

$$u_{a11} = \cosh(\mu_{a2}l_{a2})\cosh(\mu_{a1}l_{a1}) + \left( \left( -\frac{2\Delta H_0}{Q_0} \right) \cosh(\mu_{a2}l_{a2}) - Z_{ca2} \sinh(\mu_{a2}l_{a2}) \right) \left( -\frac{1}{Z_{ca1}} \sinh(\mu_{a1}l_{a1}) \right)$$

$$u_{a12} = \cosh(\mu_{a2}l_{a2})\left( -Z_{ca1} \sinh(\mu_{a1}l_{a1}) \right) + \left( \left( -\frac{2\Delta H_0}{Q_0} \right) \cosh(\mu_{a2}l_{a2}) - Z_{ca2} \sinh(\mu_{a2}l_{a2}) \right) \cosh(\mu_{a1}l_{a1})$$

$$u_{b21} = \left( -\frac{1}{Z_{cb2}} \sinh(\mu_{b2}l_{b2}) \right) \cosh(\mu_{b1}l_{b1}) + \left( \left( \frac{2\Delta H_0}{Z_{cb2}Q_0} \right) \sinh(\mu_{b2}l_{b2}) + \cosh(\mu_{b2}l_{b2}) \right) \left( -\frac{1}{Z_{cb1}} \sinh(\mu_{b1}l_{b1}) \right)$$

$$u_{b22} = \left( -\frac{1}{Z_{cb2}} \sinh(\mu_{b2}l_{b2}) \right) \left( -Z_{cb1} \sinh(\mu_{b1}l_{b1}) \right) + \left( \left( \frac{2\Delta H_0}{Z_{cb2}Q_0} \right) \sinh(\mu_{b2}l_{b2}) + \cosh(\mu_{b2}l_{b2}) \right) \cosh(\mu_{b1}l_{b1})$$

$$\Delta h = h_2 - h_1,$$

$h_3$ = dimensionless time-varying pressure head at the flow determination point,
$h_1$ = dimensionless time-varying pressure head measured by a first sensor,
$h_2$ = dimensionless time-varying pressure head measured by a second sensor,
$l_{a1}$ = distance between a first transducer and a first hydraulic element,
$l_{a2}$ = distance between a second transducer and the first hydraulic element,
$l_{b1}$ = distance between the second transducer and a second hydraulic element,

$l_{b2}$ = distance between the second hydraulic element and the flow determination point,
$Z_{cx}$ = the characteristic impedance for pipe section x,
$\mu_x$ = the propagation constant for pipe section x,
where x denotes pipe sections $a_1$, $a_2$, and $b_1$, $b_2$,
$Q_0$ = time-averaged mean discharge,
$H_0$ = time-averaged mean pressure head,
$q_3$ = time-varying flow rate at the flow determination point.

Preferably, the values of e of the matrix expression E for the hydraulic element depend on the type of the hydraulic element of interest.

Preferably, for a flow loss hydraulic element, the matrix E is given by:

$$E = \begin{bmatrix} e_{11} & e_{12} \\ e_{21} & e_{22} \end{bmatrix} = \begin{bmatrix} 1 & 0 \\ \Delta loss & 1 \end{bmatrix}$$

where $\Delta loss$ is a variable relating to the magnitude of flow loss. Preferably, flow loss is a function of the mean head and flow values.

Preferably, for a head loss hydraulic element, the matrix E is given by

$$E = \begin{bmatrix} 1 & \Delta loss \\ 0 & 1 \end{bmatrix}$$

where $\Delta loss$ is a variable relating to the magnitude of head loss. Preferably, head loss is a function of the mean head and flow values.

In accordance with another aspect of the present invention, there is provided an apparatus for determining a flow rate of a fluid flowing in a pipe comprising:

a generator for generating a transient fluid wave; at least two sensors for positioning on or in the pipe to measure a pressure of the fluid wave at at least two locations in the pipe; and a processor coupled to the sensors, the processor being adapted to determine a fluid wave speed based on the measured pressure of the fluid wave at at least two locations in the pipe, the processor further being adapted to determine the flow rate of fluid based on the determined wave speed, on measured pressures of fluid at two locations in the pipe, and on a determined flow regime of fluid, wherein the flow regime of fluid comprises either a laminar or turbulent flow and comprises either a steady or unsteady flow,
wherein the processor is adapted to determine whether flow regime of fluid in the pipe comprises either a laminar or turbulent flow and comprises either a steady or unsteady flow based on at least a Reynolds number of the fluid, and wherein the processor is adapted to determine the flow rate of fluid in the pipe further based on a resistance term R associated with the flow regime, which is selected

a) if it is determined that the flow regime is a laminar steady flow to fulfil the following equation (1):

$$(1) \quad R_S = \frac{32v}{gAD^2}$$

where

$g$ = acceleration due to gravity,
u = kinematic viscosity,
$A$ = pipe cross-sectional area, and
$D$ = pipe diameter;

b) if it is determined that the flow regime is a turbulent steady flow to fulfil the following equation (2):

$$(2) \quad R_S = \frac{fQ}{gDA^2}$$

where

g = acceleration due to gravity,
f = friction factor,
Q = time-averaged mean discharge,
A = pipe cross-sectional area, and
D = pipe diameter;

c) if it is determined that the laminar or turbulent flow regime is an unsteady flow regime, an additional resistance term Ru defined by the following equation (3) is added to the resistance term Rs provided by equation (1) or (2):

$$(3) \quad R_U = \frac{4j\omega}{gA} \int_0^\infty e^{\left(-\frac{j\omega D^2}{4\nu}\tau\right)} W(t)d\tau$$

where

u = kinematic viscosity,
g = acceleration due to gravity,
A = pipe cross-sectional area,
D = pipe diameter,

$$j = \sqrt{-1} \,,$$

$\omega$ = angular frequency,
W = weighting function, and

$\tau$ = dimensionless time ($= \frac{4\nu}{D^2}(t - t^*)$ where $t^*$ is the time used in the convolution integral).

In one embodiment, the apparatus is arranged to adjust the flow rate of the fluid through the pipe if the determined flow rate substantially differs from an expected flow rate.

In one embodiment, the processor is adapted to determine the wave speed based on the pressure measured by sensors at a first pair of locations in the pipe, and the processor is adapted to determine the flow rate based on the pressure measured at a second pair of locations in the pipe. Preferably, the locations of the first pair are the same as the locations of the second pair. In that embodiment, the apparatus may comprise two sensors. Alternatively, the locations of the first pair may be different from the locations of the second pair. In that embodiment, the apparatus may comprise four sensors. Alternatively, only one location of the first pair and the second pair are the same, and the apparatus may comprise three sensors.

Preferably, the flow rate is determined based on pressure measured by a first sensor and on pressure measured by a second sensor at a different location. In that embodiment, the apparatus may comprise the generator and two sensors. Alternatively, the flow rate may be determined based on pressure measured by different sensors from the first sensor. In that embodiment, the apparatus may comprise the generator and three sensors.

In one embodiment, the apparatus comprises two sensors coupled to the processor for measuring the pressure of the fluid at two locations along a length of the pipe, and the wave speed of the fluid is determined based on the pressure of fluid measured at each respective location.

In one embodiment, the sensors are pressure transducers.

Preferably, the sensors are piezoelectric transducers (PZTs) or strain gauges.

Preferably, the sensors are substantially flush with a wall of the pipe.

In a further embodiment, the processor is adapted to determine the wave speed by determining a transfer function of the pipe between the two locations based on at least the measured pressure of fluid.

Preferably, the transfer function is a ratio of the measurements from the two locations.

Preferably, the transfer function is a ratio of Fourier transformed measurements from the two locations.

Preferably, the processor is adapted to determine the Reynolds number Re from the following equation:

$$\mathrm{Re} = \frac{DQ}{vA}$$

where

u = kinematic viscosity,
Q = time-averaged mean discharge,
$A$ = pipe cross-sectional area, and
$D$ = pipe diameter.

Preferably, the flow is laminar when the Reynolds number Re of the fluid is less than about 2000.

Preferably, the flow is turbulent when the Reynolds number Re of the fluid is more than about 2000.

Preferably, for a laminar unsteady flow, the weighting function is:

$$W(\tau) = \sum_{i=1}^{6} m_i \tau^{\frac{1}{2}i-1}$$

for $\tau$ less than or equal to 0.02, and

$$W(\tau) = \sum_{i=1}^{5} e^{-n_i \tau}$$

for $\tau$ greater than 0.02
where

$m_i$ = {0.282095, -1.25, 1.057855, 0.9375, 0.396696, -0.351563}, i = 1, ..., 6 and
$n_i$ = {26.3744, 70.8493, 135.0198, 218.9216, 322.5544}, i = 1, ..., 5.

Preferably, for a turbulent unsteady flow, the weighting function is:

$$W(\tau) = \frac{1}{2\sqrt{\pi\tau}} e^{\left(-\frac{1}{C*}\tau\right)}$$

where
$C*$ = shear decay coefficient.

Preferably, the shear decay coefficient is a function of the Reynolds number and is given by:

$$C* = \frac{7.41}{\mathrm{Re}^{\kappa}}$$

where
Re = Reynolds number, and

$$\kappa = \log_{10}\left(\frac{14.3}{\mathrm{Re}^{0.05}}\right).$$

In a further embodiment, the processor is adapted to determine the flow rate of the fluid at a flow determination point in the pipe based on at least the determined fluid wave speed taking into account the characteristics of the pipe. Preferably, the characteristics of the pipe include a characteristic impedance of the pipe $Z_c$ and a propagation constant $\mu$. Preferably, where the pipe is not plastic, the processor is adapted to calculate the characteristic impedance of the pipe $Z_c$, and the propagation constant $\mu$ using the following equations:

$$Z_c = \frac{\mu a^2}{j \omega g A},$$

$$\mu = \sqrt{-\frac{\omega^2}{a^2} + \frac{jgA\omega R}{a^2}},$$

where

$$j = \sqrt{-1},$$

$\omega$ = angular frequency,
$g$ = acceleration due to gravity,
$A$ = pipe cross-sectional area,
$R$ = the resistance term of the pipe, and
$a$ = the determined wave speed.

Preferably, where the type of pipe is plastic, the processor is adapted to take the viscoelastic effects of pipe wall into account for determining the flow rate.

Preferably, where the type of pipe is plastic, the processor is adapted to calculate the characteristic impedance of the pipe $Z_c$ and the propagation constant $\mu$ using the following equations:

$$\mu = \sqrt{j\omega A \left( \frac{g}{a^2} + \frac{2CJ}{1 + j\omega\tau} \right) \left( \frac{j\omega}{gA} + R \right)}$$

$$Z_c = -\sqrt{\frac{j\omega}{gA} + R} \bigg/ \sqrt{j\omega A \left( \frac{g}{a^2} + \frac{2CJ}{1 + j\omega\tau} \right)}$$

where

$$j = \sqrt{-1},$$

$\omega$ = angular frequency,
$g$ = acceleration due to gravity,
$A$ = pipe cross-sectional area,
$R$ = the resistance term of the pipe,
$a$ = the determined wave speed,
$J$ and $\tau$ = parameters of the viscoelastic pipe material,
$C = \rho g \phi D / 2e$ = intermediate constant coefficient,
$\phi$ = a pipe constraint coefficient,
$e$ = thickness of pipe-wall, and
$\rho$ = fluid density.

In one embodiment, the processor is further configured to:

determine a first set of signal characteristics relating to a determined flow rate of the fluid between a first pair of sensors,

determine a second set of signal characteristics relating to a determined flow rate of fluid between a second pair of sensors, and

compare the determined first and second sets of signal characteristics to correct for any errors in the flow rate of the fluid.

Preferably, the first pair of sensors and the second pair of sensors include a common sensor. Alternatively, the sensors of the first pair of sensors are different from the sensors of the second pair of sensors.

Preferably, the determined signal characteristics for the first and second set include phase and magnitude values relating to the flow rate.

Preferably, the processor is adapted to use the determined wave speed in the following equations for determining flow rate of fluid at a flow determination point in a pipe with no hydraulic elements:

$$\begin{pmatrix} h_2 \\ q_2 \end{pmatrix} = \begin{bmatrix} p_{a11} & p_{a12} \\ p_{a21} & p_{a22} \end{bmatrix} \begin{pmatrix} h_1 \\ q_1 \end{pmatrix},$$

$$\begin{pmatrix} h_3 \\ q_3 \end{pmatrix} = \begin{bmatrix} p_{b11} & p_{b12} \\ p_{b21} & p_{b22} \end{bmatrix} \begin{pmatrix} h_2 \\ q_2 \end{pmatrix}$$

where

$q_3$ = time-varying flow rate at the flow determination point,
$q_1$ = time-varying flow rate at the location of the first sensor,
$q_2$ = time-varying flow rate at the location of the second sensor,
$h_3$ = dimensionless time-varying pressure head at a flow determination point,
$h_1$ = dimensionless time-varying pressure head measured by a first sensor,
$h_2$ = dimensionless time-varying pressure head measured by a second sensor,
$p_{a11} = cosh(\mu l_a)$,
$p_{a12} = - Z_c sinh(\mu l_a)$,
$p_{b21} = - sinh(\mu l_b)/Z_c$,
$p_{b22} = cosh(\mu l_b)$,
$l_a$ = distance between sensors,
$l_b$ = distance between one of the sensors and the flow determination point, and
$Z_c$ = the characteristic impedance of the pipe, and
$\mu$ = the propagation constant.

In one embodiment, the processor is adapted to determine the flow rate of the fluid at a flow determination point in the pipe with $n$ number of hydraulic element(s) between the locations at which pressure is measured for the flow rate determination and with $m$ number of hydraulic element(s) between the flow determination point and one of the locations at which pressure is measured for flow rate determination, where $n$ and $m$ are integers, is determined from the following equation:

$$\begin{pmatrix} h_2 \\ q_2 \end{pmatrix} = \begin{bmatrix} p_{a(n+1),11} & p_{a(n+1),12} \\ p_{a(n+1),21} & p_{a(n+1),22} \end{bmatrix} \begin{bmatrix} e_{an,11} & e_{an,12} \\ e_{an,21} & e_{an,22} \end{bmatrix} \begin{bmatrix} p_{an,11} & p_{an,12} \\ p_{an,21} & p_{an,22} \end{bmatrix} \cdots \begin{bmatrix} e_{a1,11} & e_{a1,12} \\ e_{a1,21} & e_{a1,22} \end{bmatrix} \begin{bmatrix} p_{a1,11} & p_{a1,12} \\ p_{a1,21} & p_{a1,22} \end{bmatrix} \begin{pmatrix} h_1 \\ q_1 \end{pmatrix}$$

$$\begin{pmatrix} h_3 \\ q_3 \end{pmatrix} = \begin{bmatrix} p_{b(m+1),11} & p_{b(m+1),12} \\ p_{b(m+1),21} & p_{b(m+1),22} \end{bmatrix} \begin{bmatrix} e_{bm,11} & e_{bm,12} \\ e_{bm,21} & e_{bm,22} \end{bmatrix} \begin{bmatrix} p_{bm,11} & p_{bm,12} \\ p_{bm,21} & p_{bm,22} \end{bmatrix} \cdots \begin{bmatrix} e_{b1,11} & e_{b1,12} \\ e_{b1,21} & e_{b1,22} \end{bmatrix} \begin{bmatrix} p_{b1,11} & p_{b1,12} \\ p_{b1,21} & p_{b1,22} \end{bmatrix} \begin{pmatrix} h_2 \\ q_2 \end{pmatrix}$$

where

$q_3$ = time-varying flow rate at the flow determination point,
$q_1$ = time-varying flow rate at the location of the first sensor,
$q_2$ = time-varying flow rate at the location of the second sensor,
$h_3$ = dimensionless time-varying pressure head at the flow determination point,
$h_1$ = dimensionless time-varying pressure head measured by a first sensor,
$h_2$ = dimensionless time-varying pressure head measured by a second sensor,
$p_{x,11} = cosh(\mu l_x)$,
$p_{x,12} = - Z_c sinh(\mu l_x)$,
$p_{x,21} = - sinh(\mu l_x)/Z_c$,
$p_{x,22} = cosh(\mu l_x)$,

$$\begin{bmatrix} e_{x,11} & e_{x,12} \\ e_{x,21} & e_{x,22} \end{bmatrix}$$

is the matrix expression E for the hydraulic element at $x$,
where $x$ denotes pipe sections $a_1, a_2, ..., a_n$, and $b_1, b_2, ..., b_m$,
$l_x$ = length of pipe section $x$,
$Z_c$ = the characteristic impedance of the pipe, and
$\mu$ = the propagation constant.

Preferably, the processor is adapted to determine the flow rate of the fluid at a flow determination point in the pipe with one hydraulic element between the locations at which the pressure is measured for the flow rate determination and with one hydraulic element between the flow determination point and one of the locations at which the pressure is measured for flow determination from the following equation:

$$\begin{pmatrix} h_2 \\ q_2 \end{pmatrix} = \begin{bmatrix} p_{a2,11} & p_{a2,12} \\ p_{a2,21} & p_{a2,22} \end{bmatrix} \begin{bmatrix} e_{a11} & e_{a12} \\ e_{a21} & e_{a22} \end{bmatrix} \begin{bmatrix} p_{a1,11} & p_{a1,12} \\ p_{a1,21} & p_{a1,22} \end{bmatrix} \begin{pmatrix} h_1 \\ q_1 \end{pmatrix}$$

$$\begin{pmatrix} h_3 \\ q_3 \end{pmatrix} = \begin{bmatrix} p_{b2,11} & p_{b2,12} \\ p_{b2,21} & p_{b2,22} \end{bmatrix} \begin{bmatrix} e_{b11} & e_{b12} \\ e_{b21} & e_{b22} \end{bmatrix} \begin{bmatrix} p_{b1,11} & p_{b1,12} \\ p_{b1,21} & p_{b1,22} \end{bmatrix} \begin{pmatrix} h_2 \\ q_2 \end{pmatrix}$$

Preferably, the processor is adapted to determine the flow rate of the fluid at a flow determination point in the pipe with two hydraulic elements between the locations at which the pressure is measured for the flow rate determination and with one hydraulic element between the flow determination point and one of the locations at which the pressure is measured for flow determination from the following equation:

$$\begin{pmatrix} h_2 \\ q_2 \end{pmatrix} = \begin{bmatrix} p_{a3,11} & p_{a3,12} \\ p_{a3,21} & p_{a3,22} \end{bmatrix} \begin{bmatrix} e_{a2,11} & e_{a2,12} \\ e_{a2,21} & e_{a2,22} \end{bmatrix} \begin{bmatrix} p_{a2,11} & p_{a2,12} \\ p_{a2,21} & p_{a2,22} \end{bmatrix} \begin{bmatrix} e_{a1,11} & e_{a1,12} \\ e_{a1,21} & e_{a1,22} \end{bmatrix} \begin{bmatrix} p_{a1,11} & p_{a1,12} \\ p_{a1,21} & p_{a1,22} \end{bmatrix} \begin{pmatrix} h_1 \\ q_1 \end{pmatrix}$$

$$\begin{pmatrix} h_3 \\ q_3 \end{pmatrix} = \begin{bmatrix} p_{b2,11} & p_{b2,12} \\ p_{b2,21} & p_{b2,22} \end{bmatrix} \begin{bmatrix} e_{b11} & e_{b12} \\ e_{b21} & e_{b22} \end{bmatrix} \begin{bmatrix} p_{b1,11} & p_{b1,12} \\ p_{b1,21} & p_{b1,22} \end{bmatrix} \begin{pmatrix} h_2 \\ q_2 \end{pmatrix}$$

Preferably, the processor is adapted to determine the flow rate at the flow determination point using the following equation:

$$q_3 = \left(\frac{u_{b22}}{u_{a12}}\right)\Delta h + \left(\frac{u_{b21}u_{a12}}{u_{a12}} + \frac{u_{b22}u_{a11}}{u_{a12}} - \frac{u_{b22}}{u_{a12}}\right)h_2$$

where

$$u_a = \begin{bmatrix} P_{a2,11} & P_{a2,12} \\ P_{a2,21} & P_{a2,22} \end{bmatrix}\begin{bmatrix} e_{a11} & e_{a12} \\ e_{a21} & e_{a22} \end{bmatrix}\begin{bmatrix} P_{a1,11} & P_{a1,12} \\ P_{a1,21} & P_{a1,22} \end{bmatrix}$$

$$u_b = \begin{bmatrix} P_{b2,11} & P_{b2,12} \\ P_{b2,21} & P_{b2,22} \end{bmatrix}\begin{bmatrix} e_{b11} & e_{b12} \\ e_{b21} & e_{b22} \end{bmatrix}\begin{bmatrix} P_{b1,11} & P_{b1,12} \\ P_{b1,21} & P_{b1,22} \end{bmatrix}$$

$$u_{a11} = \cosh(\mu_{a2}l_{a2})\cosh(\mu_{a1}l_{a1}) + \left(\left(-\frac{2\Delta H_0}{Q_0}\right)\cosh(\mu_{a2}l_{a2}) - Z_{ca2}\sinh(\mu_{a2}l_{a2})\right)\left(-\frac{1}{Z_{ca1}}\sinh(\mu_{a1}l_{a1})\right)$$

$$u_{a12} = \cosh(\mu_{a2}l_{a2})\left(-Z_{ca1}\sinh(\mu_{a1}l_{a1})\right) + \left(\left(-\frac{2\Delta H_0}{Q_0}\right)\cosh(\mu_{a2}l_{a2}) - Z_{ca2}\sinh(\mu_{a2}l_{a2})\right)\cosh(\mu_{a1}l_{a1})$$

$$u_{b21} = \left(-\frac{1}{Z_{cb2}}\sinh(\mu_{b2}l_{b2})\right)\cosh(\mu_{b1}l_{b1}) + \left(\left(\frac{2\Delta H_0}{Z_{cb2}Q_0}\right)\sinh(\mu_{b2}l_{b2}) + \cosh(\mu_{b2}l_{b2})\right)\left(-\frac{1}{Z_{cb1}}\sinh(\mu_{b1}l_{b1})\right)$$

$$u_{b22} = \left(-\frac{1}{Z_{cb2}}\sinh(\mu_{b2}l_{b2})\right)\left(-Z_{cb1}\sinh(\mu_{b1}l_{b1})\right) + \left(\left(\frac{2\Delta H_0}{Z_{cb2}Q_0}\right)\sinh(\mu_{b2}l_{b2}) + \cosh(\mu_{b2}l_{b2})\right)\cosh(\mu_{b1}l_{b1})$$

$$\Delta h = h_2 - h_1,$$

$h_3$ = dimensionless time-varying pressure head at a flow determination point,
$h_1$ = dimensionless time-varying pressure head measured by a first sensor,
$h_2$ = dimensionless time-varying pressure head measured by a second sensor,
$l_{a1}$ = distance between a first transducer and a first hydraulic element,
$l_{a2}$ = distance between a second transducer and the first hydraulic element,
$l_{b1}$ = distance between the second transducer and a second hydraulic element,
$l_{b2}$ = distance between the second hydraulic element and the location at which flow rate is to be determined,
$Z_{cx}$ = the characteristic impedance for pipe section **x**,
$\mu_x$ = the propagation constant for pipe section **x**,
where $x$ denotes pipe sections $a_1$, $a_2$, and $b_1$, $b_2$,
$Qo$ = time-averaged mean discharge,
$Ho$ = time-averaged mean pressure head,
$q_3$ = time-varying flow rate at the flow determination point.

Preferably, the values of e of the matrix expression E for the hydraulic element depend on the type of the hydraulic element of interest.
Preferably, for a flow loss hydraulic element, the matrix E is given by:

$$E = \begin{bmatrix} e_{11} & e_{12} \\ e_{21} & e_{22} \end{bmatrix} = \begin{bmatrix} 1 & 0 \\ \Delta loss & 1 \end{bmatrix}$$

where $\Delta loss$ is a variable relating to the magnitude of flow loss. Preferably, flow loss is a function of the mean head and flow values.

Preferably, for a head loss hydraulic element, the matrix E is given by

$$E = \begin{bmatrix} 1 & \Delta loss \\ 0 & 1 \end{bmatrix}$$

where $\Delta loss$ is a variable related to the magnitude of head loss. Preferably, head loss is a function of the mean head and flow values.

To those skilled in the art to which the invention relates, many changes in construction and widely differing embodiments of the applications of the invention will suggest themselves without departing from the scope of the invention as defined in the appended claims. Where specific integers are mentioned herein which have known equivalents in the art to which this invention relates, such known equivalents are deemed to be incorporated herein as if individually set forth.

The invention consists in the foregoing and also envisages constructions of which the following gives examples only.

## BRIEF DESCRIPTION OF THE DRAWINGS

The present invention will now be described by way of non-limiting example only and with reference to the accompanying drawings in which:

Figure 1 shows a setup for measuring flow rate of fluid in a pipe;
Figure 2 shows a flowchart for measuring flow rate of fluid in a pipe according to the prior art;
Figure 3 shows a setup similar to Figure 1, but showing exemplary hydraulic elements or devices in the pipeline;
Figure 4 shows a flowchart of a flow determination model according to an embodiment of the present invention;
Figure 5 shows a block diagram for the system identification;
Figure 6 shows a flowchart for determining the wave speed according to an embodiment of the present invention;
Figure 7 shows a flowchart for the data selection process according to an embodiment of the present invention;
Figure 8 shows graph of the pressure measured at two points in the system;
Figure 9 shows a flowchart for determining the resistance (or friction) term;
Figure 10 shows the construction of an overall matrix for a pipe system where hydraulic devices are present;
Figure 11 shows a layout of a pipeline system according to an embodiment of the present invention;
Figure 12a shows the transfer function for continuous input and output signals;
Figure 12b shows the transfer function for discrete input and output signals;
Figure 13a shows a response of the predicted flow for a system using the Washio model;
Figure 13b shows a response of the predicted flow for the system of an embodiment the present invention;
Figure 14 shows a schematic of an experimental setup;
Figure 15 shows a configuration of the transient generator and transducers of the experimental setup of Figure 14;
Figure 16a shows the input signal used in the experimental setup of Figure 14;
Figure 16b shows the predicted flow response obtained from the experimental setup of Figure 14;
Figure 17 shows a flowchart of a flow determination model according to an alternative embodiment of the present invention;
Figure 18 shows a flowchart for the correction procedure of a preferred embodiment of the present invention;
Figure 19 shows a block diagram of the processing device according to an embodiment of the present invention;
Figures 20a-d show the predicted and actual flow pulses in the time domain;
Figure 21 shows the predicted flow response in various base flow conditions;
Figure 22a shows the predicted flow response with incorrect pipe diameter;
Figure 22b shows the predicted flow response with incorrect transducer spacing;
Figure 23a shows the recurrence period of noise;
Figure 23b shows the noise profiles of different estimated travel times.

**DETAILED DESCRIPTION OF PREFERRED EMBODIMENTS**

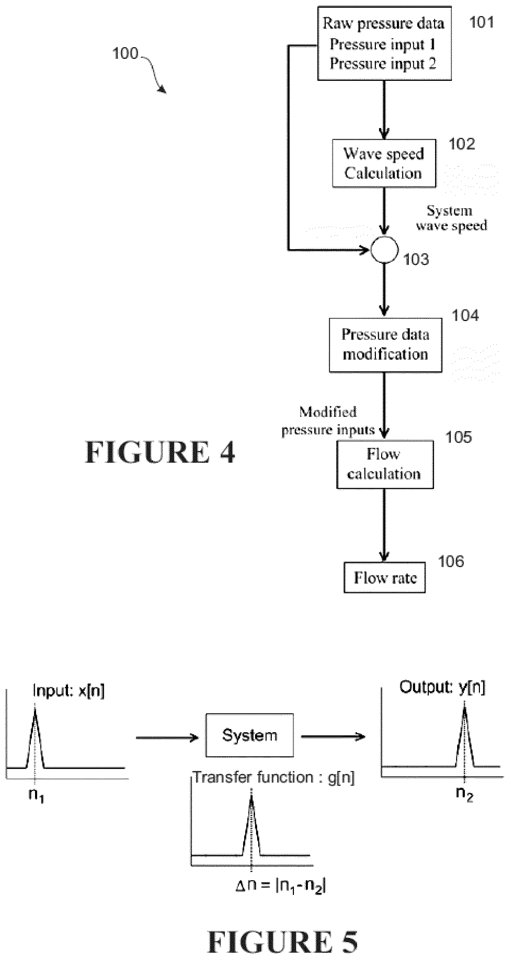

A flow rate determination model 100 of an embodiment of the present invention and its sequence of operations is shown in a flow chart in Figure 4. The model could be applied to the pipe system 500 shown in Figure 3 for example. The model 100 consists of a set of algorithms to overcome problems of the prior art discussed in the background section. In the developed model 100, a property of fluid namely pressure data, measured from two pressure transducers 501, 502 (in block 101) is used to obtain the system wave speed of the fluid flowing through the pipe 510 (in block 102). The obtained wave speed then goes through another algorithm (block 103) along with the raw pressure data. This algorithm modifies (in block 104) the raw pressure data to its appropriate form to ensure the accuracy of the predicted flow response. The outputs from this algorithm become the inputs for the flow calculation (in block 105) which output the flow rate (block 106). The present invention further provides a model relating the pressure and flow rate which can cater for different flow regimes (particularly steady and unsteady laminar and turbulent flows), the presence of hydraulic devices in the pipe, and the type of pipe that is used.

A pressure of the fluid is measured 101 using a sensor, such as a piezoelectric transducer (PZT) or a strain gauge. Two spaced apart sensors 501, 502 may be used to measure pressure at two points along a length of the pipe 510. The sensors 501, 502 for measuring the pressure of the fluid are positioned to be substantially flush with a wall of the pipe 510 to provide minimal or negligible obstruction to the flow of fluid through the pipe 510.

In a preferred embodiment, the method will be implemented by a processor that is configured to or adapted to perform the steps of the method including applying the algorithms. The processor may be integral with, or coupled to, the sensor(s). An embodiment of the processor will be discussed in further detail below.

**Determining wave speed**

Having recorded the pressure parameter of the fluid at two points in the system 500, the next step in the flow rate prediction process is the determination of the system wave speed (block 102). The developed wave speed estimation method is based on a system identification theory which is briefly described herein.

System identification is a way to model systems from experimental data where a system is any process that produces an output signal in response to an input signal. The characteristic of the system is also known as its transfer function and it describes the relationship between the input and output signals. A signal conveys information about the system it goes through. The input and output signals are measured to extract the transfer function of the given system.

There are many ways to determine the system transfer function. Available methods are either parametric or nonparametric and these methods exist in both the time and frequency domains. There are methods for both linear and nonlinear systems and in the current description, the system under consideration is supposed to be linear. Such an assumption is valid providing the signal size is sufficiently small. The frequency-domain based, nonparametric technique is used here to determine the transfer function of a pipeline system and hence the system wave speed.

A general representation of a linear system in the frequency domain is given by:

$$Y(\omega) = G(\omega).X(\omega) \tag{2}$$

where $X$ and $Y$ are the Fourier transformed input and output signals respectively, and $G$ is the transfer function describing the relation between the input $X$ and the output $Y$ at each frequency $\omega$. Rearranging Equation 2 yields:

$$G(\omega) = \frac{Y(\omega)}{X(\omega)} \tag{3}$$

Equation 3 shows that the transfer function of the system is a ratio of the output signal to the input signal at each frequency.

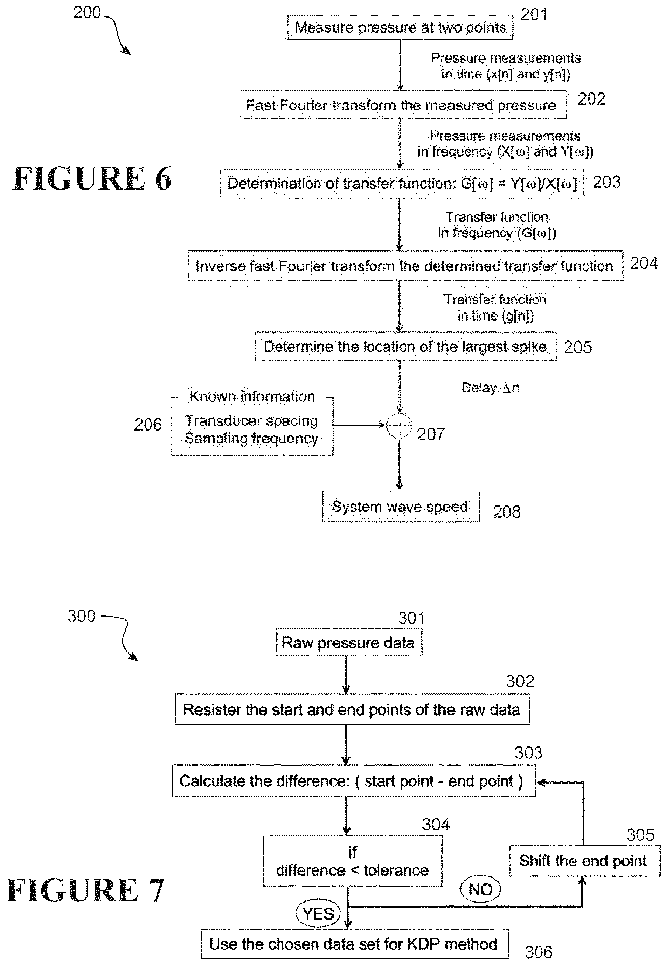

Figures 5 and 6 show how the system wave speed can be obtained from the determined transfer function. Consider a pulse signal going in and out of a system. Assume the input and output signals $x[n]$ and $y[n]$ are detected at $n_1$ and $n_2$ respectively. These signals $x[n]$ and $y[n]$ are obtained by measuring the pressure at two points in the system (step 201). The input and output signals $x[n]$ and $y[n]$ are transformed into the frequency domain to produce the corresponding Fourier transformed signals $X[\omega]$ and $Y[\omega]$ (step 202). The Fast Fourier transform (FFT) is used to transform the signals $x[n]$ and $y[n]$ from the time domain to the frequency domain. By using Equation 3 on the transformed input and output signals $X[\omega]$ and $Y[\omega]$, one obtains the transfer function $G[\omega]$ of the given system in the frequency domain. The time-domain equivalent $g[n]$ of this transfer function $G[\omega]$ can then be obtained by performing an inverse Fourier transform on the transfer function (step 204). The resultant transfer function g[n] contains a spike whose position corresponds to the delay $\Delta n$ between the input and output signals $x[n]$ and $y[n]$. The location of this spike is determined in step 205 to determine the delay $\Delta n$. Using this delay $\Delta n$ (from 205) in combination 207 with the known information 206 from the system (such as the known distance between the input and output measurement points and the frequency at which the transducers sample the flowing fluid), the wave speed is calculated at step 208.

**Pressure data selection**

The quality of the input data has a significant impact on the accuracy of the flow rate determination. The pressure input data must be modified appropriately at this stage of the flow determination process. In the case of a system under a steady oscillatory flow, the procedure 300 of data selection is shown by the flow chart in Figure 7. The theory behind this procedure is the assumption of time invariant mean pressure head. The implication of that is the input data must have the same start and the end values.

A certain amount of raw pressure data measured at a point in the system is used to identify the appropriate number of data points for the proposed method. The process starts with measuring the raw pressure data (step 301), recording the first and the last values of the raw data (step 302) and calculating the difference between them (step 303). At 304, a determination is made on the difference. If this difference is smaller than the pre-set tolerance level, then the currently selected data can be used for the method (step 306). However, if the difference does not meet the tolerance criterion, the last point of the raw data must be shifted (step 305). This iteration process continues until the difference satisfies the required tolerance level. The resulting pressure data then has the same start and the end values.

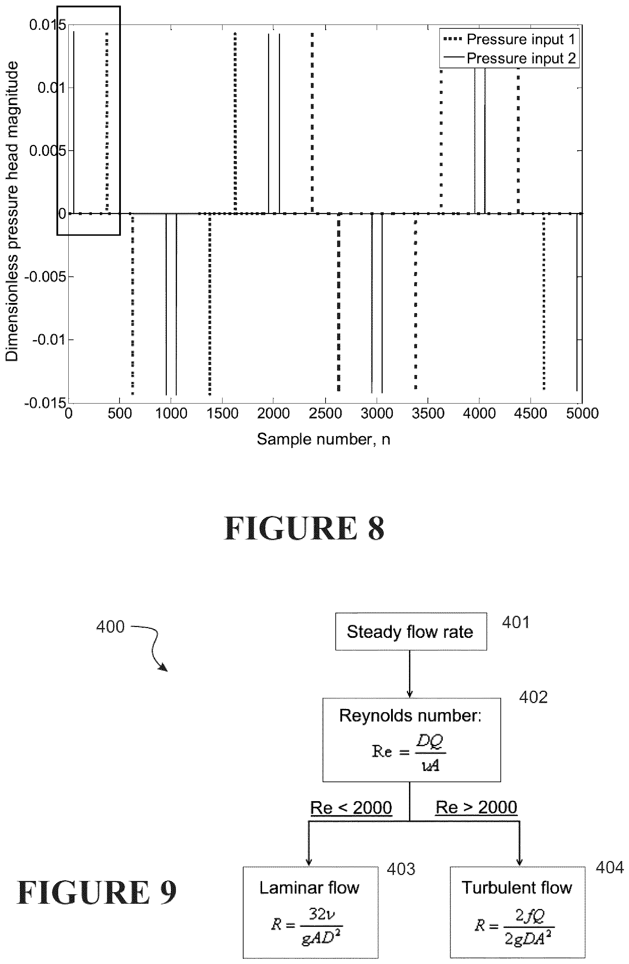

For the case with discrete pulse signal shown in Figure 8, the procedure in Figure 7 does not apply. The requirement for appropriate pressure data for the method is that the measured pressure data at two points must contain the same pressure pulses. This means that in order to predict the flow pulse associated to the first pressure pulse in Figure 8 (first pressure pulse in pressure input 2), the measurement duration must be long enough so that the pressure pulse has time to reach the other pressure sensor and the flow pulse can be predicted from the two pressure pulses circled in Figure 8. The measurement duration is a function of both the system wave speed and the sensor spacing and it must be determined in each situation.

Handling of discrete signals becomes more complicated in complex systems containing multiple transient sources or reflecting sources. Since the two pressure sensors must only contain the same information, the extraction of appropriate data set becomes difficult in the presence of reflections. It is recommended to have the two transducers close together when dealing with discrete signals.

**Compensating for different flow regimes**

There are two main types of flows for steady and unsteady flow rates; laminar and turbulent flow. In the study of transient behaviours, these two types of flows distinguished by the resistance or the frictional term. The method of the present invention deals with both types of flows by using an appropriate resistance term depending on the system flow condition.

Figure 9 shows a flowchart 400 for determining the resistance term for laminar or turbulent steady or unsteady flow according to an embodiment of the present invention. According to the embodiment, the user has information regarding the flow regime (e.g., steady flow rate through a commercial flow meter) in the system (block 401) prior to using the proposed flow determination method. The user decides if the flow is steady or unsteady. The type of the flow is categorised between laminar and turbulent flow by a dimensionless number called the Reynolds number, Re (block 402). The Reynolds number, Re is determined from the following equation:

$$\mathrm{Re} = \frac{DQ}{\upsilon A}$$

where

    u = kinematic viscosity,
    Q = time-averaged mean discharge,
    $A$ = the pipe cross-sectional area, and
    $D$ = the pipe diameter.

A laminar flow has the Reynolds number that is less than about 2000 (block 403) while the Reynolds number greater than about 2000 indicates that the flow is turbulent (block 404).

The resistance term for laminar steady flow is:

$$R_S = \frac{32\nu}{gAD^2}$$

where

$g$ = the acceleration due to gravity,
u = kinematic viscosity,
$A$ = the pipe cross-sectional area, and
$D$ = the pipe diameter.

The resistance term for turbulent steady flow is:

$$R_S = \frac{fQ}{gDA^2}$$

where

$g$ = the acceleration due to gravity,
$f$ = the friction factor,
Q = time-averaged mean discharge,
$A$ = the pipe cross-sectional area, and
$D$ = the pipe diameter.

When taking unsteady friction effects into account, the above resistance term will require an additional term:

$$R_U = \frac{4j\omega}{gA} \int_0^\infty e^{\left(-\frac{j\omega D^2}{4\nu}\tau\right)} W(t) d\tau$$

where

u = kinematic viscosity,
$g$ = the acceleration due to gravity,
$A$ = the pipe cross-sectional area,
$D$ = the pipe diameter,

$$j = \sqrt{-1},$$

$\omega$ = angular frequency,
$W$ = weighting function, and

$\tau$ = dimensionless time ($\quad = \frac{4\nu}{D^2}(t - t^*)\quad$ where $t^*$ is the time used in the convolution integral).

If a user wishes to incorporate the unsteady friction, the total resistance term will be:

$$R = R_S + R_U.$$

For a laminar unsteady flow, the following weighting function can be used:

$$W(\tau) = \sum_{i=1}^{6} m_i \tau^{\frac{1}{2}i-1}$$

for $\tau$ less than or equal to 0.02, and

$$W(\tau) = \sum_{i=1}^{5} e^{-n_i \tau}$$

for $\tau$ greater than 0.02
where $m_i = \{0.282095, -1.25, 1.057855, 0.9375, 0.396696, -0.351563\}$, $i = 1, ..., 6$ and $n_i = \{26.3744, 70.8493, 135.0198, 218.9216, 322.5544\}$, $i = 1, ..., 5$.

For a turbulent unsteady flow, the following weighting function can be used:

$$W(\tau) = \frac{1}{2\sqrt{\pi\tau}} e^{\left(-\frac{1}{C^*}\tau\right)}$$

where
$C^*$ = shear decay coefficient.

The shear decay coefficient is a function of the Reynolds number and is given by:

$$C^* = \frac{7.41}{\mathrm{Re}^\kappa}$$

where
Re = Reynolds number, and

$$\kappa = \log_{10}\left(\frac{14.3}{\mathrm{Re}^{0.05}}\right)$$

**Compensating for pipe material**

Where the pipe is not plastic, the characteristic impedance of the pipe $Z_c$, and the propagation constant $\mu$ can be calculated using the following equations:

$$Z_c = \frac{\mu a^2}{j\omega g A},$$

$$\mu = \sqrt{-\frac{\omega^2}{a^2} + \frac{jgA\omega R}{a^2}},$$

where

$$j = \sqrt{-1},$$

$\omega$ = angular frequency,

$g$ = acceleration due to gravity,
$A$ = pipe cross-sectional area,
$R$ = the resistance term of the pipe, and
$a$ = the determined wave speed.

In case of plastic pipes, viscoelastic effects of pipe wall must also be taken into account. This is achieved by using the following the propagation constant ($\mu$) and the characteristics impedance of the pipe ($Z_c$):

$$\mu = \sqrt{i\omega A\left(\frac{g}{a^2}+\frac{2CJ}{1+i\omega\tau}\right)\left(\frac{i\omega}{gA}+R\right)}$$

$$Z_c = -\sqrt{\frac{i\omega}{gA}+R} \bigg/ \sqrt{i\omega A\left(\frac{g}{a^2}+\frac{2CJ}{1+i\omega\tau}\right)}$$

where

$J$ and $\tau$ = parameters of the viscoelastic pipe material,
$C = \rho g\phi D/2e$ = intermediate constant coefficient
$\phi$ is the pipe constraint coefficient,
$e$ is the thickness of pipe-wall, and
$p$ is water density.

**Compensating for noise in flow predictions**

The flow calculation block 105 determines the flow rate at a point located a certain distance away from the pressure measurements and requires a good knowledge of the physical property of the pipe sections between the pressure measurement locations and the point of interest. Abnormalities in the flow spectrum will result when these assumed properties differ from that in the real system. These abnormalities appear as noise in the time-domain flow response and degrade the quality of the flow prediction.

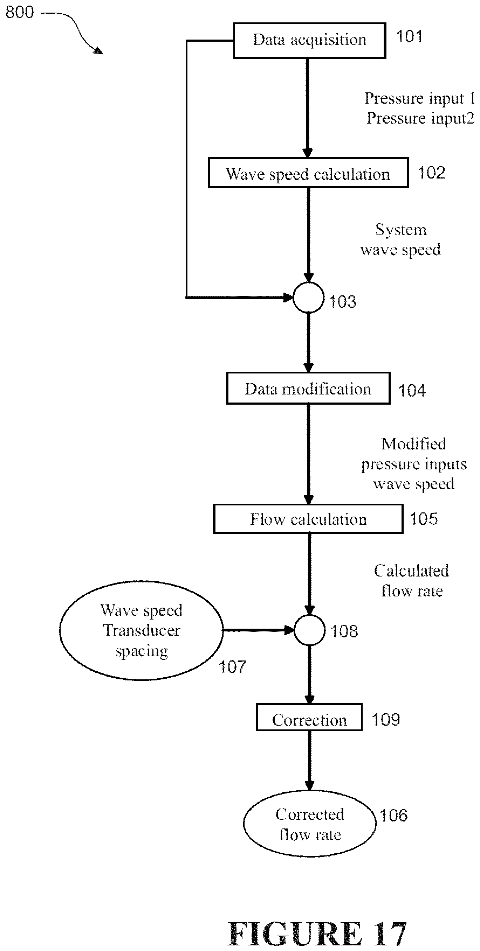

Figure 17 shows an alternative embodiment of the flow rate determination method 800 according to the present invention to correct for these abnormalities. The embodiment shown in Figure 17 is similar to the embodiment shown in figure 4, with an additional correction step 109. The alternative embodiment uses three sensors positioned in or on the pipe substantially along the length of the pipe to correct any errors in the determined flow rate.

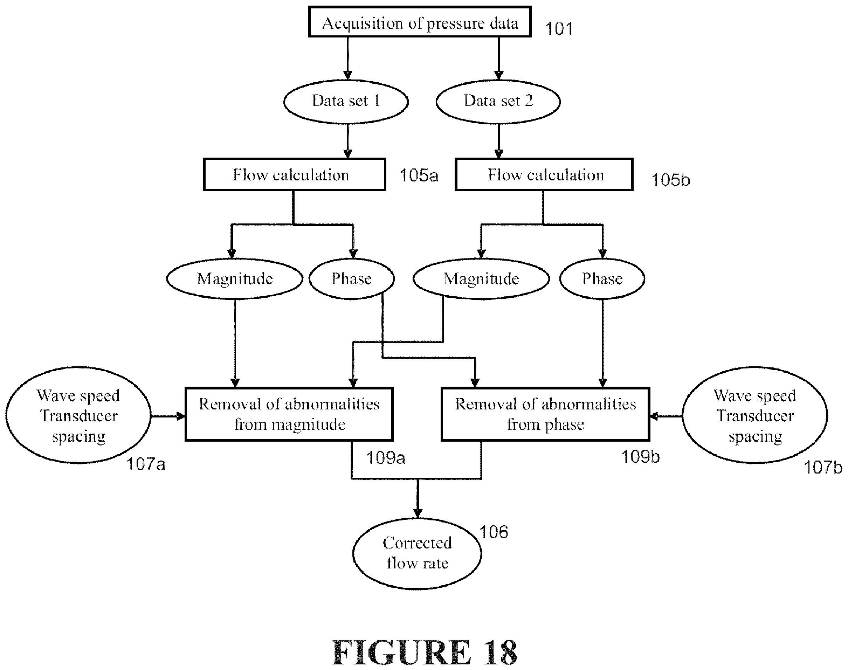

The correction procedure 109 is summarised in Figure 18.

Acquisition of pressure data 101

The correction procedure requires three pressure transducers. The consequence of this is that there are now two transducer pairs to predict the flow rate at the same point in the pipeline and hence there are two sets of pressure measurements (data set 1 and data set 2). For the effective correction, the three transducers must be placed so that one spacing is not a multiple of the other.

Flow rate determinations 105a, 105b

Using the two sets of pressure measurements, flow rate determinations are made. Parameters required in the calculation such as the wave speed must be measured prior to this point.

Removal of abnormalities 109a, 109b

The results from the previous step 105a and 105b are the flow predictions in the frequency domain. Before performing an inverse Fourier transform on these results, any abnormalities in the flow responses must be removed for noise-free flow responses in the time domain. Abnormalities are considered to be any part of one flow response which does not exist in the other flow response. Locations of abnormalities are a function of the measured wave speed and the transducer spacing and therefore it is possible to predict where abnormalities appear in the response. Abnormalities in one flow response are then removed by replacing the section with an abnormality with the same section of the other flow response which is the true flow response. Abnormalities in both magnitude and phase of the signal must be eliminated.

The end result would be a flow response 106 without any abnormalities and its time-domain counterpart can be determined by taking an inverse Fourier transform of this flow response.

**Determination of flow rate of fluid in a pipe with no hydraulic element(s) or device(s)**

The determined wave speed is used in the following equation for determining flow rate of fluid in a pipe where no hydraulic elements are present in the pipe:

$$\begin{pmatrix} h_2 \\ q_2 \end{pmatrix} = \begin{bmatrix} p_{a11} & p_{a12} \\ p_{a21} & p_{a22} \end{bmatrix} \begin{pmatrix} h_1 \\ q_1 \end{pmatrix}, \quad \begin{pmatrix} h_3 \\ q_3 \end{pmatrix} = \begin{bmatrix} p_{b11} & p_{b12} \\ p_{b21} & p_{b22} \end{bmatrix} \begin{pmatrix} h_2 \\ q_2 \end{pmatrix}$$

where

$q_n$ = time-varying flow rate at point n,
$h_n$ = dimensionless time-varying pressure head at point n,
$p_{a11} = cosh(\mu l_a)$,
$p_{a12} = -Z_c sinh(\mu l_a)$,
$p_{b21} = -sinh(\mu l_b)/Z_c$,
$p_{b22} = cosh(\mu l_b)$,
$Z_c$ = the characteristic impedance of the pipe, and
$\mu$ = the propagation constant.

The characteristic impedance of the pipe $Z_c$, and propagation constant $\mu$ are based on the type of pipe and are functions of at least the wave speed and the resistance of the pipe as previously described.

**Determination of flow rate of fluid in a pipe with hydraulic element(s) or device(s)**

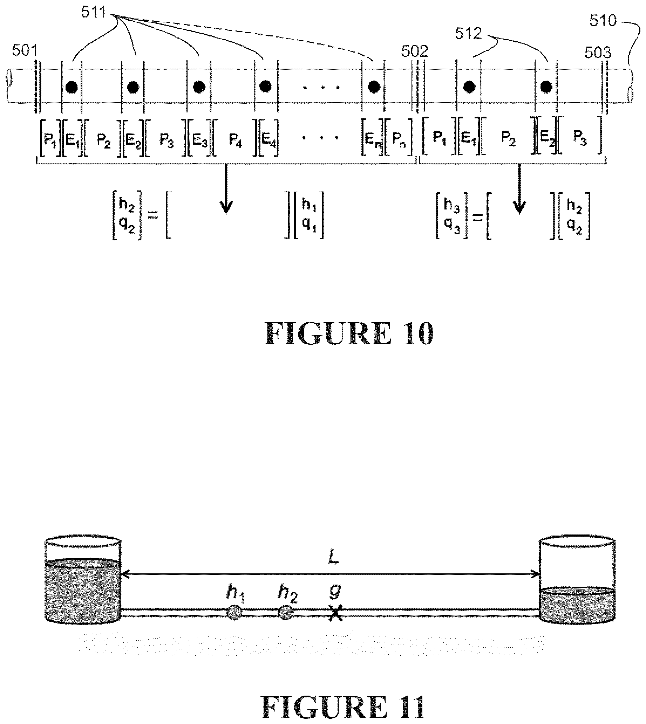

The presence of a hydraulic element within the measurement range gives rise to an additional matrix which is different for different hydraulic elements. Figure 10 shows the process of construction of an overall matrix linking the flow and pressure head at two points (501 and 502, and 502 and 503). The pipe section 510 of interest is further divided into two subsections. The subsection on the left hand side contains n number of hydraulic elements 511 while two hydraulic elements 512 are present on the right hand side subsection. Each pipe segment is described by a matrix P and the corresponding hydraulic element is described by a matrix E. The subscript denotes the number of pipe segment/hydraulic element. The overall matrix for each subsection is derived by multiplying all matrices of the pipe segments and the hydraulic devices within the subsection. Once the matrix equations for both subsections are derived, they can be combined and rearranged so to express the flow rate at the point of interest as a function of pressure at two points.
Referring to Figure 3, the matrix for the pipe segment, labelled as '$a_1$' is:

$$\begin{pmatrix} h_2 \\ q_2 \end{pmatrix} = \begin{bmatrix} p_{a1,11} & p_{a1,12} \\ p_{a1,21} & p_{a1,22} \end{bmatrix} \begin{pmatrix} h_1 \\ q_1 \end{pmatrix}$$

where

$p_{1,11} = p_{a1,22} = cosh(\mu l_{a1})$,
$p_{a1,12} = -Z_c sinh(\mu l_{a1})$,
$p_{a1,21} = -sinh(\mu l_{a1})/Z_c$, and
$\mu$ and $Z_c$ are as defined earlier.

The subscripts denote the section of interest and the row and the column position within the matrix respectively. The pipe segment matrices for other subsections, $a_2$, $b_1$ and $b_2$ have a similar form, with the respective distance term, $l$. The matrix for hydraulic element varies depending on the type of the device. The general form of the matrix is the same as the pipe segment matrix - a 2x2 matrix. Referring also to Figure 10, a general hydraulic device matrix, E can be written as:

$$\begin{pmatrix} h_d \\ q_d \end{pmatrix} = \begin{bmatrix} e_{a11} & e_{a12} \\ e_{a21} & e_{a22} \end{bmatrix} \begin{pmatrix} h_u \\ q_u \end{pmatrix}$$

where the subscripts u and d indicate the positions immediately upstream and downstream of the hydraulic device. The example given in this specification takes an orifice plate as an example of a hydraulic device and, in this case, the matrix is given as:

$$\begin{pmatrix} h_d \\ q_d \end{pmatrix} = \begin{bmatrix} 1 & 0 \\ -\dfrac{2\Delta H_0}{Q_0} & 1 \end{bmatrix} \begin{pmatrix} h_u \\ q_u \end{pmatrix}$$

where $Q_0$ is the time averaged mean discharge, and $\Delta H_0$ is the difference between the time averaged mean pressure head.
The matrix in each pipe section (a and b) is obtained by multiplying the pipe segment matrices and the hydraulic device matrix:

$$\begin{pmatrix} h_2 \\ q_2 \end{pmatrix} = \begin{bmatrix} p_{a2,11} & p_{a2,12} \\ p_{a2,21} & p_{a2,22} \end{bmatrix} \begin{bmatrix} e_{a11} & e_{a12} \\ e_{a21} & e_{a22} \end{bmatrix} \begin{bmatrix} p_{a1,11} & p_{a1,12} \\ p_{a1,21} & p_{a1,22} \end{bmatrix} \begin{pmatrix} h_1 \\ q_1 \end{pmatrix}$$

$$\begin{pmatrix} h_3 \\ q_3 \end{pmatrix} = \begin{bmatrix} p_{b2,11} & p_{b2,12} \\ p_{b2,21} & p_{b2,22} \end{bmatrix} \begin{bmatrix} e_{b11} & e_{b12} \\ e_{b21} & e_{b22} \end{bmatrix} \begin{bmatrix} p_{b1,11} & p_{b1,12} \\ p_{b1,21} & p_{b1,22} \end{bmatrix} \begin{pmatrix} h_2 \\ q_2 \end{pmatrix}$$

Generalising these matrix equations for a pipe with n number of hydraulic element(s) between the locations at which pressure is measured for the flow rate determination and with m number of hydraulic element(s) between the flow determination point and one of the locations at which pressure is measured for flow rate determination, where *n* and *m* are integers, gives the following expression

$$\begin{pmatrix} h_2 \\ q_2 \end{pmatrix} = \begin{bmatrix} p_{a(n+1),11} & p_{a(n+1),12} \\ p_{a(n+1),21} & p_{a(n+1),22} \end{bmatrix} \begin{bmatrix} e_{an,11} & e_{an,12} \\ e_{an,21} & e_{an,22} \end{bmatrix} \begin{bmatrix} p_{an,11} & p_{an,12} \\ p_{an,21} & p_{an,22} \end{bmatrix} \cdots \begin{bmatrix} e_{a1,11} & e_{a1,12} \\ e_{a1,21} & e_{a1,22} \end{bmatrix} \begin{bmatrix} p_{a1,11} & p_{a1,12} \\ p_{a1,21} & p_{a1,22} \end{bmatrix} \begin{pmatrix} h_1 \\ q_1 \end{pmatrix}$$

$$\begin{pmatrix} h_3 \\ q_3 \end{pmatrix} = \begin{bmatrix} p_{b(m+1),11} & p_{b(m+1),12} \\ p_{b(m+1),21} & p_{b(m+1),22} \end{bmatrix} \begin{bmatrix} e_{bm,11} & e_{bm,12} \\ e_{bm,21} & e_{bm,22} \end{bmatrix} \begin{bmatrix} p_{bm,11} & p_{bm,12} \\ p_{bm,21} & p_{bm,22} \end{bmatrix} \cdots \begin{bmatrix} e_{b1,11} & e_{b1,12} \\ e_{b1,21} & e_{b1,22} \end{bmatrix} \begin{bmatrix} p_{b1,11} & p_{b1,12} \\ p_{b1,21} & p_{b1,22} \end{bmatrix} \begin{pmatrix} h_2 \\ q_2 \end{pmatrix}$$

where

$q_3$ = time-varying flow rate at the flow determination point,
$q_1$ = time-varying flow rate at the location of the first sensor,
$q_2$ = time-varying flow rate at the location of the second sensor,
$h_3$ = dimensionless time-varying pressure head at the flow determination point,
$h_1$ = dimensionless time-varying pressure head measured by a first sensor,
$h_2$ = dimensionless time-varying pressure head measured by a second sensor,
$p_{x,11} = cosh(\mu l_x)$,
$p_{x,12} = - Z_c sinh(\mu l_x)$,
$p_{x,21} = - sinh(\mu l_x)/Z_c$,
$p_{x,22} = cosh(\mu l_x)$,
where *x* denotes pipe sections $a_1$, $a_2$, ..., $a_n$, and $b_1$, $b_2$, ..., $b_m$,
$l_x$ = length of pipe section *x*,

$Z_c$ = the characteristic impedance of the pipe, and
$\mu$ = the propagation constant.

The values of e of the matrix expression E for the hydraulic element depend on the type of the hydraulic element of interest.

The matrix E for a flow loss hydraulic element is given by:

$$E = \begin{bmatrix} e_{11} & e_{12} \\ e_{21} & e_{22} \end{bmatrix} = \begin{bmatrix} 1 & 0 \\ \Delta loss & 1 \end{bmatrix}$$

where $\Delta loss$ is a variable relating to the magnitude of flow loss. The flow loss is a function of the mean head and flow values. Examples of hydraulic elements include valves, orifices, pumps, corners and junctions. As previously discussed, in the case where the hydraulic element is an orifice plate, the expression $\Delta loss$ is given by the following equation:

$$\Delta loss = -\frac{2\Delta H_0}{Q_0}$$

where $Q_0$ is the time averaged mean discharge, and $\Delta H_0$ is the difference between the time averaged mean pressure head.

The matrix $E$ for a head loss hydraulic element is given by:

$$E = \begin{bmatrix} 1 & \Delta loss \\ 0 & 1 \end{bmatrix}$$

where $\Delta loss$ is a variable relating to the magnitude of head loss. The head loss is a function of the mean head and flow values.

In the case where there is both a head loss and flow loss, the matrix expression E is given by:

$$E = \begin{bmatrix} 1 & \Delta loss_1 \\ \Delta loss_2 & 1 \end{bmatrix}$$

where $\Delta loss_1$ is the variable relating to the magnitude of head loss, and $\Delta loss_2$ is the variable relating to the magnitude of flow loss.

Manipulation of these matrix equations depends on which of the two pressures, $h_1$, $h_2$ or $h_3$ are measured and also which flow, $q_1$, $q_2$ or $q_3$ is of interest to the user. In the given example (Figure 3), it is assumed that the pressures at points 501 and 502 are measured to determine the flow at point 503 (Figure 3). Then the resultant equation for the flow becomes:

$$q_3 = \left(\frac{u_{b22}}{u_{a12}}\right)\Delta h + \left(\frac{u_{b21}u_{a12}}{u_{a12}} + \frac{u_{b22}u_{a11}}{u_{a12}} - \frac{u_{b22}}{u_{a12}}\right)h_2$$

where

$$u_a = \begin{bmatrix} p_{a2,11} & p_{a2,12} \\ p_{a2,21} & p_{a2,22} \end{bmatrix}\begin{bmatrix} e_{a11} & e_{a12} \\ e_{a21} & e_{a22} \end{bmatrix}\begin{bmatrix} p_{a1,11} & p_{a1,12} \\ p_{a1,21} & p_{a1,22} \end{bmatrix}$$

$$u_b = \begin{bmatrix} p_{b2,11} & p_{b2,12} \\ p_{b2,21} & p_{b2,22} \end{bmatrix} \begin{bmatrix} e_{b11} & e_{b12} \\ e_{b21} & e_{b22} \end{bmatrix} \begin{bmatrix} p_{b1,11} & p_{b1,12} \\ p_{b1,21} & p_{b1,22} \end{bmatrix}$$

$$u_{a11} = \cosh(\mu_{a2}l_{a2})\cosh(\mu_{a1}l_{a1}) + \left(\left(-\frac{2\Delta H_0}{Q_0}\right)\cosh(\mu_{a2}l_{a2}) - Z_{ca2}\sinh(\mu_{a2}l_{a2})\right)\left(-\frac{1}{Z_{ca1}}\sinh(\mu_{a1}l_{a1})\right)$$

$$u_{a12} = \cosh(\mu_{a2}l_{a2})\left(-Z_{ca1}\sinh(\mu_{a1}l_{a1})\right) + \left(\left(-\frac{2\Delta H_0}{Q_0}\right)\cosh(\mu_{a2}l_{a2}) - Z_{ca2}\sinh(\mu_{a2}l_{a2})\right)\cosh(\mu_{a1}l_{a1})$$

$$u_{b21} = \left(-\frac{1}{Z_{cb2}}\sinh(\mu_{b2}l_{b2})\right)\cosh(\mu_{b1}l_{b1}) + \left(\left(\frac{2\Delta H_0}{Z_{cb2}Q_0}\right)\sinh(\mu_{b2}l_{b2}) + \cosh(\mu_{b2}l_{b2})\right)\left(-\frac{1}{Z_{cb1}}\sinh(\mu_{b1}l_{b1})\right)$$

$$u_{b22} = \left(-\frac{1}{Z_{cb2}}\sinh(\mu_{b2}l_{b2})\right)\left(-Z_{cb1}\sinh(\mu_{b1}l_{b1})\right) + \left(\left(\frac{2\Delta H_0}{Z_{cb2}Q_0}\right)\sinh(\mu_{b2}l_{b2}) + \cosh(\mu_{b2}l_{b2})\right)\cosh(\mu_{b1}l_{b1})$$

$$\Delta h = h_2 - h_1,$$

$h_n$ = dimensionless time-varying pressure head at point n,
$l_{a1}$ = distance between a first transducer and a first hydraulic element,
$l_{a2}$ = distance between a second transducer and the first hydraulic element,
$l_{b1}$ = distance between the second transducer and a second hydraulic element,
$l_{b2}$ = distance between the second hydraulic element and the location at which flow rate is to be determined,
$Z_{cx}$ = the characteristic impedance of pipe section x,
$\mu_x$ = the propagation constant of pipe section x,
x denotes pipe sections $a_1$, $a_2$, and $b_1$, $b_2$,
$Q_0$ = time-averaged mean discharge,
$H_0$ = time-averaged mean pressure head,
$q_3$ = time-varying flow rate at the flow rate determination point.

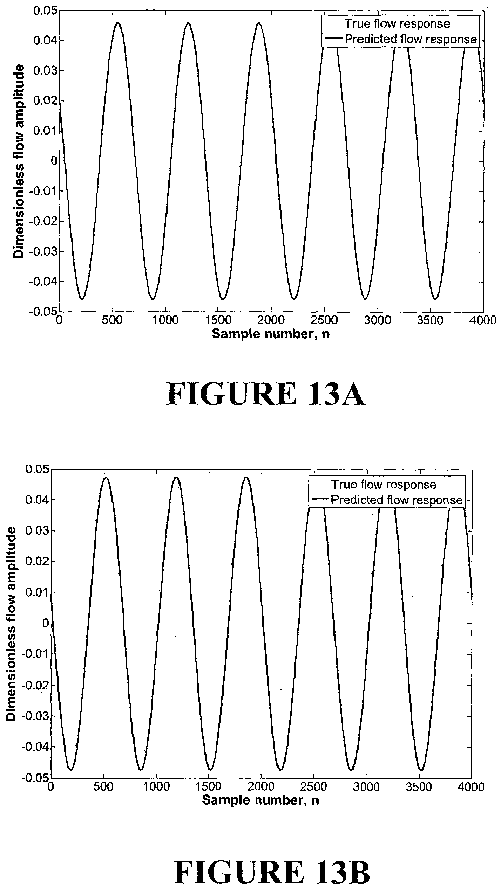

As a comparison, to illustrate the effect of an element in between the measurement points on the accuracy of the flow prediction, the fluctuating flow response from the Washio method is plotted with the true flow response in Figure 13a. In the following example, the hydraulic element 504, 505 is assumed to be a lossy inline orifice which produces a head loss ($\Delta H$) of 100 m across each orifice 504, 505. Pressure measurements at points 501 and 502 are used to predict the flow at point 503.

Figure 13(a) shows that the Washio model fails to depict the fluctuating flow response in the presence of discontinuities between the measurement points, resulting in errors in both magnitude and phase. The proposed model takes the presence of the hydraulic elements into account according to the description above.

The prediction of the flow response using the proposed model is shown in Figure 13(b) in which the improvement of the predicted flow response both in terms of the magnitude and phase of the flow response is observed.

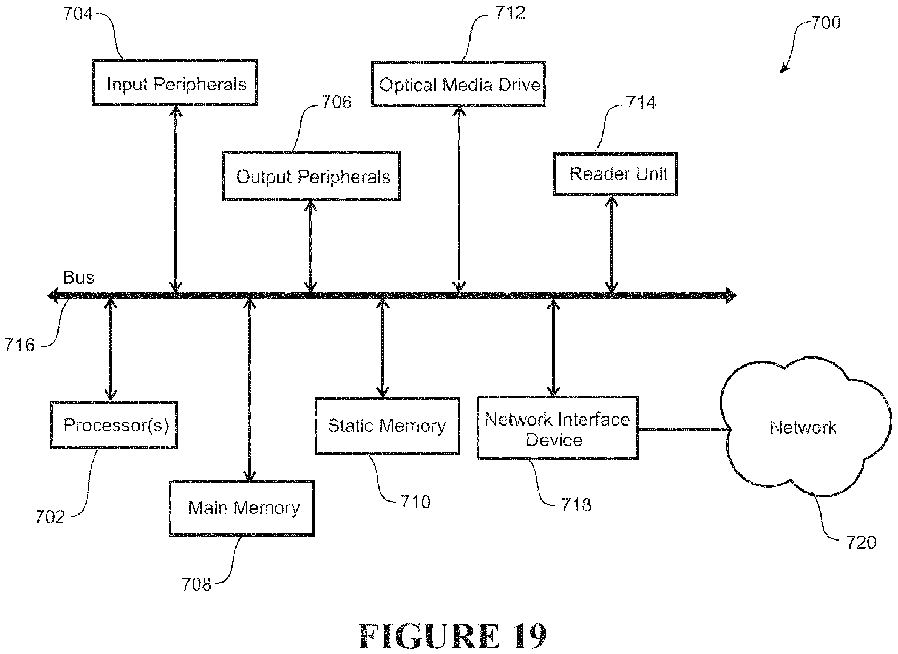

In a preferred embodiment, the method of determining flow rate is carried out by a processing device comprising one or more processors. Figure 19 shows a simplified block diagram of a machine in the example form of the processing device 700.

The processing device 700 includes any collection of machines that individually or jointly execute a set or multiple sets of instructions to perform any one or more steps of the method of determining flow rate described above.

The processing device 700 includes one or more processors 702. Examples of processors 702 include a central processing unit and any other microcontroller for example.

The processing device 700 is in wired and/or wireless communication with the input peripheral devices 704 such as a keyboard, mouse, and sensors on the pipe which provide the pressure and/or wave speed measurements. The processing device 700 may be connected directly and/or indirectly to the sensors on the pipe. Where the processing device 700 is in indirect communication with the sensors, there may be one or more intermediate devices for receiving measurements from the sensors and for transmitting data to the processing device 700. The intermediate device may collect the measurements from the sensors and transmit the measurements to the processing device 700. Alternatively, the intermediate device may collect the measurements from the sensors and perform one or more of the steps discussed above before sending the data to the processing device 700. The intermediate device and one or more of the sensors may be part of the same physical device.

In one embodiment, the intermediate device comprises a data-logging device. In some embodiments, the input peripherals 704 form part of the processing device 700. In other embodiments, the input peripherals 704 are external to the processing device.

The device 700 may additionally be in wired and/or wireless communication directly or indirectly with output peripheral devices 706, which include a display for example. A further example output peripheral device includes a fluid regulator device for controlling the flow rate of the fluid through the pipe. For that embodiment, the device 700 and/or the fluid regulator device may be configured accordingly to implement a control loop with feedback, such as a proportional-integral-derivative (PID) controller for example, to control the flow rate of fluid through the pipe. In some embodiments, the output peripherals 706 are part of the processing device 700. In other embodiments, the output peripherals 706 are external to and in communication with the processing device.

The device 700 further includes a main system memory 708 and static memory 710. The processor(s) 702, main memory 708 and static memory 710 communicate with each other via a data bus 716. The processing device 700 further includes a reader unit 714, optical media drive 712, and network interface device 718. These devices also communicate with the processor(s) via the data bus 716.

The reader unit 714 is configured to receive a machine readable medium on which is stored one or more sets of instructions and data structures, for example computer software which when executed by the processor(s) 702 of the processing device causes the processor(s) 702 to perform one or more steps of the method described above. The reader unit 714 includes a disc drive and a USB port for example. In these cases, the machine readable medium which stores the necessary software includes a floppy disc and a static storage device such as a thumb drive. Where the optical media drive 712 is used, the machine readable medium includes a CD-ROM.

Software may also reside completely or at least partially within main system memory 708 and/or within the processor(s) 702 during execution by the processing device 700. In this case, main memory 708 and processor(s) 702 constitute machine-readable tangible storage media. Software may further be transmitted or received over network 720 via network interface device 718. The data transfer may be carried out using any one of a number of well known transfer protocols such as the hypertext transfer protocol (http) for example.

The machine readable medium could include a single medium or multiple media. Examples of multiple media include a centralised or distributed database and/or associated caches. These multiple media store the one or more sets of computer executable instructions. The machine readable medium includes any medium that is capable of storing, encoding or carrying out a set of instructions for execution by the machine and that cause the machine to perform any one or more of the methods described above. The machine-readable medium is also capable of storing, encoding or carrying data structures used by or associated with those sets of instructions. The machine-readable medium includes solid-state memories, optical media, magnetic media and carrier wave signals.

In one embodiment, the software is installed and operating at a client site on a processing device 700. The network interface device 718 is required to communicate with an offsite central server for example to submit data results and/or license validations. In some cases, the network interface device 718 and network are not required as the system can run in a standalone mode, which means that no data results are submitted to the offsite central server.

The processing device 700 can also be connected to other devices or a server. Where the processing device 700 is networked to other devices, the processing device is configured to operate in the capacity of a server or a client machine in a server-client environment. Alternatively, the processing device 700 can operate as a peer machine in a peer-to-peer or distributed network environment. The device 700 may also include any other machine capable of executing instructions that specify the actions to be carried by that machine. These instructions may be sequential or otherwise.

**Experimental results**

*Experiment 1*

The method of the present invention is verified using a pipeline system shown in Figure 11. The system consists of a pipeline of length L which is bounded by constant head reservoirs. The system contains a signal generator at the middle of the system. Pressure is recorded at two points $h_1$ and $h_2$ which are separated by the dimensionless distance of 0.1. The frequency of the pressure measurement is 500 Hz. In all tests, the theoretical wave speed is 1000 m/s.

The measured pressure from the transducer at $h2$ closer to the generator $g$ is regarded as the input x[$n$] and the other measured pressure from the transducer at $h_1$ is considered as the output y[$n$] from the system which, in this case, is the pipe section between the two pressure measurement points.

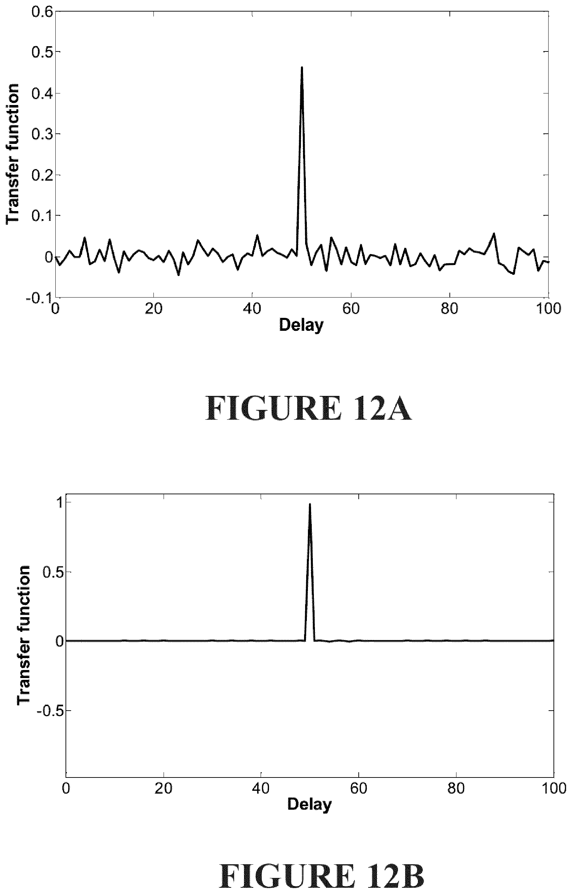

Both continuous and discrete signals were used to test the algorithm. The size of both signals was 10% of the steady flow rate. The transfer function of the system was determined using these signals and it is presented in Figures 12a and 12b where the delay (in the number of sample) and the magnitude of the transfer function are on the $x$ and y axis respectively.

The results showed a spike at the delay of 50 samples using either signal. The graphs in Figure 12a and 12b only show the delay sample number of up to 100 to give an emphasis on the largest spike in the transfer function. Smaller spikes are also present; however, the position of the largest spike is proportional to the wave speed. Using this location of the largest spike of the system transfer function and the known distance between the pressure measurement points and the sampling rate, the resultant wave speed matched the correct value of 1000 m/s.

In the verification process, the accuracy of the proposed model is defined as the difference in the theoretical and predicted magnitudes of the flow response.

The result of the numerical verification of the method is shown in Figure 13(b). The error in the magnitude was 0.06 % which confirms that the method works even in the presence of multiple hydraulic devices.

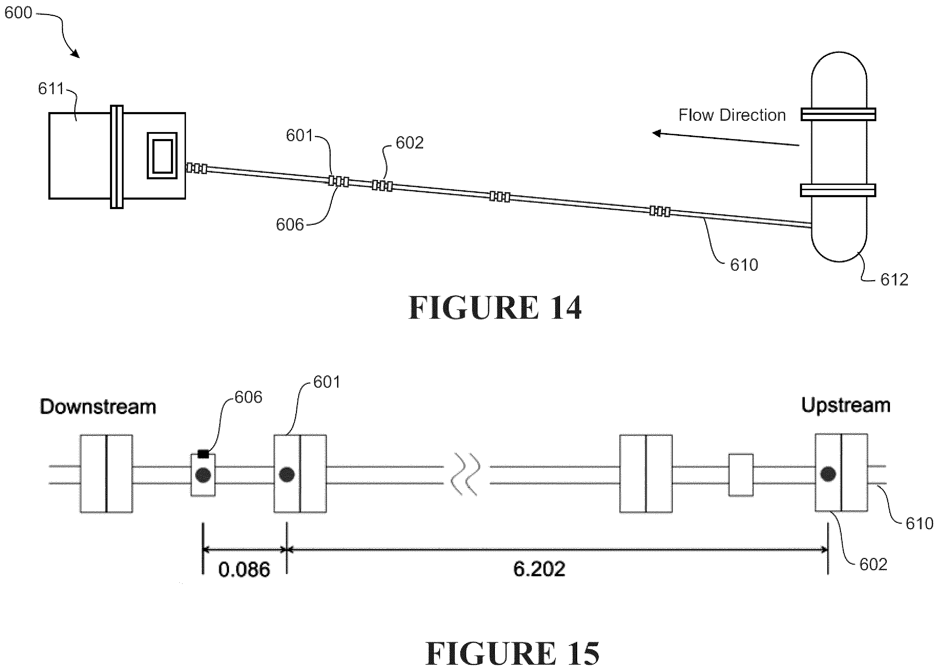

The next stage of the verification process uses the real pipeline system. For the experimental verification, a pipeline system having a schematic shown in Figures 14 and 15 is used.

The pipeline system 600 consists of a 42.6m pipe 610 with the nominal diameter of 1 inch and there are test sections where pressure transducers 601, 602 and a transient generator 606 are placed along the pipe 610. The upstream and downstream ends of the system are bounded by the pressurised tanks 611, 612 whose pressure is controlled electronically to achieve desired flow rates and keep the pressure constant during the verification process. The pressure transducers 601, 602 have a measurement range of 0 to 352 kPa with a response time of less than 2 $\mu$s. The measurement uncertainty is rated at 0.1 % based on the factory calibration records. In the experimental verification, a solenoid valve is used to generate a pulse signal and it is placed at the second test section from the downstream end. This location is chosen to produce a pulse signal that is not contaminated by reflections of the downstream reservoir 611 during pulse generation. A generator 601 is used to produce a known flow signal by rapidly opening and closing the solenoid valve to compare with the technique prediction. Pressure is measured at two test sections 601, 602 and the configuration of the generator and the pressure transducers is shown in Figure 15 with the spacing between them in metres.

The theoretical flow magnitude is given by the discharge out of the solenoid valve. Due to a rapid movement of the valve and the small amount of discharge, measuring it directly is likely to be erroneous. Instead, the theoretical discharge is inferred from the change in pressure head and such a relationship is given by the Joukowsky equation:

$$\left|\Delta Q\right| = \frac{Ag}{a}\left|\Delta H\right|$$

where $\Delta Q$ and $\Delta H$ are the change in flow rate and pressure head respectively, A is the cross-sectional area of the pipe, $g$ is the acceleration due to gravity and a is the system wave speed. The change in pressure head is measured by the transducer underneath the generator and using the above equation, the measured pressure change is converted to the corresponding flow change which is then compared to the predicted value.

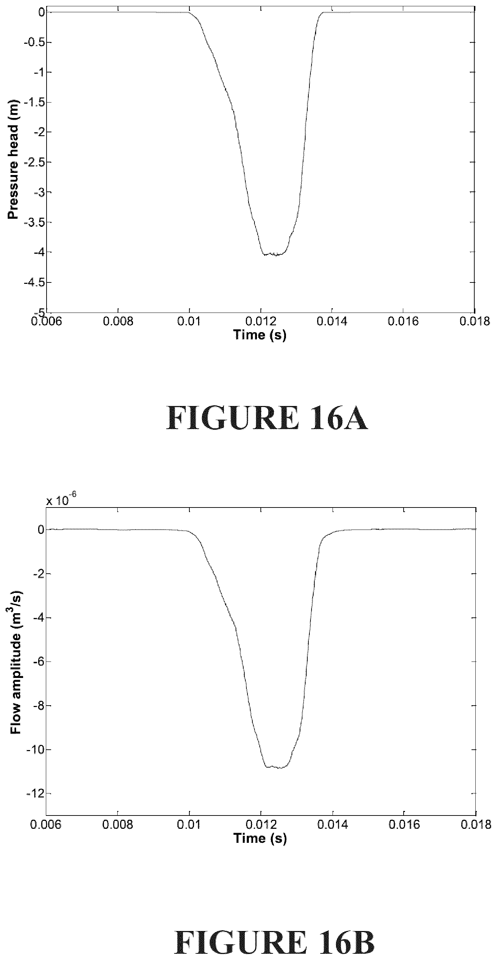

Figure 16(a) shows the pressure head pulse used as an input for the method and the predicted flow response is presented in Figure 16(b). The shape of the flow response resembles the pressure input which is expected since any change in pressure results in a change in flow and this relationship can be seen from the Joukowsky equation. The difference in the flow amplitude in the case shown was 0.498 %. Errors found in other runs are tabulated in Table 1. In all these runs, regardless of the flow regime, the error was within 0.5 % which shows high potential of the proposed method in measuring unsteady flow.

**Table 1 - Experimental results**

| Run number | Flow regime | Error |
| --- | --- | --- |
| 1 | Laminar 1 | 0.498 % |
| 2 | Laminar 2 | 0.382 % |
| 3 | Laminar 3 | 0.454 % |
| 4 | Laminar 4 | 0.474 % |
| 5 | Laminar 5 | 0.291 % |
| 6 | Turbulent 1 | 0.39 % |

(continued)

| Run number | Flow regime | Error |
|---|---|---|
| 7 | Turbulent 2 | 0.494 % |
| 8 | Turbulent 3 | 0.438 % |
| 9 | Turbulent 4 | 0.453 % |
| 10 | Turbulent 5 | 0.335 % |

Numerical verification shows that in the system containing multiple hydraulic devices, the proposed method was able to predict the flow magnitude with an accuracy of 0.06 %. The method was also tested in the real pipeline system with both laminar and turbulent flows. The result showed that for both flow regimes, the error in the predicted flow magnitude was less than 0.5 % of the theoretical flow magnitude, indicating high potential of the proposed method for measuring unsteady flows.

The described embodiment of the present invention provides a method and apparatus for measuring flow rate in pressurised pipelines for both laminar and turbulent flow. The method and apparatus contains algorithms which allow determination of the system wave speed, appropriate data selection, handling of different flow regimes and account for hydraulic devices in pipelines. The method and apparatus is non-intrusive and inexpensive and requires minimal modifications to a pipe system for any type of unmodified fluid with transducers that may be positioned on the pipeline at any distance relative to each other.

*Experiment 2*

In a second experiment, the experimental verification of the method of the present invention is carried out on a pipeline system similar to the system described above with reference to Figure 11. The system consists of a stainless steel pipeline having 41.6 m length and a diameter of 22.25 mm. The pipe is bounded by pressurized tanks that are part filled with water and where the pressures within each tank are maintained through the injection of compressed air. The pressure in the tanks is adjusted to create laminar and turbulent flow conditions. The inline valve at the downstream end of the system is closed to establish a static steady state condition.

Controlled flow perturbations for the validation of the method are introduced using two hydraulic devices; an electronically controlled solenoid valve and a manually operated side discharge valve which are located 8.5 m from the downstream reservoir. The solenoid valve has a flow diameter of 1.6 mm and the side discharge valve has a flow diameter of 8 mm. The introduced discharge perturbations are in the form of sharp pulses which contain a wide spectrum of frequencies for the rigorous testing of the method. This type of perturbation is present in many actual situations, including industrial batch filling processes as well as internal combustion engines. The pulse from the solenoid valve is created by rapidly opening the valve followed immediately by a sharp closure, which creates a pulse having a duration of 8ms. The solenoid valve is used under static and laminar flow conditions. In turbulent flow conditions, a discharge pulse is created from the manual operation of a side discharge valve which is placed close to a reservoir boundary, in this case the downstream boundary. The side discharge valve is initially open and then rapidly shut, creating a high pressure wave that propagates away from the valve in both directions. When the wave front moving downstream impinges upon the reservoir boundary it is reflected as a pressure restoring wave which moves upstream, following the high pressure wave. The sum total of these two waves is a pressure pulse. The duration of the pulse created in this way is 24 ms. While the pulse created by the side discharge valve is slower than that from the solenoid valve, it has a larger magnitude and is suitable in cases of larger system base flow.

Pressure traces for the method are measured using piezoelectric transducers located 20.8 m and 26.9 m from the upstream reservoir and the data is collected at the sampling frequency of 10 kHz. The pressure sensors are accurate to 1% of the measured pressure. The experimental verification of the method is conducted with and without a steady base flow. The flow Reynolds number ranges from 325.6 to 53374.9.

The accuracy of the method is given as the absolute difference between a measured flow response and a predicted flow response by the equations. The measured flow response is inferred from the volume of the water ejected from the transient generator and the pressure trace measured at the generator. In the case of the solenoid valve, a transparent tube is connected to the valve outlet. A rise in the water height inside the tube and the tube diameter give the discharge volume. With the side discharge valve, the volume is given by the measured mass of the discharge out of the valve. From a measured pressure trace, a flow response is determined through the Joukowsky equation. The height of the flow pulse is judged by the system wave speed and the measured discharge volume.

The accuracy of the method is given as the absolute difference between a response measured and a response predicted by the equations. It is quantified by three norms. The difference in the area under the flow pulse signal with time provides the error in the volumetric measurement of the discharge, $E_{\text{Volume}}$. The error in capturing the maximum flow pulse amplitude is given the symbol, $E_{Max}$. Finally, the difference in the spectral content of the predicted response describes the error in the shape of the flow pulse profile, $E_{Profile}$ and it is given as a root mean sum of the error across all the frequency components of the signal. All three errors are given relative to the true response.

This experiment investigates the performance of the method under a static steady state flow condition (Experiment 2a), and under laminar and turbulent flow conditions (Experiment 2b) with the flow Reynolds numbers ranging up to the smooth pipe turbulent zone.

*Experiment 2a - Static steady state flow condition*

Under the static steady state condition, four different pulse sizes were used: Size 1 = $1.4 \times 10^{-5}$ m³/s, Size 2 = $1.5 \times 10^{-5}$ m³/s, Size 3 = $1.9 \times 10^{-5}$ m³/s, and Size 4 = $2.4 \times 10^{-5}$ m³/s. These flow rates are average flow rates out of the solenoid valve which are estimated from the measured discharge volume and the pulse duration. The choice of the pulse size is governed by the limitations of the solenoid valve.

The errors are summarised in Table 2. The results show that the average error across all pulse sizes is in the order of 0.1%. The method captures the maximum flow rate well but the error in the pulse profile was relatively large for all pulse sizes. The largest error in these tests was 2.0% for the biggest pulse size and the errors were found to generally increase with the pulse magnitude.

**Table 2 - Summary of percentage errors in the flow predictions of different flow pulse magnitudes**

| Pulse size | $E_{Volume}$ | $E_{Max}$ | $E_{Profile}$ |
|---|---|---|---|
| Size 1 | $3.78 \times 10^{-3}$ | $3.37 \times 10^{-3}$ | $8.14 \times 10^{-3}$ |
| Size 2 | $8.10 \times 10^{-3}$ | $1.40 \times 10^{-3}$ | $8.20 \times 10^{-3}$ |
| Size 3 | $3.63 \times 10^{-3}$ | $2.59 \times 10^{-3}$ | $7.25 \times 10^{-3}$ |
| Size 4 | $4.10 \times 10^{-3}$ | $1.70 \times 10^{-3}$ | $2.00 \times 10^{-2}$ |

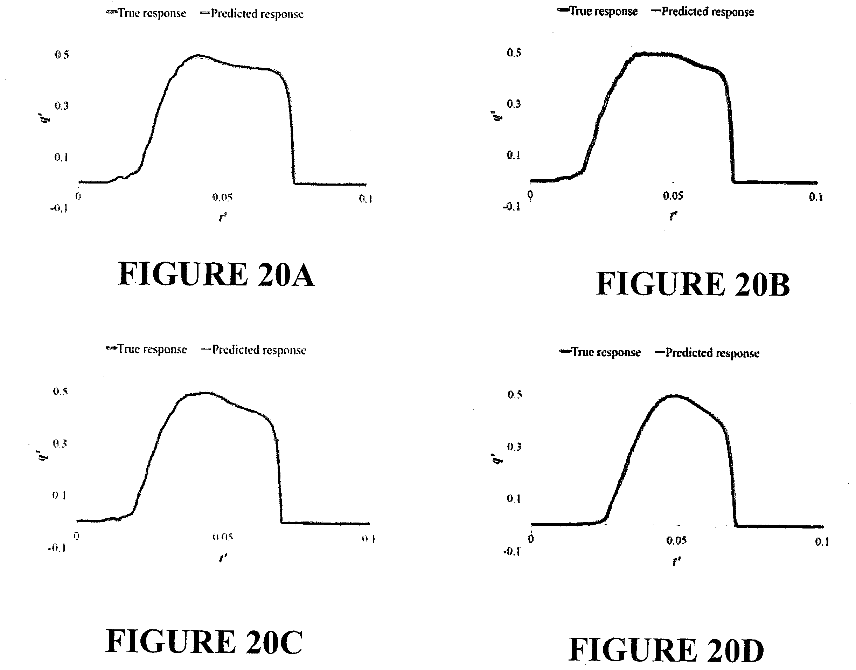

Figure 20 shows the predicted responses for each pulse size using the method of the invention shown with the solid line. The predicted responses are compared with the true responses indicated by the dashed line. The time $t$ on the x-axis is non-dimensionalised by the period of the pipeline system, $t' = t/T$ ($T = 4L/a$, where L is the pipe length). The flow rate on the y-axis is divided by the respective average flow rate to give $q'$.

*Experiment 2b - Laminar and turbulent flow conditions*

Five flow scenarios with different Reynolds numbers Re were tested for each flow regime. The pulse size in the tests range from 1.85% to 43.9% of the steady state flow.

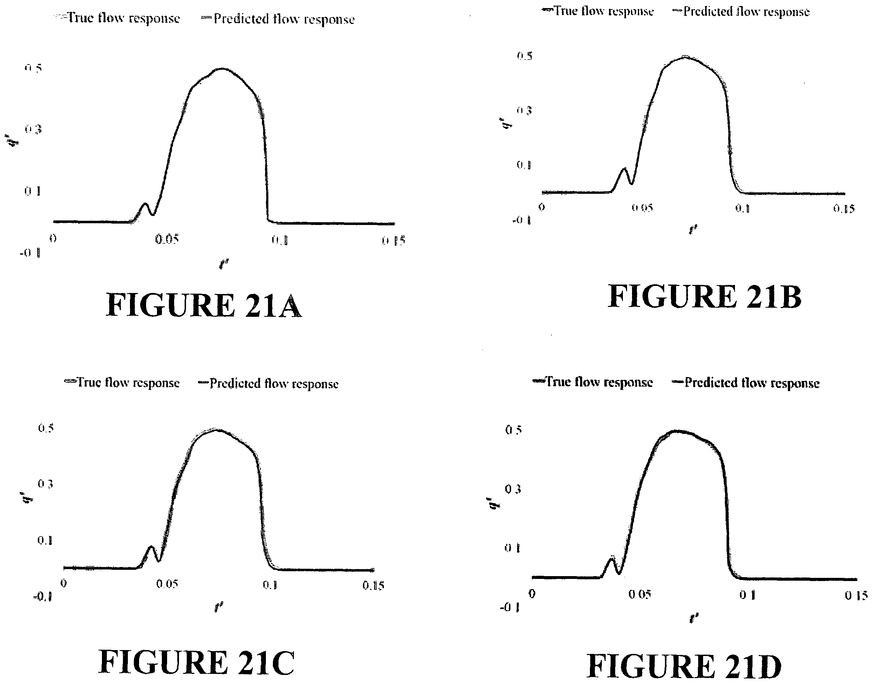

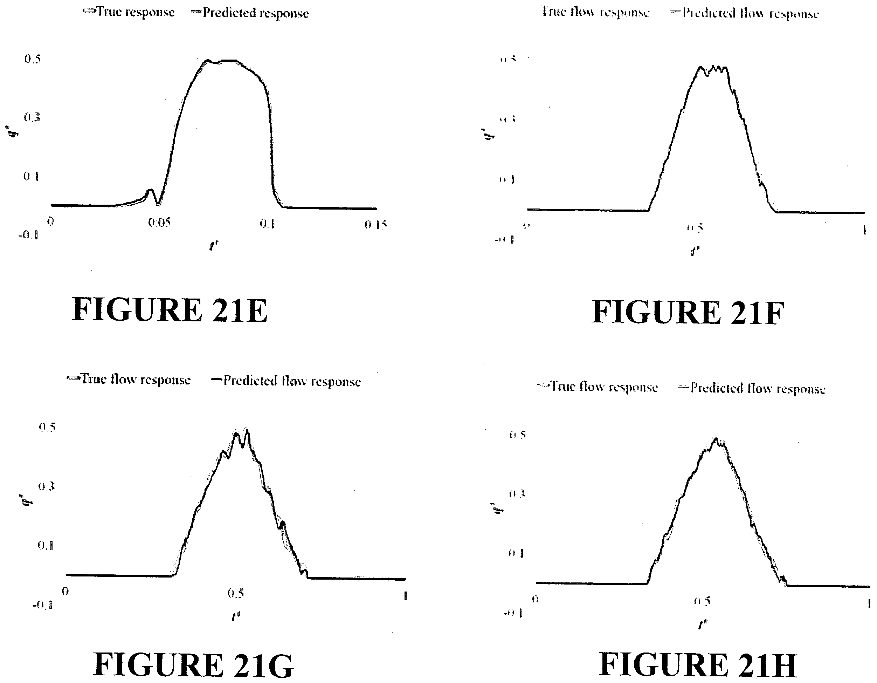

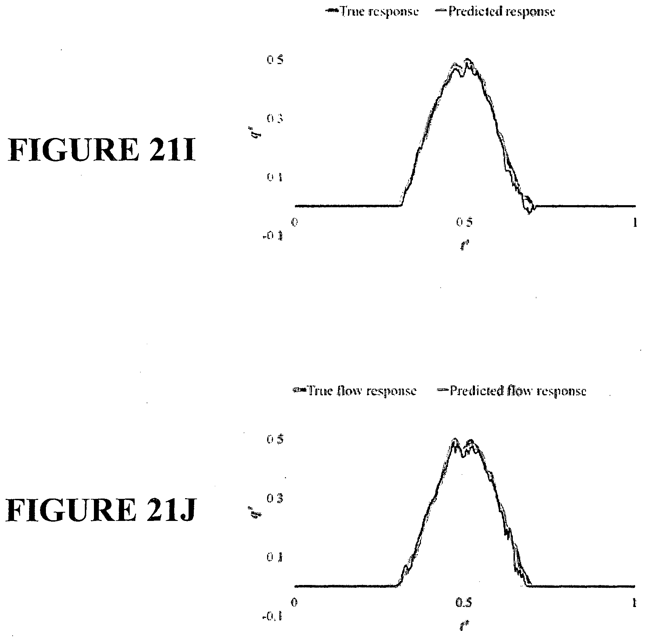

The flow prediction from the method is compared with the true flow pulse in Figure 21. The errors in the flow prediction are shown in Tables 3 and 4 for laminar flow conditions and turbulent flow conditions respectively.

**Table 3 - Summary of average errors in the flow predictions in various laminar flows**

| Test case | $E_{Volume}$ | $E_{Max}$ | $E_{Profile}$ |
|---|---|---|---|
| Figure 21a (Re = 327.9) | $7.80 \times 10^{-3}$ | $2.10 \times 10^{-3}$ | $1.61 \times 10^{-2}$ |
| Figure 21b (Re = 593.4) | $6.90 \times 10^{-3}$ | $3.10 \times 10^{-3}$ | $1.14 \times 10^{-2}$ |
| Figure 21c (Re = 845.2) | $5.70 \times 10^{-3}$ | $6.90 \times 10^{-3}$ | $1.48 \times 10^{-2}$ |
| Figure 21d (Re = 1164.5) | $1.04 \times 10^{-2}$ | $3.20 \times 10^{-3}$ | $1.67 \times 10^{-2}$ |
| Figure 21e (Re = 1641.2) | $1.31 \times 10^{-2}$ | $1.07 \times 10^{-2}$ | $2.11 \times 10^{-2}$ |

**Table 4 - Summary of average errors in the flow predictions in various turbulent flows**

| Test case | $E_{Volume}$ | $E_{Max}$ | $E_{Profile}$ |
|---|---|---|---|
| Figure 21f (Re = 28933.8) | $1.87 \times 10^{-2}$ | $2.04 \times 10^{-2}$ | $4.27 \times 10^{-2}$ |
| Figure 21g (Re = 36309.8) | $1.32 \times 10^{-2}$ | $1.10 \times 10^{-3}$ | $5.31 \times 10^{-2}$ |
| Figure 21h (Re = 42624.7) | $8.40 \times 10^{-3}$ | $9.10 \times 10^{-3}$ | $3.92 \times 10^{-2}$ |
| Figure 21i (Re = 48248.6) | $3.83 \times 10^{-2}$ | $1.77 \times 10^{-2}$ | $6.41 \times 10^{-2}$ |
| Figure 21j (Re = 53374.9) | $1.87 \times 10^{-2}$ | $1.93 \times 10^{-2}$ | $5.48 \times 10^{-2}$ |

Overall, the errors are larger than the static case. The prediction is shown to have the greatest error in the prediction of the shape of the flow profile, with a maximum error of 6.41% under turbulent flow condition. The errors in the prediction were found to generally increase with the Reynolds number with the average error in the order of 0.1% for the laminar flow and 1% for the turbulent flow. The results show that the method can measure rapid changes in flow with acceptable accuracy for the range of Reynolds number considered in this study.

*Experiment 3 - Effect of input parameter error on accuracy*

The operation of the method requires the estimation of a number of system and flow parameters and these are used as the inputs to the model. In real pipelines, the input parameters will often contain errors. This experiment looks at the effect of the errors in the input parameters on the accuracy of the method.

The sensitivity of the method to the accuracy of the input parameters was tested in a numerical pipeline system. The pipeline is 2000 m long and it is bounded by constant head reservoirs giving a head difference across the pipeline of 30 m. The pipe diameter is 0.3 m and a flow perturbation source is located at the middle of the system. Transient responses of the system are produced by a finely discretised Method of Characteristics (MOC) model which divides the pipe into 1000 reaches. The pressure response is measured at points located 700 m and 900 m from the upstream reservoir. The wave speed of the system is 1000 m/s. The flow perturbation is a flow pulse of a magnitude of 1.0 % of the steady base flow. The base flow has the Reynolds number of $7.3 \times 10^5$.

To investigate the sensitivity of the method, the following equation was used to determine the flow response at one of the pressure measurement points:

$$q_2 = h_1 \mathrm{csch}(\mu l_a)/Z_c - h_2 \mathrm{coth}(\mu l_a)/Z_c$$

The system parameters involved in this calculation are the pipe diameter (D), the pipe friction factor (f), the base flow (Q), the system wave speed (a) and the transducer spacing ($l_a$). The sensitivity of the method was studied by differentiating the equation above with respect to each of the input parameters. The values obtained from the differentiated equations indicate the significance of each input parameter. For a valid assessment, these values were normalised by the value of the input parameters and the results are summarised in Table 5.

**Table 5 - Summary of sensitivity analysis**

| Input parameter | Results |
| --- | --- |
| Pipe diameter, $D$ | $1.55 \times 10^{-4}$ |
| Friction factor, $f$ | $5.62 \times 10^{-6}$ |
| Base flow, $Q$ | $5.62 \times 10^{-6}$ |
| Transducer spacing, $l$ | $6.68 \times 10^{-2}$ |
| System wave speed, $a$ | $6.67 \times 10^{-2}$ |

The results show that the influence of the transducer spacing and the system wave speed was in the order of 2 to 4 times larger than other input parameters and the robustness of the equations against estimation errors in the pipe friction factor and the base flow through the system are evident.

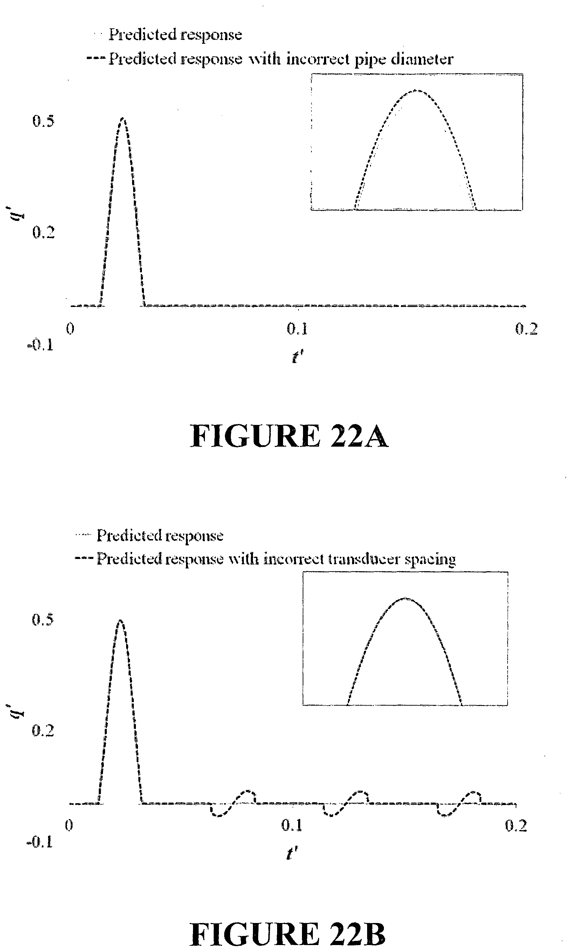

The predicted responses in the cases of the incorrect pipe diameter and transducer spacing are presented in Figures 22a and 22b respectively. The predicted response with correct input parameters is represented by the grey line and the broken line indicates the prediction with the incorrect input parameter. In each graph, the tip of the flow pulse is enlarged and presented in a separate window for easier comparison. The predicted flow response with incorrectly assumed input parameters is presented by the broken line while the grey line shows the predicted response with correctly assumed input parameters.

Figure 22a and 22b show that errors in the pipe diameter and the transducer spacing have a different impact on the predicted trace. The error in the pipe diameter led to a change in the characteristics of the pulse. It was found that the incorrect friction factor and the base flow also affect the pulse in a similar way. On the other hand, the error in the transducer spacing caused minimal change to the pulse characteristics, but instead, it gave rise to numerical contamination which repeats regularly for the rest of the response. The same phenomenon was observed in the case with the incorrect wave speed and further study found that the noise profile was identical for the same ratio of the transducer spacing to the wave speed.

The periodic nature of the noise points to the hyperbolic sine and cosine functions of the transfer matrix as the source of the contamination. The transfer matrix method simulates the transient behaviour by first decomposing the signal to a set of frequency components and then transfers them a given distance along the pipe and at a given wave speed in the form of hyperbolic sine and cosine waves. The system wave speed and the length of the pipe is central to the transfer matrix model and are used to characterise the fundamental behaviour of the pipe segment of interest. The mismatch between the true and estimated system characteristics is a result of the discrepancy between the observed travel time for a signal to go from one pressure transducer to another in the measured pressure traces and the travel time calculated from the input parameters, and it manifests itself as numerical contamination in the predicted flow response.

The relationship between the error in the travel time $\Delta t$ (= $L_T/a$, where $L_T$ is the transducer spacing) and the noise profile was investigated through two test scenarios. In the first scenario, noise profiles from two different travel times were compared. The two dimensionless travel times $\Delta t'(=\Delta t/T)$ were 0.05 and 0.075. In both cases, the travel time was estimated 1.0% greater than the correct value. The second scenario examined the effect of the varying error in the travel time on the noise profile. In this test, the correct dimensionless travel time was 0.05 and it was assumed incorrect by 0.5% (solid grey line), 1.0% (broken black line), 1.5% (broken grey line), 3.0% (dotted black line), 5.0% (solid black line) and 10.0% (dotted grey line) greater than the correct value.

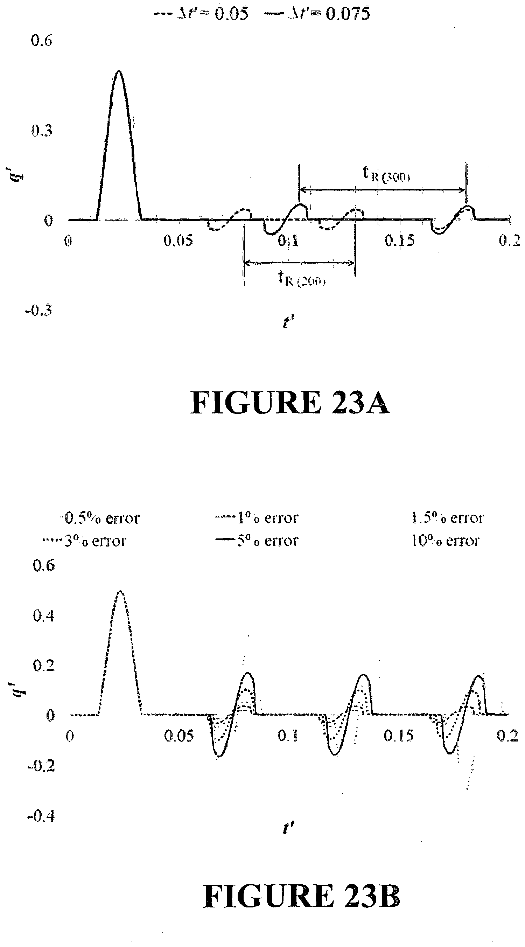

The results from the first scenario are presented in Figure 23a which shows the recurrence period of noise. The broken line represents the noise with the dimensionless travel time of 0.05 and the solid line represents the noise with the dimensionless travel time of 0.075. The minor x-axis grid having a width of 0.01 of dimensionless time was added to give a better idea of time scale. It is observed that, with the dimensionless travel time of 0.05, the noise repeats with a dominant recurrence period $t_R$ of 0.0505 which coincides with the estimated dimensionless travel time. When the dimensionless travel time was 0.075, the recurrence period was 0.07575 which agrees with the estimated dimensionless travel time of the pipe segment.

The influence of the error in the travel time on the noise profile is illustrated in Figure 23b which shows that the noise magnitude increases proportionally to the error in the travel time. Referring to that figure, the noise profiles when the travel time is estimated is 0.5% (solid grey line), 1.0% (broken black line), 1.5% (broken grey line), 3.0% (dotted black line), 5.0% (solid black line), and 10.0% (dotted grey line) greater than the correct value. The broken and solid lines indicate the case with the dimensionless travel time of 0.05 and 0.075 respectively. The results from the two sets of studies support the idea that the noise is related to disagreement in the estimated and actual travel times of the signal.

The error in the input parameters degrades the quality of flow predictions. The sensitivity analysis shows that the pipe diameter, transducer spacing and the system wave speed are key parameters for accurate flow predictions. In reality, however, the pipe diameter can be measured most accurately among other parameters and its measurement error is expected to be minimal. The quality of the predicted response therefore hinges on the accuracy of the estimated characteristic time of the pipe segment bounded by the pressure transducers. The impact of the noise becomes more problematic when dealing with continuous signals where the contamination will be superposed on the predict flow trace. Depending on the degree of error in the travel time, the correct transient trace might not be clearly visible.

The verification of the method was carried out using discrete pulse signals, commonly seen in the batch processing applications or fuel injection lines. For these signals, the parts of the flow predictions that are related to the real response can be clearly identified as they do not overlap with the part of the signal affected by the numerical contamination. The noise can therefore be removed from the response and does not affect the accuracy of the results.

**Example applications**

In a preferred embodiment, the method comprises (and the apparatus is arranged to) adjust the flow rate of the fluid through the pipe if the determined flow rate substantially differs from a desired or expected flow rate. For example, the processor may be coupled to control the pump speed and thereby the flow rate based on the determined flow rate.

The apparatus and method may be implemented in a wide range of industries. Examples of applications of the apparatus and method are described below.

Applications in automobile and airplane industries. The direct determination of the fuel quantity injected into motor engines in real time will allow more accurate control of the performance and efficiency of engines, where currently the amount of fuel used is only indirectly measured through the properties of the exhaust gases after combustion or through the amount of air consumed in the process. The small size and non-intrusive nature of piezoelectric transducers meant that the preferred embodiment apparatus could be physically incorporated in any engine without affecting flow behaviour.

Applications in monitoring/calibration of dynamic pumping/turbine systems. The accurate modelling of pumps and turbines require the relationship between the head and flow at the upstream and downstream faces of the device. These relationships are originally provided by manufacturers but without high speed in situ pressure and flow determination the devices may drift off calibration over time. The preferred embodiment technique will provide a cheap and real time assessments of the behaviour of turbo-machineries, allowing a more accurate prediction of their impact on overall system behaviour, as well as identifying faults with the device. The additional information may be used to determine an operational scheme to increase system efficiency and minimise potential damage.

Applications in chemical and pharmaceutical plants. In systems where the careful control of the quantity of fluids injected into a process is required, the application of the technique will allow direct determination of flow that is low cost, non intrusive and have a rapid response. The non-intrusive nature of the method means that the technique is ideally suited to processes involving corrosive fluids where other flow measurement techniques are unsuitable, or where any obstruction to the flow will result in unacceptable loss in product quality. The technique will also increase the efficiency in processes where the production rate has been intentionally slowed down to suit the monitoring speeds of existing flow meters.

Applications in fault monitoring in pipeline systems. Transient signals can be used for detecting leaks, blockages and air pockets within piping systems. Transient signals travel at high speeds, are sensitive to internal conditions of the pipeline and accumulates vast amount of information about the system during its travel. These properties make them ideally suited for condition monitoring for pipeline. However, the fault monitoring technique has been hampered by the inability to measure the transient flow in the system and the preferred embodiment real time flow determinant device will double the amount of information available for analysis (pressure and flow) and increase the accuracy of the technique.

Applications in biomedical areas. Accurate methods for measuring blood pressure signals currently exists and the preferred embodiment may combine with these methods to provide a real time non-intrusive measurement of blood flow-important in the monitoring the behaviour of artificial hearts, heart valves and arteries.

While specific components and parameters have been described, it will be appreciated that these could be varied will still working within the scope of the present invention.

By way of example, for determining the wave speed, instead of measuring the pressure or fluid at two locations, the pressure of fluid may measured at one location along a length of the pipe using a single sensor that is positioned on or in the pipe. In that arrangement, a generator is incorporated into the system for generating a transient wave that travels towards the sensor. There is no specific position of the generator for this arrangement to work, as long as the generator is positioned such that the generated transient is detectable by the sensor. The wave speed of the fluid is determined based on the pressure of fluid measured at that location.

Other example modifications are described in the 'Summary of Invention' section.

**Claims**

**1.** A method of determining a flow rate of a fluid flowing in a pipe, comprising:

generating a transient fluid wave using a generator, and measuring a pressure of the fluid wave at at least two locations in the pipe, the pressure being measured by sensors that are positioned on or in the pipe;
determining a wave speed of fluid based on the measured pressure of the fluid wave at the at least two locations in the pipe;

**characterized by**:

determining if a flow regime of fluid in the pipe comprises either a laminar or turbulent flow and comprises either a steady or unsteady flow; and
determining the flow rate of fluid based on the determined wave speed, on measured pressures of fluid at two locations in the pipe, and on the determined flow regime of fluid
wherein the determining if a flow regime of fluid in the pipe comprises either a laminar or turbulent flow and comprises either a steady or unsteady flow is based on at least a Reynolds number of the fluid, and determination of the flow rate of the fluid at the flow determination point in the pipe is further based on a resistance term R associated with the flow regime, which is selected

a) if it is determined that the flow regime is a laminar steady flow to fulfil the following equation (1):

$$(1)\ R_S = \frac{32\nu}{gAD^2}$$

where

$g$ = acceleration due to gravity,
u = kinematic viscosity,
$A$ = pipe cross-sectional area, and
$D$ = pipe diameter;

b) if it is determined that the flow regime is a turbulent steady flow to fulfil the following equation (2):

$$(2) \quad R_S = \frac{fQ}{gDA^2}$$

where

$g$ = acceleration due to gravity,
$f$ = friction factor,
$Q$ = time-averaged mean discharge,
$A$ = pipe cross-sectional area, and
$D$ = pipe diameter;

c) if it is determined that the laminar or turbulent flow regime is an unsteady flow regime, an additional resistance term $R_U$ defined by the following equation (3) is added to the resistance term Rs provided by equation (1) or (2):

$$(3) \quad R_U = \frac{4j\omega}{gA} \int_0^\infty e^{\left(-\frac{j\omega D^2}{4\nu}\tau\right)} W(t)\,d\tau$$

where

u = kinematic viscosity,
$g$ = acceleration due to gravity,
$A$ = pipe cross-sectional area,
$D$ = pipe diameter,

$$j = \sqrt{-1} \, ,$$

$\omega$ = angular frequency,
$W$ = weighting function, and

$\tau$ = dimensionless time ( $= \frac{4\nu}{D^2}(t - t^*)$ where $t^*$ is the time used in the convolution integral).

2. The method of claim 1, further comprising adjusting the flow rate of the fluid through the pipe if the determined flow rate substantially differs from an expected flow rate.

3. The method of claim 1 or 2, wherein the determined wave speed is used in the following equations for determining flow rate of fluid at a flow determination point in a pipe with no hydraulic elements:

$$\begin{pmatrix} h_2 \\ q_2 \end{pmatrix} = \begin{bmatrix} p_{a11} & p_{a12} \\ p_{a21} & p_{a22} \end{bmatrix} \begin{pmatrix} h_1 \\ q_1 \end{pmatrix},$$

$$\begin{pmatrix} h_3 \\ q_3 \end{pmatrix} = \begin{bmatrix} p_{b11} & p_{b12} \\ p_{b21} & p_{b22} \end{bmatrix} \begin{pmatrix} h_2 \\ q_2 \end{pmatrix}$$

where

$q_3$ = time-varying flow rate at the flow determination point,
$q_1$ = time-varying flow rate at the location of the first sensor,
$q_2$ = time-varying flow rate at the location of the second sensor,
$h_3$ = dimensionless time-varying pressure head at the flow determination point,
$h_1$ = dimensionless time-varying pressure head measured by a first sensor,
$h_2$ = dimensionless time-varying pressure head measured by a second sensor,
$p_{a11} = cosh(\mu l_a)$,
$p_{a12} = - Z_c sinh(\mu l_a)$,
$p_{b21} = - sinh(\mu l_b)/Z_c$,
$p_{b22} = cosh(\mu l_b)$,
$l_a$ = distance between sensors,
$l_b$ = distance between one of the sensors and the flow determination point,
$Z_c$ = a characteristic impedance of the pipe, and
$\mu$ = a propagation constant

wherein the characteristic impedance of the pipe $Z_c$ and the propagation constant $\mu$ are functions of the determined wave speed and of a resistance term associated with the flow regime through the pipe $R$.

4. The method of any one of claims 1 to 3, wherein the flow rate of the fluid at a flow determination point in the pipe with $n$ number of hydraulic element(s) between the locations at which pressure is measured for the flow rate determination and with $m$ number of hydraulic element(s) between the flow determination point and one of the locations at which pressure is measured for flow rate determination, where $n$ and $m$ are integers, is determined from the following equation:

$$\begin{pmatrix} h_2 \\ q_2 \end{pmatrix} = \begin{bmatrix} p_{a(n+1),11} & p_{a(n+1),12} \\ p_{a(n+1),21} & p_{a(n+1),22} \end{bmatrix} \begin{bmatrix} e_{an,11} & e_{an,12} \\ e_{an,21} & e_{an,22} \end{bmatrix} \begin{bmatrix} p_{an,11} & p_{an,12} \\ p_{an,21} & p_{an,22} \end{bmatrix} \cdots \begin{bmatrix} e_{a1,11} & e_{a1,12} \\ e_{a1,21} & e_{a1,22} \end{bmatrix} \begin{bmatrix} p_{a1,11} & p_{a1,12} \\ p_{a1,21} & p_{a1,22} \end{bmatrix} \begin{pmatrix} h_1 \\ q_1 \end{pmatrix}$$

$$\begin{pmatrix} h_3 \\ q_3 \end{pmatrix} = \begin{bmatrix} p_{b(m+1),11} & p_{b(m+1),12} \\ p_{b(m+1),21} & p_{b(m+1),22} \end{bmatrix} \begin{bmatrix} e_{bm,11} & e_{bm,12} \\ e_{bm,21} & e_{bm,22} \end{bmatrix} \begin{bmatrix} p_{bm,11} & p_{bm,12} \\ p_{bm,21} & p_{bm,22} \end{bmatrix} \cdots \begin{bmatrix} e_{b1,11} & e_{b1,12} \\ e_{b1,21} & e_{b1,22} \end{bmatrix} \begin{bmatrix} p_{b1,11} & p_{b1,12} \\ p_{b1,21} & p_{b1,22} \end{bmatrix} \begin{pmatrix} h_2 \\ q_2 \end{pmatrix}$$

where

$q_3$ = time-varying flow rate at the flow determination point,
$q_1$ = time-varying flow rate at the location of the first sensor,
$q_2$ = time-varying flow rate at the location of the second sensor,
$h_3$ = dimensionless time-varying pressure head at the flow determination point,
$h_1$ = dimensionless time-varying pressure head measured by a first sensor,
$h_2$ = dimensionless time-varying pressure head measured by a second sensor,
$p_{x,11} = cosh(\mu l_x)$,
$p_{x,12} = - Z_c sinh(\mu l_x)$,
$p_{x,21} = - sinh(\mu l_x)/Z_c$,
$p_{x,22} = cosh(\mu l_x)$,

$$\begin{bmatrix} e_{x,11} & e_{x,12} \\ e_{x,21} & e_{x,22} \end{bmatrix}$$

is the matrix expression E for the hydraulic element at x,
where x denotes pipe sections $a_1$, $a_s$, ..., $a_n$, and $b_1$, $b_2$, ..., $b_m$,
$l_x$ = length of pipe section $x$,
$Z_c$= a characteristic impedance of the pipe, and
$\mu$ = a propagation constant,

wherein the characteristic impedance of the pipe $Z_c$ and the propagation constant $\mu$ are functions of the determined wave speed and of a resistance term associated with the flow regime through the pipe $R$,
preferably wherein the matrix $E$ for a flow loss hydraulic element is given by:

$$E = \begin{bmatrix} e_{11} & e_{12} \\ e_{21} & e_{22} \end{bmatrix} = \begin{bmatrix} 1 & 0 \\ \Delta loss & 1 \end{bmatrix}$$

where $\Delta loss$ is a variable relating to the magnitude of flow loss, or preferably wherein the matrix $E$ for a head loss hydraulic element is given by

$$E = \begin{bmatrix} 1 & \Delta loss \\ 0 & 1 \end{bmatrix}$$

where $\Delta loss$ is a variable relating to the magnitude of head loss.

5. The method of claim 4, wherein the flow rate of the fluid at the flow determination point in the pipe with two hydraulic elements between the locations at which the pressure is measured and with one hydraulic element between the pressure determination point and one of the locations at which the pressure is measured is determined from the following equations:

$$\begin{pmatrix} h_2 \\ q_2 \end{pmatrix} = \begin{bmatrix} p_{a3,11} & p_{a3,12} \\ p_{a3,21} & p_{a3,22} \end{bmatrix}\begin{bmatrix} e_{a2,11} & e_{a2,12} \\ e_{a2,21} & e_{a2,22} \end{bmatrix}\begin{bmatrix} p_{a2,11} & p_{a2,12} \\ p_{a2,21} & p_{a2,22} \end{bmatrix}\begin{bmatrix} e_{a1,11} & e_{a1,12} \\ e_{a1,21} & e_{a1,22} \end{bmatrix}\begin{bmatrix} p_{a1,11} & p_{a1,12} \\ p_{a1,21} & p_{a1,22} \end{bmatrix}\begin{pmatrix} h_1 \\ q_1 \end{pmatrix}$$

$$\begin{pmatrix} h_3 \\ q_3 \end{pmatrix} = \begin{bmatrix} p_{b2,11} & p_{b2,12} \\ p_{b2,21} & p_{b2,22} \end{bmatrix}\begin{bmatrix} e_{b11} & e_{b12} \\ e_{b21} & e_{b22} \end{bmatrix}\begin{bmatrix} p_{b1,11} & p_{b1,12} \\ p_{b1,21} & p_{b1,22} \end{bmatrix}\begin{pmatrix} h_2 \\ q_2 \end{pmatrix}.$$

6. The method of claim 4, wherein the flow rate of the fluid at the flow determination point with one hydraulic element between the locations at which the pressure is measured and with one hydraulic element between the flow determination point and one of the locations at which the pressure is measured is determined from the following equation:

$$\begin{pmatrix} h_2 \\ q_2 \end{pmatrix} = \begin{bmatrix} p_{a2,11} & p_{a2,12} \\ p_{a2,21} & p_{a2,22} \end{bmatrix}\begin{bmatrix} e_{a11} & e_{a12} \\ e_{a21} & e_{a22} \end{bmatrix}\begin{bmatrix} p_{a1,11} & p_{a1,12} \\ p_{a1,21} & p_{a1,22} \end{bmatrix}\begin{pmatrix} h_1 \\ q_1 \end{pmatrix}$$

$$\begin{pmatrix} h_3 \\ q_3 \end{pmatrix} = \begin{bmatrix} p_{b2,11} & p_{b2,12} \\ p_{b2,21} & p_{b2,22} \end{bmatrix}\begin{bmatrix} e_{b11} & e_{b12} \\ e_{b21} & e_{b22} \end{bmatrix}\begin{bmatrix} p_{b1,11} & p_{b1,12} \\ p_{b1,21} & p_{b1,22} \end{bmatrix}\begin{pmatrix} h_2 \\ q_2 \end{pmatrix},$$

preferably wherein the flow rate at the flow determination point can be determined from the following equation:

$$q_3 = \left(\frac{u_{b22}}{u_{a12}}\right)\Delta h + \left(\frac{u_{b21}u_{a12}}{u_{a12}} + \frac{u_{b22}u_{a11}}{u_{a12}} - \frac{u_{b22}}{u_{a12}}\right)h_2$$

where

$$u_a = \begin{bmatrix} p_{a2,11} & p_{a2,12} \\ p_{a2,21} & p_{a2,22} \end{bmatrix}\begin{bmatrix} e_{a11} & e_{a12} \\ e_{a21} & e_{a22} \end{bmatrix}\begin{bmatrix} p_{a1,11} & p_{a1,12} \\ p_{a1,21} & p_{a1,22} \end{bmatrix}$$

$$u_b = \begin{bmatrix} p_{b2,11} & p_{b2,12} \\ p_{b2,21} & p_{b2,22} \end{bmatrix}\begin{bmatrix} e_{b11} & e_{b12} \\ e_{b21} & e_{b22} \end{bmatrix}\begin{bmatrix} p_{b1,11} & p_{b1,12} \\ p_{b1,21} & p_{b1,22} \end{bmatrix}$$

$$u_{a11} = \cosh(\mu_{a2}l_{a2})\cosh(\mu_{a1}l_{a1}) + \left(\left(-\frac{2\Delta H_0}{Q_0}\right)\cosh(\mu_{a2}l_{a2}) - Z_{ca2}\sinh(\mu_{a2}l_{a2})\right)\left(-\frac{1}{Z_{ca1}}\sinh(\mu_{a1}l_{a1})\right)$$

$$u_{a12} = \cosh(\mu_{a2}l_{a2})(-Z_{ca1}\sinh(\mu_{a1}l_{a1})) + \left(\left(-\frac{2\Delta H_0}{Q_0}\right)\cosh(\mu_{a2}l_{a2}) - Z_{ca2}\sinh(\mu_{a2}l_{a2})\right)\cosh(\mu_{a1}l_{a1})$$

$$u_{b21} = \left(-\frac{1}{Z_{cb2}}\sinh(\mu_{b2}l_{b2})\right)\cosh(\mu_{b1}l_{b1}) + \left(\left(\frac{2\Delta H_0}{Z_{cb2}Q_0}\right)\sinh(\mu_{b2}l_{b2}) + \cosh(\mu_{b2}l_{b2})\right)\left(-\frac{1}{Z_{cb1}}\sinh(\mu_{b1}l_{b1})\right)$$

$$u_{b22} = \left(-\frac{1}{Z_{cb2}}\sinh(\mu_{b2}l_{b2})\right)(-Z_{cb1}\sinh(\mu_{b1}l_{b1})) + \left(\left(\frac{2\Delta H_0}{Z_{cb2}Q_0}\right)\sinh(\mu_{b2}l_{b2}) + \cosh(\mu_{b2}l_{b2})\right)\cosh(\mu_{b1}l_{b1})$$

$$\Delta h = h_2 - h_1,$$

$h_3$ = dimensionless time-varying pressure head at the flow determination point,
$h_1$ = dimensionless time-varying pressure head measured by a first sensor,
$h_2$ = dimensionless time-varying pressure head measured by a second sensor,
$l_{a1}$ = distance between a first transducer and a first hydraulic element,
$l_{a2}$ = distance between a second transducer and the first hydraulic element,
$l_{b1}$ = distance between the second transducer and a second hydraulic element,
$l_{b2}$ = distance between the second hydraulic element and the flow determination point,
$Z_{cx}$ = the characteristic impedance for pipe section $x$,
$\mu_x$ = the propagation constant for pipe section $x$,
where $x$ denotes pipe sections $a_1$, $a_2$, and $b_1$, $b_2$
$Q_0$ = time-averaged mean discharge,
$H_0$ = time-averaged mean pressure head, and
$q_3$ = time-varying flow rate at the flow determination point.

7. The method of any one of claims 1 to 6, further comprising determining a type of pipe through which the fluid flows and the flow rate of the fluid at the flow determination point based on at least the determined fluid wave speed and characteristics of the type of pipe which include the characteristic impedance of the pipe $Z_c$ and the propagation constant $\mu$.

8. The method of any one of claims 1 to 7, further comprising:

determining a first set of signal characteristics relating to a determined flow rate of the fluid between a first pair of sensors,
determining a second set of signal characteristics relating to a determined flow rate of fluid between a second pair of sensors, and
comparing the determined first and second sets of signal characteristics to correct for any errors in the flow rate of the fluid,
wherein either the first pair of sensors and the second pair of sensors include a common sensor, or the sensors of the first pair of sensors are different from the sensors of the second pair of sensors; and preferably wherein the determined signal characteristics for the first and second set include phase and magnitude values relating to the flow rate.

9. An apparatus for determining a flow rate of a fluid flowing in a pipe, comprising:

a generator for generating a transient fluid wave;
at least two sensors for positioning on or in the pipe to measure a pressure of the fluid wave at at least two locations in the pipe; and
a processor coupled to the sensors, the processor being adapted to
determine a fluid wave speed based on the measured pressure of the fluid wave at the at least two locations in the pipe,
**characterized by**:
the processor further being adapted to determine the flow rate of fluid based on the determined wave speed, on measured pressures at two locations in the pipe, and on a determined flow regime of fluid, wherein the flow regime of fluid comprises either a laminar or turbulent flow and comprises either a steady or unsteady flow, wherein the processor is adapted to determine whether flow regime of fluid in the pipe comprises either a laminar or turbulent flow and comprises either a steady or unsteady flow based on at least a Reynolds number of the fluid, and wherein the processor is adapted to determine the flow rate of fluid in the pipe further based on a resistance term $R$ associated with the flow regime, which is selected

a) if it is determined that the flow regime is a laminar steady flow to fulfil the following equation (1):

$$(1) \quad R_S = \frac{32v}{gAD^2}$$

where

$g$ = acceleration due to gravity,
u = kinematic viscosity,
$A$ = pipe cross-sectional area, and
$D$ = pipe diameter;

b) if it is determined that the flow regime is a turbulent steady flow to fulfil the following equation (2):

$$(2) \quad R_S = \frac{fQ}{gDA^2}$$

where

$g$ = acceleration due to gravity,
$f$ = friction factor,
$Q$ = time-averaged mean discharge,
$A$ = pipe cross-sectional area, and
$D$ = pipe diameter;

c) if it is determined that the laminar or turbulent flow regime is an unsteady flow regime, an additional resistance term $R_U$ defined by the following equation (3) is added to the resistance term $R_S$ provided by equation (1) or (2):

$$(3) \quad R_U = \frac{4j\omega}{gA} \int_0^\infty e^{\left(-\frac{j\omega D^2}{4\nu}\tau\right)} W(t)\,d\tau$$

where

u = kinematic viscosity,
$g$ = acceleration due to gravity,
$A$ = pipe cross-sectional area,
$D$ = pipe diameter,

$$j = \sqrt{-1}\,,$$

$\omega$ = angular frequency,
$W$ = weighting function, and

$\tau$ = dimensionless time ( $= \frac{4\nu}{D^2}(t - t^*)$ where $t^*$ is the time used in the convolution integral).

10. The apparatus of claim 9, wherein the apparatus is arranged to adjust the flow rate of the fluid through the pipe if the determined flow rate substantially differs from an expected flow rate.

11. The apparatus of claim 9 or 10, wherein the processor is adapted to use the determined wave speed in the following equations for determining flow rate of fluid at a flow determination point in a pipe with no hydraulic elements:

$$\begin{pmatrix} h_2 \\ q_2 \end{pmatrix} = \begin{bmatrix} p_{a11} & p_{a12} \\ p_{a21} & p_{a22} \end{bmatrix} \begin{pmatrix} h_1 \\ q_1 \end{pmatrix},$$

$$\begin{pmatrix} h_3 \\ q_3 \end{pmatrix} = \begin{bmatrix} p_{b11} & p_{b12} \\ p_{b21} & p_{b22} \end{bmatrix} \begin{pmatrix} h_2 \\ q_2 \end{pmatrix}$$

where

$q_3$ = time-varying flow rate at the flow determination point,
$q_1$ = time-varying flow rate at the location of the first sensor,
$q_2$ = time-varying flow rate at the location of the second sensor,
$h_3$ = dimensionless time-varying pressure head at a flow determination point,
$h_1$ = dimensionless time-varying pressure head measured by a first sensor,
$h_2$ = dimensionless time-varying pressure head measured by a second sensor,
$p_{a11} = cosh(\mu l_a)$,
$p_{a12} = - Z_c sinh(\mu l_a)$,
$p_{b21} = - sinh(\mu l_b)/Z_c$,
$p_{b22} = cosh(\mu l_b)$,
$l_a$ = distance between sensors,
$l_b$ = distance between one of the sensors and the flow determination point, and
$Z_c$ = a characteristic impedance of the pipe, and
$\mu$ = a propagation constant.

**12.** The apparatus of claim 9 or 10, wherein the processor is adapted to determine the flow rate of the fluid at a flow determination point in the pipe with $n$ number of hydraulic element(s) between the locations at which pressure is measured for the flow rate determination and with $m$ number of hydraulic element(s) between the flow determination point and one of the locations at which pressure is measured for flow rate determination, where $n$ and $m$ are integers, is determined from the following equation:

$$\begin{pmatrix} h_2 \\ q_2 \end{pmatrix} = \begin{bmatrix} p_{a(n+1),11} & p_{a(n+1),12} \\ p_{a(n+1),21} & p_{a(n+1),22} \end{bmatrix} \begin{bmatrix} e_{an,11} & e_{an,12} \\ e_{an,21} & e_{an,22} \end{bmatrix} \begin{bmatrix} p_{an,11} & p_{an,12} \\ p_{an,21} & p_{an,22} \end{bmatrix} \cdots \begin{bmatrix} e_{a1,11} & e_{a1,12} \\ e_{a1,21} & e_{a1,22} \end{bmatrix} \begin{bmatrix} p_{a1,11} & p_{a1,12} \\ p_{a1,21} & p_{a1,22} \end{bmatrix} \begin{pmatrix} h_1 \\ q_1 \end{pmatrix}$$

$$\begin{pmatrix} h_3 \\ q_3 \end{pmatrix} = \begin{bmatrix} p_{b(m+1),11} & p_{b(m+1),12} \\ p_{b(m+1),21} & p_{b(m+1),22} \end{bmatrix} \begin{bmatrix} e_{bm,11} & e_{bm,12} \\ e_{bm,21} & e_{bm,22} \end{bmatrix} \begin{bmatrix} p_{bm,11} & p_{bm,12} \\ p_{bm,21} & p_{bm,22} \end{bmatrix} \cdots \begin{bmatrix} e_{b1,11} & e_{b1,12} \\ e_{b1,21} & e_{b1,22} \end{bmatrix} \begin{bmatrix} p_{b1,11} & p_{b1,12} \\ p_{b1,21} & p_{b1,22} \end{bmatrix} \begin{pmatrix} h_2 \\ q_2 \end{pmatrix}$$

where

$q_3$ = time-varying flow rate at the flow determination point,
$q_1$ = time-varying flow rate at the location of the first sensor,
$q_2$ = time-varying flow rate at the location of the second sensor,
$h_3$ = dimensionless time-varying pressure head at the flow determination point,
$h_1$ = dimensionless time-varying pressure head measured by a first sensor,
$h_2$ = dimensionless time-varying pressure head measured by a second sensor,
$p_{x,11} = cosh(\mu l x)$,
$p_{x,12} = - Z_c sinh(\mu l_x)$,
$p_{x,21} = - sinh(\mu l_x)/Z_c$,
$p_{x,22} = cosh(\mu l_x)$,

$$\begin{bmatrix} e_{x,11} & e_{x,12} \\ e_{x,21} & e_{x,22} \end{bmatrix}$$

is the matrix expression E for the hydraulic element at $x$,
where $x$ denotes pipe sections $a_1$, $a_2$, ..., $a_n$, and $b_1$, $b_2$, ..., $b_m$
$l_x$ = length of pipe section $x$,
$Z_c$ = the characteristic impedance of the pipe, and
$\mu$ = the propagation constant, preferably wherein the matrix $E$ for a flow loss hydraulic element is given by:

$$E = \begin{bmatrix} e_{11} & e_{12} \\ e_{21} & e_{22} \end{bmatrix} = \begin{bmatrix} 1 & 0 \\ \Delta loss & 1 \end{bmatrix}$$

where $\Delta loss$ is a variable relating to the magnitude of flow loss, or preferably wherein the matrix $E$ for a head loss hydraulic element is given by

$$E = \begin{bmatrix} 1 & \Delta loss \\ 0 & 1 \end{bmatrix}$$

where $\Delta loss$ is a variable related to the magnitude of head loss.

**13.** The apparatus of claim 12, wherein the processor is adapted to determine the flow rate of the fluid at the flow determination point in the pipe with two hydraulic elements between the locations at which the pressure is measured and with one hydraulic element between the flow determination point and one of the locations at which the pressure is measured f from the following equation:

$$\begin{pmatrix} h_2 \\ q_2 \end{pmatrix} = \begin{bmatrix} p_{a3,11} & p_{a3,12} \\ p_{a3,21} & p_{a3,22} \end{bmatrix} \begin{bmatrix} e_{a2,11} & e_{a2,12} \\ e_{a2,21} & e_{a2,22} \end{bmatrix} \begin{bmatrix} p_{a2,11} & p_{a2,12} \\ p_{a2,21} & p_{a2,22} \end{bmatrix} \begin{bmatrix} e_{a1,11} & e_{a1,12} \\ e_{a1,21} & e_{a1,22} \end{bmatrix} \begin{bmatrix} p_{a1,11} & p_{a1,12} \\ p_{a1,21} & p_{a1,22} \end{bmatrix} \begin{pmatrix} h_1 \\ q_1 \end{pmatrix}$$

$$\begin{pmatrix} h_3 \\ q_3 \end{pmatrix} = \begin{bmatrix} p_{b2,11} & p_{b2,12} \\ p_{b2,21} & p_{b2,22} \end{bmatrix} \begin{bmatrix} e_{b11} & e_{b12} \\ e_{b21} & e_{b22} \end{bmatrix} \begin{bmatrix} p_{b1,11} & p_{b1,12} \\ p_{b1,21} & p_{b1,22} \end{bmatrix} \begin{pmatrix} h_2 \\ q_2 \end{pmatrix}.$$

14. The apparatus of claim 12, wherein the processor is adapted to determine the flow rate of the fluid at the flow determination point in the pipe with one hydraulic element between the locations at which the pressure is measured and with one hydraulic element between the flow determination point and one of the locations at which the pressure is measured from the following equation:

$$\begin{pmatrix} h_2 \\ q_2 \end{pmatrix} = \begin{bmatrix} p_{a2,11} & p_{a2,12} \\ p_{a2,21} & p_{a2,22} \end{bmatrix} \begin{bmatrix} e_{a11} & e_{a12} \\ e_{a21} & e_{a22} \end{bmatrix} \begin{bmatrix} p_{a1,11} & p_{a1,12} \\ p_{a1,21} & p_{a1,22} \end{bmatrix} \begin{pmatrix} h_1 \\ q_1 \end{pmatrix}$$

$$\begin{pmatrix} h_3 \\ q_3 \end{pmatrix} = \begin{bmatrix} p_{b2,11} & p_{b2,12} \\ p_{b2,21} & p_{b2,22} \end{bmatrix} \begin{bmatrix} e_{b11} & e_{b12} \\ e_{b21} & e_{b22} \end{bmatrix} \begin{bmatrix} p_{b1,11} & p_{b1,12} \\ p_{b1,21} & p_{b1,22} \end{bmatrix} \begin{pmatrix} h_2 \\ q_2 \end{pmatrix},$$

preferably wherein the processor is adapted to determine the flow rate at the flow determination point using the following equation:

$$q_3 = \left( \frac{u_{b22}}{u_{a12}} \right) \Delta h + \left( \frac{u_{b21} u_{a12}}{u_{a12}} + \frac{u_{b22} u_{a11}}{u_{a12}} - \frac{u_{b22}}{u_{a12}} \right) h_2$$

where

$$u_a = \begin{bmatrix} p_{a2,11} & p_{a2,12} \\ p_{a2,21} & p_{a2,22} \end{bmatrix} \begin{bmatrix} e_{a11} & e_{a12} \\ e_{a21} & e_{a22} \end{bmatrix} \begin{bmatrix} p_{a1,11} & p_{a1,12} \\ p_{a1,21} & p_{a1,22} \end{bmatrix}$$

$$u_b = \begin{bmatrix} p_{b2,11} & p_{b2,12} \\ p_{b2,21} & p_{b2,22} \end{bmatrix} \begin{bmatrix} e_{b11} & e_{b12} \\ e_{b21} & e_{b22} \end{bmatrix} \begin{bmatrix} p_{b1,11} & p_{b1,12} \\ p_{b1,21} & p_{b1,22} \end{bmatrix}$$

$$u_{a11} = \cosh(\mu_{a2} l_{a2}) \cosh(\mu_{a1} l_{a1}) + \left( \left( -\frac{2\Delta H_0}{Q_0} \right) \cosh(\mu_{a2} l_{a2}) - Z_{ca2} \sinh(\mu_{a2} l_{a2}) \right) \left( -\frac{1}{Z_{ca1}} \sinh(\mu_{a1} l_{a1}) \right)$$

$$u_{a12} = \cosh(\mu_{a2} l_{a2})(-Z_{ca1} \sinh(\mu_{a1} l_{a1})) + \left( \left( -\frac{2\Delta H_0}{Q_0} \right) \cosh(\mu_{a2} l_{a2}) - Z_{ca2} \sinh(\mu_{a2} l_{a2}) \right) \cosh(\mu_{a1} l_{a1})$$

$$u_{b21} = \left(-\frac{1}{Z_{cb2}}\sinh(\mu_{b2}l_{b2})\right)\cosh(\mu_{b1}l_{b1}) + \left(\left(\frac{2\Delta H_0}{Z_{cb2}Q_0}\right)\sinh(\mu_{b2}l_{b2}) + \cosh(\mu_{b2}l_{b2})\right)\left(-\frac{1}{Z_{cb1}}\sinh(\mu_{b1}l_{b1})\right)$$

$$u_{b22} = \left(-\frac{1}{Z_{cb2}}\sinh(\mu_{b2}l_{b2})\right)\left(-Z_{cb1}\sinh(\mu_{b1}l_{b1})\right) + \left(\left(\frac{2\Delta H_0}{Z_{cb2}Q_0}\right)\sinh(\mu_{b2}l_{b2}) + \cosh(\mu_{b2}l_{b2})\right)\cosh(\mu_{b1}l_{b1})$$

$$\Delta h = h_2 - h_1,$$

$h_3$ = dimensionless time-varying pressure head at a flow determination point,
$h_1$ = dimensionless time-varying pressure head measured by a first sensor,
$h_2$ = dimensionless time-varying pressure head measured by a second sensor,
$l_{a1}$ = distance between a first transducer and a first hydraulic element,
$l_{a2}$ = distance between a second transducer and the first hydraulic element,
$l_{b1}$ = distance between the second transducer and a second hydraulic element,
$l_{b2}$ = distance between the second hydraulic element and the flow determination point,
$Z_{cx}$ = the characteristic impedance for pipe section $x$,
$\mu_x$ = the propagation constant for pipe section $x$,
where $x$ denotes pipe sections $a_1$, $a_2$, and $b_1$, $b_2$
$Q_0$ = time-averaged mean discharge,
$H_0$ = time-averaged mean pressure head,
$q_3$ = time-varying flow rate at the flow determination point.

**Patentansprüche**

1. Verfahren zum Bestimmen einer Durchflussrate eines in einem Rohr strömenden Fluids, umfassend:

Erzeugen einer Fluidwanderwelle unter Verwendung eines Generators und Messen eines Drucks der Fluidwelle an wenigstens zwei Stellen im Rohr, wobei der Druck von Sensoren gemessen wird, die auf dem oder im Rohr angeordnet sind;
Bestimmen einer Wellengeschwindigkeit des Fluids auf der Basis des gemessenen Drucks der Fluidwelle an den wenigstens zwei Stellen im Rohr;
**gekennzeichnet durch:**

Bestimmen, ob eine Strömungsart von Fluid im Rohr entweder eine laminaren oder eine turbulente Strömung umfasst und entweder eine stetige oder unstetige Strömung umfasst; und
Bestimmen der Durchflussrate auf der Basis der bestimmten Wellengeschwindigkeit, der gemessenen Drücke von Fluid an zwei Stellen im Rohr und der bestimmten Strömungsart von Fluid,
wobei das Bestimmen, ob eine Strömungsart von Fluid im Rohr entweder eine laminare oder eine turbulente Strömung umfasst und entweder eine stetige oder unstetige Strömung umfasst, auf wenigstens einer Reynoldzahl des Fluids basiert, und das Bestimmen der Durchflussrate des Fluids am Strömungsbestimmungspunkt im Rohr ferner auf einem mit der Strömungsart verknüpften Widerstandsterm R basiert, der ausgewählt wird

a) wenn bestimmt wird, dass die Strömungsart eine laminare, stetige Strömung ist, um die folgende Gleichung (1) zu erfüllen:

$$R_S = \frac{32v}{gAD^2}$$

(1)

wobei

*g* = Beschleunigung aufgrund der Schwerkraft,
U = kinematische Viskosität,
*A* = Rohr-Querschnittsfläche, und
*D* = Rohrdurchmesser;

b) wenn bestimmt wird, dass die Strömungsart eine turbulente, stetige Strömung ist, um die folgende Gleichung (2) zu erfüllen:

$$(2) \quad R_S = \frac{fQ}{gDA^2}$$

wobei

*g* = Beschleunigung aufgrund der Schwerkraft,
*f* = Reibungsfaktor,
*Q* = zeitlich gemittelter mittlerer Abfluss,
*A* = Rohr-Querschnittsfläche, und
*D* = Rohrdurchmesser;

c) wenn bestimmt wird, dass die laminare oder turbulente Strömungsart eine unstetige Strömungsart ist, ein zusätzlicher Widerstandsterm $R_U$, definiert durch die folgende Gleichung (3), zum von Gleichung (1) oder (2) gelieferten Widerstandsterm $R_S$ hinzugefügt wird:

$$(3) \quad R_U = \frac{4j\omega}{gA} \int_0^\infty e^{\left(-\frac{j\omega D^2}{4\nu}\tau\right)} W(t) d\tau$$

wobei

U = kinematische Viskosität,
*g* = Beschleunigung aufgrund der Schwerkraft,
*A* = Rohr-Querschnittsfläche,
*D* = Rohrdurchmesser,

$$j = \sqrt{-1} \, ,$$

$\omega$ = Winkelfrequenz,
*W* = Wichtungsfunktion, und

$\tau$ = dimensionslose Zeit ($= \frac{4\nu}{D^2}(t - t^*)$ wobei *t\** die im Faltungsintegral verwendete Zeit ist).

2. Verfahren nach Anspruch 1, ferner umfassend das Anpassen der Durchflussrate des Fluids durch das Rohr, wenn die bestimmte Durchflussrate wesentlich von einer erwarteten Durchflussrate abweicht.

3. Verfahren nach Anspruch 1 oder 2, wobei die bestimmte Wellengeschwindigkeit in den folgenden Gleichungen zum Bestimmen der Durchflussrate von Fluid an einem Strömungsbestimmungspunkt in einem Rohr ohne hydraulische Elemente verwendet wird:

$$\begin{pmatrix} h_2 \\ q_2 \end{pmatrix} = \begin{bmatrix} p_{a11} & p_{a12} \\ p_{a21} & p_{a22} \end{bmatrix} \begin{pmatrix} h_1 \\ q_1 \end{pmatrix} ,$$

$$\begin{pmatrix} h_3 \\ q_3 \end{pmatrix} = \begin{bmatrix} p_{b11} & p_{b12} \\ p_{b21} & p_{b22} \end{bmatrix} \begin{pmatrix} h_2 \\ q_2 \end{pmatrix}$$

wobei

$q_3$ = zeitveränderliche Durchflussrate am Strömungsbestimmungspunkt,

$q_1$ = zeitveränderliche Durchflussrate an der Position des ersten Sensors,

$q_2$ = zeitveränderliche Durchflussrate an der Position des zweiten Sensors,

$h_3$ = dimensionslose zeitveränderliche Druckhöhe am Strömungsbestimmungspunkt,

$h_1$ = von einem ersten Sensor gemessene dimensionslose zeitveränderliche Druckhöhe,

$h_2$ = von einem zweiten Sensor gemessene dimensionslose zeitveränderliche Druckhöhe,

$p_{a11}$ = $cosh(\mu l_a)$,

$p_{a12}$ = $- Z_c sinh(\mu l_a)$,

$p_{b21}$ = $- sinh(\mu l_b)/Z_c$,

$p_{b22}$ = $cosh(\mu l_b)$,

$l_a$ = Abstand zwischen Sensoren,

$l_b$ = Abstand zwischen einem der Sensoren und dem Strömungsbestimmungspunkt,

$Z_c$ = eine charakteristische Impedanz des Rohrs, und

$\mu$ = eine Ausbreitungskonstante

wobei die charakteristische Impedanz des Rohrs $Z_c$ und die Ausbreitungskonstante $\mu$ Funktionen der bestimmten Wellengeschwindigkeit und eines mit der Strömungsart durch das Rohr verknüpften Widerstandsterms $R$ sind.

4. Verfahren nach einem der Ansprüche 1 bis 3, wobei die Durchflussrate des Fluids an einem Strömungsbestimmungspunkt im Rohr mit einer Zahl $n$ von hydraulischen Elementen zwischen den Stellen, an denen Druck zur Durchflussraten-Bestimmung gemessen wird, und mit einer Zahl $m$ von hydraulischen Elementen zwischen dem Strömungsbestimmungspunkt und einer der Stellen, an denen Druck zur Durchflussraten-Bestimmung gemessen wird, wobei $n$ und $m$ Ganzzahlen sind, mit der folgenden Gleichung bestimmt wird:

$$\begin{pmatrix} h_2 \\ q_2 \end{pmatrix} = \begin{bmatrix} p_{a(n+1),11} & p_{a(n+1),12} \\ p_{a(n+1),21} & p_{a(n+1),22} \end{bmatrix} \begin{bmatrix} e_{an,11} & e_{an,12} \\ e_{an,21} & e_{an,22} \end{bmatrix} \begin{bmatrix} p_{an,11} & p_{an,12} \\ p_{an,21} & p_{an,22} \end{bmatrix} ... \begin{bmatrix} e_{a1,11} & e_{a1,12} \\ e_{a1,21} & e_{a1,22} \end{bmatrix} \begin{bmatrix} p_{a1,11} & p_{a1,12} \\ p_{a1,21} & p_{a1,22} \end{bmatrix} \begin{pmatrix} h_1 \\ q_1 \end{pmatrix}$$

$$\begin{pmatrix} h_3 \\ q_3 \end{pmatrix} = \begin{bmatrix} p_{b(m+1),11} & p_{b(m+1),12} \\ p_{b(m+1),21} & p_{b(m+1),22} \end{bmatrix} \begin{bmatrix} e_{bm,11} & e_{bm,12} \\ e_{bm,21} & e_{bm,22} \end{bmatrix} \begin{bmatrix} p_{bm,11} & p_{bm,12} \\ p_{bm,21} & p_{bm,22} \end{bmatrix} ... \begin{bmatrix} e_{b1,11} & e_{b1,12} \\ e_{b1,21} & e_{b1,22} \end{bmatrix} \begin{bmatrix} p_{b1,11} & p_{b1,12} \\ p_{b1,21} & p_{b1,22} \end{bmatrix} \begin{pmatrix} h_2 \\ q_2 \end{pmatrix}$$

wobei

$q_3$ = zeitveränderliche Durchflussrate am Strömungsbestimmungspunkt,

$q_1$ = zeitveränderliche Durchflussrate an der Position des ersten Sensors,

$q_2$ = zeitveränderliche Durchflussrate an der Position des zweiten Sensors,

$h_3$ = dimensionslose zeitveränderliche Druckhöhe am Strömungsbestimmungspunkt,

$h_1$ = von einem ersten Sensor gemessene dimensionslose zeitveränderliche Druckhöhe,

$h_2$ = von einem zweiten Sensor gemessene dimensionslose zeitveränderliche Druckhöhe,

$p_{x,11}$ = $cosh(\mu l_x)$,

$p_{x,12}$ = $- Z_c sinh(\mu l_x)$,

$p_{x,21}$ = $- sinh(\mu l_x)/Z_c$,

$p_{x,22}$ = $cosh(\mu l_x)$,

$$\begin{bmatrix} e_{x,11} & e_{x,12} \\ e_{x,21} & e_{x,22} \end{bmatrix}$$

der Matrixausdruck E für das hydraulische Element bei x ist,
wobei x Rohrabschnitte $a_1, a_s, ..., a_n$ und $b_1, b_2, ..., b_m$ bezeichnet,
$l_x$ = Länge von Rohrabschnitt $x$,
$Z_c$ = eine charakteristische Impedanz des Rohrs, und
$\mu$ = eine Ausbreitungskonstante,

wobei die charakteristische Impedanz des Rohrs $Z_c$ und die Ausbreitungskonstante $\mu$ Funktionen der bestimmten Wellengeschwindigkeit und eines mit der Strömungsart durch das Rohr verknüpften Widerstandsterms $R$ sind, wobei vorzugsweise die Matrix $E$ für ein hydraulisches Strömungsverlustelement gegeben ist durch:

$$E = \begin{bmatrix} e_{11} & e_{12} \\ e_{21} & e_{22} \end{bmatrix} = \begin{bmatrix} 1 & 0 \\ \Delta loss & 1 \end{bmatrix}$$

wobei $\Delta loss$ eine Variable in Bezug auf die Größe des Strömungsverlusts ist, oder wobei vorzugsweise die Matrix $E$ für ein hydraulisches Druckverlustelement gegeben ist durch

$$E = \begin{bmatrix} 1 & \Delta loss \\ 0 & 1 \end{bmatrix}$$

wobei $\Delta loss$ eine Variable in Bezug auf die Größe des Druckverlusts ist.

5. Verfahren nach Anspruch 4, wobei die Durchflussrate des Fluids am Strömungsbestimmungspunkt im Rohr mit zwei hydraulischen Elementen zwischen den Stellen, an denen der Druck gemessen wird, und mit einem hydraulischen Element zwischen dem Druckbestimmungspunkt und einer der Stellen, an denen der Druck gemessen wird, mit den folgenden Gleichungen bestimmt wird:

$$\begin{pmatrix} h_2 \\ q_2 \end{pmatrix} = \begin{bmatrix} p_{a3,11} & p_{a3,12} \\ p_{a3,21} & p_{a3,22} \end{bmatrix} \begin{bmatrix} e_{a2,11} & e_{a2,12} \\ e_{a2,21} & e_{a2,22} \end{bmatrix} \begin{bmatrix} p_{a2,11} & p_{a2,12} \\ p_{a2,21} & p_{a2,22} \end{bmatrix} \begin{bmatrix} e_{a1,11} & e_{a1,12} \\ e_{a1,21} & e_{a1,22} \end{bmatrix} \begin{bmatrix} p_{a1,11} & p_{a1,12} \\ p_{a1,21} & p_{a1,22} \end{bmatrix} \begin{pmatrix} h_1 \\ q_1 \end{pmatrix}$$

$$\begin{pmatrix} h_3 \\ q_3 \end{pmatrix} = \begin{bmatrix} p_{b2,11} & p_{b2,12} \\ p_{b2,21} & p_{b2,22} \end{bmatrix} \begin{bmatrix} e_{b11} & e_{b12} \\ e_{b21} & e_{b22} \end{bmatrix} \begin{bmatrix} p_{b1,11} & p_{b1,12} \\ p_{b1,21} & p_{b1,22} \end{bmatrix} \begin{pmatrix} h_2 \\ q_2 \end{pmatrix}.$$

6. Verfahren nach Anspruch 4, wobei die Durchflussrate des Fluids am Strömungsbestimmungspunkt mit einem hydraulischen Element zwischen den Stellen, an denen der Druck gemessen wird, und mit einem hydraulischen Element zwischen dem Strömungsbestimmungspunkt und einer der Stellen, an denen der Druck gemessen wird, mit der folgenden Gleichung bestimmt wird:

$$\begin{pmatrix} h_2 \\ q_2 \end{pmatrix} = \begin{bmatrix} p_{a2,11} & p_{a2,12} \\ p_{a2,21} & p_{a2,22} \end{bmatrix} \begin{bmatrix} e_{a11} & e_{a12} \\ e_{a21} & e_{a22} \end{bmatrix} \begin{bmatrix} p_{a1,11} & p_{a1,12} \\ p_{a1,21} & p_{a1,22} \end{bmatrix} \begin{pmatrix} h_1 \\ q_1 \end{pmatrix}$$

$$\begin{pmatrix} h_3 \\ q_3 \end{pmatrix} = \begin{bmatrix} p_{b2,11} & p_{b2,12} \\ p_{b2,21} & p_{b2,22} \end{bmatrix} \begin{bmatrix} e_{b11} & e_{b12} \\ e_{b21} & e_{b22} \end{bmatrix} \begin{bmatrix} p_{b1,11} & p_{b1,12} \\ p_{b1,21} & p_{b1,22} \end{bmatrix} \begin{pmatrix} h_2 \\ q_2 \end{pmatrix},$$

wobei vorzugsweise die Durchflussrate am Strömungsbestimmungspunkt mit der folgenden Gleichung bestimmt werden kann:

$$q_3 = \left(\frac{u_{b22}}{u_{a12}}\right)\Delta h + \left(\frac{u_{b21}u_{a12}}{u_{a12}} + \frac{u_{b22}u_{a11}}{u_{a12}} - \frac{u_{b22}}{u_{a12}}\right)h_2$$

wobei

$$u_a = \begin{bmatrix} p_{a2,11} & p_{a2,12} \\ p_{a2,21} & p_{a2,22} \end{bmatrix}\begin{bmatrix} e_{a11} & e_{a12} \\ e_{a21} & e_{a22} \end{bmatrix}\begin{bmatrix} p_{a1,11} & p_{a1,12} \\ p_{a1,21} & p_{a1,22} \end{bmatrix}$$

$$u_b = \begin{bmatrix} p_{b2,11} & p_{b2,12} \\ p_{b2,21} & p_{b2,22} \end{bmatrix}\begin{bmatrix} e_{b11} & e_{b12} \\ e_{b21} & e_{b22} \end{bmatrix}\begin{bmatrix} p_{b1,11} & p_{b1,12} \\ p_{b1,21} & p_{b1,22} \end{bmatrix}$$

$$u_{a11} = \cosh(\mu_{a2}l_{a2})\cosh(\mu_{a1}l_{a1}) + \left(\left(-\frac{2\Delta H_0}{Q_0}\right)\cosh(\mu_{a2}l_{a2}) - Z_{ca2}\sinh(\mu_{a2}l_{a2})\right)\left(-\frac{1}{Z_{ca1}}\sinh(\mu_{a1}l_{a1})\right)$$

$$u_{a12} = \cosh(\mu_{a2}l_{a2})\left(-Z_{ca1}\sinh(\mu_{a1}l_{a1})\right) + \left(\left(-\frac{2\Delta H_0}{Q_0}\right)\cosh(\mu_{a2}l_{a2}) - Z_{ca2}\sinh(\mu_{a2}l_{a2})\right)\cosh(\mu_{a1}l_{a1})$$

$$u_{b21} = \left(-\frac{1}{Z_{cb2}}\sinh(\mu_{b2}l_{b2})\right)\cosh(\mu_{b1}l_{b1}) + \left(\left(\frac{2\Delta H_0}{Z_{cb2}Q_0}\right)\sinh(\mu_{b2}l_{b2}) + \cosh(\mu_{b2}l_{b2})\right)\left(-\frac{1}{Z_{cb1}}\sinh(\mu_{b1}l_{b1})\right)$$

$$u_{b22} = \left(-\frac{1}{Z_{cb2}}\sinh(\mu_{b2}l_{b2})\right)\left(-Z_{cb1}\sinh(\mu_{b1}l_{b1})\right) + \left(\left(\frac{2\Delta H_0}{Z_{cb2}Q_0}\right)\sinh(\mu_{b2}l_{b2}) + \cosh(\mu_{b2}l_{b2})\right)\cosh(\mu_{b1}l_{b1})$$

$$\Delta h = h_2 - h_1,$$

$h_3$ = dimensionslose zeitveränderliche Druckhöhe am Strömungsbestimmungspunkt,

$h_1$ = von einem ersten Sensor gemessene dimensionslose zeitveränderliche Druckhöhe,

$h_2$ = von einem zweiten Sensor gemessene dimensionslose zeitveränderliche Druckhöhe,

$l_{a1}$ = Abstand zwischen einem ersten Messwertgeber und einem ersten hydraulischen Element,

$l_{a2}$ = Abstand zwischen einem zweiten Messwertgeber und dem ersten hydraulischen Element,

$l_{b1}$ = Abstand zwischen dem zweiten Messwertgeber und einem zweiten hydraulischen Element,

$l_{b2}$ = Abstand zwischen dem zweiten hydraulischen Element und dem Strömungsbestimmungspunkt,

$Z_{cx}$ = die charakteristische Impedanz für Rohrabschnitt $x$,

$\mu_x$ = die Ausbreitungskonstante für Rohrabschnitt $x$,

wobei $x$ Rohrabschnitte $a_1$, $a_2$ und $b_1$, $b_2$ bezeichnet

$Q_0$ = zeitlich gemittelter mittlerer Abfluss,

$H_0$ = zeitlich gemittelte mittlere Druckhöhe, und

$q_3$ = zeitveränderliche Durchflussrate am Strömungsbestimmungspunkt.

7. Verfahren nach einem der Ansprüche 1 bis 6, ferner umfassend das Bestimmen eines Typs von Rohr, durch welches das Fluid strömt, und der Durchflussrate des Fluids am Strömungsbestimmungspunkt auf der Basis von wenigstens der bestimmten Fluidwellengeschwindigkeit und auf Eigenschaften des Typs von Rohr, welche die charakteristische Impedanz des Rohrs $Z_c$ und die Ausbreitungskonstante $\mu$ umfassen.

8. Verfahren nach einem der Ansprüche 1 bis 7, ferner umfassend:

Bestimmen einer ersten Menge von Signaleigenschaften in Bezug auf eine bestimmte Durchflussrate des Fluids zwischen einem ersten Paar von Sensoren,
Bestimmen einer zweiten Menge von Signaleigenschaften in Bezug auf eine bestimmte Durchflussrate von Fluid zwischen einem zweiten Paar von Sensoren, und Vergleichen von bestimmter erster und zweiter Menge von Signaleigenschaften zum Korrigieren von Fehlern in der Durchflussrate des Fluids,
wobei entweder das erste Paar von Sensoren und das zweite Paar von Sensoren einen gemeinsamen Sensor umfassen oder sich die Sensoren des ersten Paares von Sensoren von den Sensoren des zweiten Paares von Sensoren unterscheiden; und
wobei vorzugsweise die bestimmten Signaleigenschaften für erste und zweite Menge Phasen- und Größenwerte in Bezug auf die Durchflussrate umfassen.

9. Vorrichtung zum Bestimmen einer Durchflussrate eines in einem Rohr strömenden Fluids, umfassend:

einen Generator zum Erzeugen einer Fluidwanderwelle;
wenigstens zwei Sensoren zur Anordnung am oder im Rohr zum Messen eines Drucks der Fluidwelle an wenigstens zwei Stellen im Rohr; und
einen mit den Sensoren gekoppelten Prozessor, wobei der Prozessor angepasst ist zum Bestimmen einer Fluidwellengeschwindigkeit auf der Basis des gemessenen Drucks der Fluidwelle an den wenigstens zwei Stellen im Rohr,
**dadurch gekennzeichnet, dass:**

der Prozessor ferner zum Bestimmen der Durchflussrate von Fluid auf der Basis der bestimmten Wellengeschwindigkeit, der gemessenen Drücke an zwei Stellen im Rohr und einer bestimmten Strömungsart von Fluid, wobei die Strömungsart von Fluid entweder eine laminare oder turbulente Strömung umfasst und entweder eine stetige oder unstetige Strömung umfasst, angepasst ist,
wobei der Prozessor zum Bestimmen, ob die Strömungsart von Fluid im Rohr entweder eine laminare oder eine turbulente Strömung umfasst und entweder eine stetige oder unstetige Strömung umfasst, auf wenigstens einer Reynoldzahl des Fluids basiert, angepasst ist, und wobei der Prozessor zum Bestimmen der Durchflussrate von Fluid im Rohr ferner auf der Basis von einem mit der Strömungsart verknüpften Widerstandsterm R angepasst ist, der ausgewählt wird

a) wenn bestimmt wird, dass die Strömungsart eine laminare, stetige Strömung ist, um die folgende Gleichung (1) zu erfüllen:

$$R_S = \frac{32v}{gAD^2} \quad (1)$$

wobei

$g$ = Beschleunigung aufgrund der Schwerkraft,
U = kinematische Viskosität,
$A$ = Rohr-Querschnittsfläche, und
$D$ = Rohrdurchmesser;

b) wenn bestimmt wird, dass die Strömungsart eine turbulente, stetige Strömung ist, um die folgende Gleichung (2) zu erfüllen:

$$R_S = \frac{fQ}{gDA^2} \quad (2)$$

wobei

*g* = Beschleunigung aufgrund der Schwerkraft,

*f* = Reibungsfaktor,

*Q* = zeitlich gemittelter mittlerer Abfluss,

*A* = Rohr-Querschnittsfläche, und

*D* = Rohrdurchmesser;

c) wenn bestimmt wird, dass die laminare oder turbulente Strömungsart eine unstetige Strömungsart ist, ein zusätzlicher Widerstandsterm $R_U$, definiert durch die folgende Gleichung (3), zum von Gleichung (1) oder (2) gelieferten Widerstandsterm $R_S$ hinzugefügt wird:

$$R_U = \frac{4j\omega}{gA}\int_0^\infty e^{\left(-\frac{j\omega D^2}{4v}\tau\right)} W(t)\, d\tau$$

(3)

wobei

U = kinematische Viskosität,

*g* = Beschleunigung aufgrund der Schwerkraft,

*A* = Rohr-Querschnittsfläche,

*D* = Rohrdurchmesser,

$$j = \sqrt{-1}\,,$$

$\omega$ = Winkelfrequenz,

*W* = Wichtungsfunktion, und

$\tau$ = dimensionslose Zeit ($= \frac{4v}{D^2}(t - t^*)$ wobei *t\** die im Faltungsintegral verwendete Zeit ist).

10. Vorrichtung nach Anspruch 9, wobei die Vorrichtung zum Anpassen der Durchflussrate des Fluids durch das Rohr, wenn die bestimmte Durchflussrate wesentlich von einer erwarteten Durchflussrate abweicht, ausgebildet ist.

11. Vorrichtung nach Anspruch 9 oder 10, wobei der Prozessor zum Verwenden der bestimmten Wellengeschwindigkeit in den folgenden Gleichungen zum Bestimmen der Durchflussrate von Fluid an einem Strömungsbestimmungspunkt in einem Rohr ohne hydraulische Elemente angepasst ist:

$$\begin{pmatrix} h_2 \\ q_2 \end{pmatrix} = \begin{bmatrix} p_{a11} & p_{a12} \\ p_{a21} & p_{a22} \end{bmatrix} \begin{pmatrix} h_1 \\ q_1 \end{pmatrix},$$

$$\begin{pmatrix} h_3 \\ q_3 \end{pmatrix} = \begin{bmatrix} p_{b11} & p_{b12} \\ p_{b21} & p_{b22} \end{bmatrix} \begin{pmatrix} h_2 \\ q_2 \end{pmatrix}$$

wobei

$q_3$ = zeitveränderliche Durchflussrate am Strömungsbestimmungspunkt,

$q_1$ = zeitveränderliche Durchflussrate an der Position des ersten Sensors,

$q_2$ = zeitveränderliche Durchflussrate an der Position des zweiten Sensors,

$h_3$ = dimensionslose zeitveränderliche Druckhöhe an einem Strömungsbestimmungspunkt,

$h_1$ = von einem ersten Sensor gemessene dimensionslose zeitveränderliche Druckhöhe,

$h_2$ = von einem zweiten Sensor gemessene dimensionslose zeitveränderliche Druckhöhe,

$p_{a11} = cosh(\mu l_a)$,

$p_{a12} = - Z_c sinh(\mu l_a)$,

$p_{b21} = - sinh(\mu l_b)/Z_c$,

$p_{b22} = cosh(\mu l_b)$,

$l_a$ = Abstand zwischen Sensoren,

$l_b$ = Abstand zwischen einem der Sensoren und dem Strömungsbestimmungspunkt, und

$Z_c$ = eine charakteristische Impedanz des Rohrs, und

$\mu$ = eine Ausbreitungskonstante.

12. Vorrichtung nach Anspruch 9 oder 10, wobei der Prozessor zum Bestimmen der Durchflussrate des Fluids an einem Strömungsbestimmungspunkt im Rohr mit einer Zahl $n$ von hydraulischen Elementen zwischen den Stellen, an denen Druck zur Durchflussraten-Bestimmung gemessen wird, und mit einer Zahl $m$ von hydraulischen Elementen zwischen dem Strömungsbestimmungspunkt und einer der Stellen, an denen Druck zur Durchflussraten-Bestimmung gemessen wird, wobei $n$ und $m$ Ganzzahlen sind, mit der folgenden Gleichung angepasst ist:

$$\begin{pmatrix} h_2 \\ q_2 \end{pmatrix} = \begin{bmatrix} p_{a(n+1),11} & p_{a(n+1),12} \\ p_{a(n+1),21} & p_{a(n+1),22} \end{bmatrix} \begin{bmatrix} e_{an,11} & e_{an,12} \\ e_{an,21} & e_{an,22} \end{bmatrix} \begin{bmatrix} p_{an,11} & p_{an,12} \\ p_{an,21} & p_{an,22} \end{bmatrix} \cdots \begin{bmatrix} e_{a1,11} & e_{a1,12} \\ e_{a1,21} & e_{a1,22} \end{bmatrix} \begin{bmatrix} p_{a1,11} & p_{a1,12} \\ p_{a1,21} & p_{a1,22} \end{bmatrix} \begin{pmatrix} h_1 \\ q_1 \end{pmatrix}$$

$$\begin{pmatrix} h_3 \\ q_3 \end{pmatrix} = \begin{bmatrix} p_{b(m+1),11} & p_{b(m+1),12} \\ p_{b(m+1),21} & p_{b(m+1),22} \end{bmatrix} \begin{bmatrix} e_{bm,11} & e_{bm,12} \\ e_{bm,21} & e_{bm,22} \end{bmatrix} \begin{bmatrix} p_{bm,11} & p_{bm,12} \\ p_{bm,21} & p_{bm,22} \end{bmatrix} \cdots \begin{bmatrix} e_{b1,11} & e_{b1,12} \\ e_{b1,21} & e_{b1,22} \end{bmatrix} \begin{bmatrix} p_{b1,11} & p_{b1,12} \\ p_{b1,21} & p_{b1,22} \end{bmatrix} \begin{pmatrix} h_2 \\ q_2 \end{pmatrix}$$

wobei

$q_3$ = zeitveränderliche Durchflussrate am Strömungsbestimmungspunkt,

$q_1$ = zeitveränderliche Durchflussrate an der Position des ersten Sensors,

$q_2$ = zeitveränderliche Durchflussrate an der Position des zweiten Sensors,

$h_3$ = dimensionslose zeitveränderliche Druckhöhe am Strömungsbestimmungspunkt,

$h_1$ = von einem ersten Sensor gemessene dimensionslose zeitveränderliche Druckhöhe,

$h_2$ = von einem zweiten Sensor gemessene dimensionslose zeitveränderliche Druckhöhe,

$p_{x,11} = cosh(\mu l_x)$,

$p_{x,12} = - Z_c sinh(\mu l_x)$,

$p_{x,21} = - sinh(\mu l_x)/Z_c$,

$p_{x,22} = cosh(\mu l_x)$,

$$\begin{bmatrix} e_{x,11} & e_{x,12} \\ e_{x,21} & e_{x,22} \end{bmatrix}$$

der Matrixausdruck E für das hydraulische Element bei x ist,

wobei x Rohrabschnitte $a_1$, $a_2$, ..., $a_n$ und $b_1$, $b_2$, ..., $b_m$ bezeichnet

$l_x$ = Länge von Rohrabschnitt $x$,

$Z_c$ = die charakteristische Impedanz des Rohrs, und

$\mu$ = die Ausbreitungskonstante, wobei vorzugsweise die Matrix $E$ für ein hydraulisches Strömungsverlustelement gegeben ist durch:

$$E = \begin{bmatrix} e_{11} & e_{12} \\ e_{21} & e_{22} \end{bmatrix} = \begin{bmatrix} 1 & 0 \\ \Delta loss & 1 \end{bmatrix}$$

wobei $\Delta loss$ eine Variable in Bezug auf die Größe des Strömungsverlusts ist, oder wobei vorzugsweise die Matrix $E$ für ein hydraulisches Druckverlustelement gegeben ist durch

$$E = \begin{bmatrix} 1 & \Delta loss \\ 0 & 1 \end{bmatrix}$$

wobei $\Delta loss$ eine Variable in Bezug auf die Größe des Druckverlusts ist.

13. Vorrichtung nach Anspruch 12, wobei der Prozessor zum Bestimmen der Durchflussrate des Fluids am Strömungsbestimmungspunkt im Rohr mit zwei hydraulischen Elementen zwischen den Stellen, an denen der Druck gemessen wird, und mit einem hydraulischen Element zwischen dem Strömungsbestimmungspunkt und einer der Stellen, an denen der Druck gemessen wird, mit der folgenden Gleichung angepasst ist:

$$\begin{pmatrix} h_2 \\ q_2 \end{pmatrix} = \begin{bmatrix} p_{a3,11} & p_{a3,12} \\ p_{a3,21} & p_{a3,22} \end{bmatrix} \begin{bmatrix} e_{a2,11} & e_{a2,12} \\ e_{a2,21} & e_{a2,22} \end{bmatrix} \begin{bmatrix} p_{a2,11} & p_{a2,12} \\ p_{a2,21} & p_{a2,22} \end{bmatrix} \begin{bmatrix} e_{a1,11} & e_{a1,12} \\ e_{a1,21} & e_{a1,22} \end{bmatrix} \begin{bmatrix} p_{a1,11} & p_{a1,12} \\ p_{a1,21} & p_{a1,22} \end{bmatrix} \begin{pmatrix} h_1 \\ q_1 \end{pmatrix}$$

$$\begin{pmatrix} h_3 \\ q_3 \end{pmatrix} = \begin{bmatrix} p_{b2,11} & p_{b2,12} \\ p_{b2,21} & p_{b2,22} \end{bmatrix} \begin{bmatrix} e_{b11} & e_{b12} \\ e_{b21} & e_{b22} \end{bmatrix} \begin{bmatrix} p_{b1,11} & p_{b1,12} \\ p_{b1,21} & p_{b1,22} \end{bmatrix} \begin{pmatrix} h_2 \\ q_2 \end{pmatrix}.$$

14. Vorrichtung nach Anspruch 12, wobei der Prozessor zum Bestimmen der Durchflussrate des Fluids am Strömungsbestimmungspunkt im Rohr mit einem hydraulischen Element zwischen den Stellen, an denen der Druck gemessen wird, und mit einem hydraulischen Element zwischen dem Strömungsbestimmungspunkt und einer der Stellen, an denen der Druck gemessen wird, mit der folgenden Gleichung angepasst ist:

$$\begin{pmatrix} h_2 \\ q_2 \end{pmatrix} = \begin{bmatrix} p_{a2,11} & p_{a2,12} \\ p_{a2,21} & p_{a2,22} \end{bmatrix} \begin{bmatrix} e_{a11} & e_{a12} \\ e_{a21} & e_{a22} \end{bmatrix} \begin{bmatrix} p_{a1,11} & p_{a1,12} \\ p_{a1,21} & p_{a1,22} \end{bmatrix} \begin{pmatrix} h_1 \\ q_1 \end{pmatrix}$$

$$\begin{pmatrix} h_3 \\ q_3 \end{pmatrix} = \begin{bmatrix} p_{b2,11} & p_{b2,12} \\ p_{b2,21} & p_{b2,22} \end{bmatrix} \begin{bmatrix} e_{b11} & e_{b12} \\ e_{b21} & e_{b22} \end{bmatrix} \begin{bmatrix} p_{b1,11} & p_{b1,12} \\ p_{b1,21} & p_{b1,22} \end{bmatrix} \begin{pmatrix} h_2 \\ q_2 \end{pmatrix},$$

wobei vorzugsweise der Prozessor zum Bestimmen der Durchflussrate am Strömungsbestimmungspunkt unter Verwendung der folgenden Gleichung angepasst ist:

$$q_3 = \left( \frac{u_{b22}}{u_{a12}} \right) \Delta h + \left( \frac{u_{b21} u_{a12}}{u_{a12}} + \frac{u_{b22} u_{a11}}{u_{a12}} - \frac{u_{b22}}{u_{a12}} \right) h_2$$

wobei

$$u_a = \begin{bmatrix} p_{a2,11} & p_{a2,12} \\ p_{a2,21} & p_{a2,22} \end{bmatrix} \begin{bmatrix} e_{a11} & e_{a12} \\ e_{a21} & e_{a22} \end{bmatrix} \begin{bmatrix} p_{a1,11} & p_{a1,12} \\ p_{a1,21} & p_{a1,22} \end{bmatrix}$$

$$u_b = \begin{bmatrix} p_{b2,11} & p_{b2,12} \\ p_{b2,21} & p_{b2,22} \end{bmatrix} \begin{bmatrix} e_{b11} & e_{b12} \\ e_{b21} & e_{b22} \end{bmatrix} \begin{bmatrix} p_{b1,11} & p_{b1,12} \\ p_{b1,21} & p_{b1,22} \end{bmatrix}$$

$$u_{a11} = \cosh(\mu_{a2}l_{a2})\cosh(\mu_{a1}l_{a1}) + \left(\left(-\frac{2\Delta H_0}{Q_0}\right)\cosh(\mu_{a2}l_{a2}) - Z_{ca2}\sinh(\mu_{a2}l_{a2})\right)\left(-\frac{1}{Z_{ca1}}\sinh(\mu_{a1}l_{a1})\right)$$

$$u_{a12} = \cosh(\mu_{a2}l_{a2})\left(-Z_{ca1}\sinh(\mu_{a1}l_{a1})\right) + \left(\left(-\frac{2\Delta H_0}{Q_0}\right)\cosh(\mu_{a2}l_{a2}) - Z_{ca2}\sinh(\mu_{a2}l_{a2})\right)\cosh(\mu_{a1}l_{a1})$$

$$u_{b21} = \left(-\frac{1}{Z_{cb2}}\sinh(\mu_{b2}l_{b2})\right)\cosh(\mu_{b1}l_{b1}) + \left(\left(\frac{2\Delta H_0}{Z_{cb2}Q_0}\right)\sinh(\mu_{b2}l_{b2}) + \cosh(\mu_{b2}l_{b2})\right)\left(-\frac{1}{Z_{cb1}}\sinh(\mu_{b1}l_{b1})\right)$$

$$u_{b22} = \left(-\frac{1}{Z_{cb2}}\sinh(\mu_{b2}l_{b2})\right)\left(-Z_{cb1}\sinh(\mu_{b1}l_{b1})\right) + \left(\left(\frac{2\Delta H_0}{Z_{cb2}Q_0}\right)\sinh(\mu_{b2}l_{b2}) + \cosh(\mu_{b2}l_{b2})\right)\cosh(\mu_{b1}l_{b1})$$

$$\Delta h = h_2 - h_1,$$

$h_3$ = dimensionslose zeitveränderliche Druckhöhe an einem Strömungsbestimmungspunkt,
$h_1$ = von einem ersten Sensor gemessene dimensionslose zeitveränderliche Druckhöhe,
$h_2$ = von einem zweiten Sensor gemessene dimensionslose zeitveränderliche Druckhöhe,
$l_{a1}$ = Abstand zwischen einem ersten Messwertgeber und einem ersten hydraulischen Element,
$l_{a2}$ = Abstand zwischen einem zweiten Messwertgeber und dem ersten hydraulischen Element,
$l_{b1}$ = Abstand zwischen dem zweiten Messwertgeber und einem zweiten hydraulischen Element,
$l_{b2}$ = Abstand zwischen dem zweiten hydraulischen Element und dem Strömungsbestimmungspunkt,
$Z_{cx}$ = die charakteristische Impedanz für Rohrabschnitt $x$,
$\mu_x$ = die Ausbreitungskonstante für Rohrabschnitt $x$,
wobei $x$ Rohrabschnitte $a_1$, $a_2$ und $b_1$, $b_2$ bezeichnet
$Q_0$ = zeitlich gemittelter mittlerer Abfluss,
$H_0$ = zeitlich gemittelte mittlere Druckhöhe,
$q_3$ = zeitveränderliche Durchflussrate am Strömungsbestimmungspunkt.

**Revendications**

1. Procédé de détermination d'un débit d'un fluide circulant dans un conduit, comportant les étapes consistant à :

générer une onde de fluide transitoire en utilisant un générateur et mesurer une pression de l'onde de fluide en au moins deux emplacements dans le conduit, la pression étant mesurée par des capteurs qui sont positionnés sur ou dans le conduit ;
déterminer une vitesse de l'onde du fluide en se fondant sur la pression mesurée de l'onde de fluide aux au moins deux emplacements dans le conduit :
**caractérisé par** les étapes consistant à :

déterminer si un régime d'écoulement du fluide dans le conduit comporte soit un écoulement laminaire soit un écoulement turbulent et comporte soit un écoulement permanent soit un écoulement transitoire ;
déterminer le débit du fluide en se fondant sur la vitesse d'onde déterminée, sur les pressions du fluide mesurées en deux emplacements du conduit et sur le régime d'écoulement du fluide déterminé,
où le fait de déterminer si un régime d'écoulement du fluide dans le conduit comporte soit un écoulement laminaire soit un écoulement turbulent et comporte soit un écoulement permanent soit un écoulement transitoire est fondé au moins sur un nombre de Reynolds du fluide, et la détermination du débit du fluide au point de détermination de l'écoulement dans le conduit est en outre fondée sur un terme de résistance R associé au régime d'écoulement qui est sélectionné

a) si l'on détermine que le régime d'écoulement est un écoulement permanent laminaire, de manière à remplir l'équation suivante (1) :

$$(1)\ R_s = \frac{32u}{gAD^2}$$

où

     g = accélération causée par la gravité,
     u = viscosité cinématique,
     A = section transversale du conduit, et
     D = diamètre du conduit ;

b) si l'on détermine que le régime d'écoulement est un écoulement permanent turbulent, de manière à remplir l'équation suivante (2) :

$$(2)\ R_s = \frac{fQ}{gAD^2}$$

où

     g = accélération causée par la gravité,
     f = facteur de friction,
     Q = débit moyen dans le temps,
     A = section transversale du conduit, et
     D = diamètre du conduit ;

c) si l'on détermine que le régime d'écoulement laminaire ou turbulent est un régime d'écoulement transitoire, un terme de résistance supplémentaire $R_u$ défini par l'équation suivante (3) est ajouté au terme de résistance $R_s$ fourni par l'équation (1) ou (2) :

$$(3)\ R_U = \frac{4j\omega}{gA}\int\limits_0^\infty e^{\left(-\frac{j\omega D^2}{4v}\tau\right)}W(t)d\tau$$

où

     u = viscosité cinématique,
     g = accélération causée par la gravité,
     A = section transversale du conduit,
     D = diamètre du conduit

$$j = \sqrt{-1}$$

     ω = fréquence angulaire,
     W = fonction de pondération, et
     τ = temps adimensionnel ($= \frac{4v}{D^2}(t - t^*)$, où t* est le temps utilisé dans l'intégrale de convolution).

2. Procédé selon la revendication 1, comportant en outre l'étape consistant à ajuster le débit du fluide à travers le conduit si le débit déterminé diffère substantiellement d'un débit attendu.

3. Procédé selon la revendication 1 ou 2, où la vitesse d'onde déterminée est utilisée dans les équations suivantes pour déterminer un débit du fluide en un point de détermination de l'écoulement dans un conduit sans éléments hydrauliques :

$$\begin{pmatrix} h_2 \\ q_2 \end{pmatrix} = \begin{bmatrix} p_{a11} & p_{a12} \\ p_{a21} & p_{a22} \end{bmatrix} \begin{pmatrix} h_1 \\ q_1 \end{pmatrix},$$

$$\begin{pmatrix} h_3 \\ q_3 \end{pmatrix} = \begin{bmatrix} p_{b11} & p_{b12} \\ p_{b21} & p_{b22} \end{bmatrix} \begin{pmatrix} h_2 \\ q_2 \end{pmatrix}$$

où

$q_3$ = débit variable dans le temps au point de détermination de l'écoulement,
$q_1$ = débit variable dans le temps à l'emplacement du premier capteur,
$q_2$ = débit variable dans le temps à l'emplacement du second capteur,
$h_3$ = hauteur de pression adimensionnelle variable dans le temps au point de détermination de l'écoulement,
$h_1$ = hauteur de pression adimensionnelle variable dans le temps mesurée par un premier capteur,
$h_2$ = hauteur de pression adimensionnelle variable dans le temps mesurée par un second capteur,
$p_{a11} = cosh(\mu l_a)$,
$p_{a12} = - Z_c sinh(\mu l_a)$,
$p_{b21} = - sinh(\mu l_b)/Z_c$,
$p_{b22} = cosh(\mu l_b)$,
$l_a$ = distance entre les capteurs,
$l_b$ = distance entre l'un des capteurs et le point de détermination de l'écoulement,
$Z_c$ = impédance caractéristique du conduit, et
$\mu$ = constante de propagation,

où l'impédance caractéristique du conduit $Z_c$ et la constante de propagation $\mu$ sont fonctions de la vitesse d'onde déterminée et d'un terme de résistance associé avec le régime d'écoulement à travers le conduit $R$.

4. Procédé selon l'une quelconque des revendications 1 à 3, où le débit du fluide en un point de détermination de l'écoulement dans le conduit avec un nombre $n$ d'élément(s) hydraulique(s) entre les emplacements auxquels la pression est mesurée pour la détermination du débit, et avec un nombre $m$ d'élément(s) hydraulique(s) entre le point de détermination de l'écoulement et l'un des emplacements auxquels la pression est mesurée pour la détermination du débit, où $n$ et $m$ sont des nombres entiers, est déterminé au moyen de l'équation suivante :

$$\begin{pmatrix} h_2 \\ q_2 \end{pmatrix} = \begin{bmatrix} p_{a(n+1),11} & p_{a(n+1),12} \\ p_{a(n+1),21} & p_{a(n+1),22} \end{bmatrix} \begin{bmatrix} e_{an,11} & e_{an,12} \\ e_{an,21} & e_{an,22} \end{bmatrix} \begin{bmatrix} p_{an,11} & p_{an,12} \\ p_{an,21} & p_{an,22} \end{bmatrix} \cdots \begin{bmatrix} e_{a1,11} & e_{a1,12} \\ e_{a1,21} & e_{a1,22} \end{bmatrix} \begin{bmatrix} p_{a1,11} & p_{a1,12} \\ p_{a1,21} & p_{a1,22} \end{bmatrix} \begin{pmatrix} h_1 \\ q_1 \end{pmatrix}$$

$$\begin{pmatrix} h_3 \\ q_3 \end{pmatrix} = \begin{bmatrix} p_{b(m+1),11} & p_{b(m+1),12} \\ p_{b(m+1),21} & p_{b(m+1),22} \end{bmatrix} \begin{bmatrix} e_{bm,11} & e_{bm,12} \\ e_{bm,21} & e_{bm,22} \end{bmatrix} \begin{bmatrix} p_{bm,11} & p_{bm,12} \\ p_{bm,21} & p_{bm,22} \end{bmatrix} \cdots \begin{bmatrix} e_{b1,11} & e_{b1,12} \\ e_{b1,21} & e_{b1,22} \end{bmatrix} \begin{bmatrix} p_{b1,11} & p_{b1,12} \\ p_{b1,21} & p_{b1,22} \end{bmatrix} \begin{pmatrix} h_2 \\ q_2 \end{pmatrix}$$

où

$q_3$ = débit variable dans le temps au point de détermination de l'écoulement,
$q_1$ = débit variable dans le temps à l'emplacement du premier capteur,
$q_2$ = débit variable dans le temps à l'emplacement du second capteur,
$h_3$ = hauteur de pression adimensionnelle variable dans le temps au point de détermination de l'écoulement,
$h_1$ = hauteur de pression adimensionnelle variable dans le temps mesurée par un premier capteur,
$h_2$ = hauteur de pression adimensionnelle variable dans le temps mesurée par un second capteur,
$p_{x,11} = cosh(\mu l_x)$,
$p_{x,12} = - Z_c sinh(\mu l_x)$,
$p_{x,21} = - sinh(\mu l_x)/Z_c$,

$p_{x,22} = cosh(\mu l_x),$

$$\begin{bmatrix} e_{x,11} & e_{x,12} \\ e_{x,21} & e_{x,22} \end{bmatrix}$$

est l'expression matricielle E pour l'élément hydraulique en x,
où x désigne des sections de conduit $a_1$, $a_2$, ..., $a_n$, et $b_1$, $b_2$, ..., $b_m$,
$l_x$ = longueur d'une section de conduit x,
$Z_c$ = une impédance caractéristique du conduit, et
$\mu$ = une constante de propagation,

où l'impédance caractéristique du conduit $Z_c$ et la constante de propagation $\mu$ sont fonctions de la vitesse d'onde déterminée et d'un terme de résistance associé avec le régime d'écoulement à travers le conduit *R*,
où la matrice E pour un élément hydraulique à perte de débit est de préférence donnée par :

$$E = \begin{bmatrix} e_{11} & e_{12} \\ e_{21} & e_{22} \end{bmatrix} = \begin{bmatrix} 1 & 0 \\ \Delta loss & 1 \end{bmatrix}$$

où *Δloss* est une variable en rapport avec l'amplitude de la perte de débit, ou bien où la matrice E pour un élément hydraulique à perte de charge est de préférence donnée par :

$$E = \begin{bmatrix} 1 & \Delta loss \\ 0 & 1 \end{bmatrix}$$

où *Δloss* est une variable en rapport avec l'amplitude de la perte de charge.

5. Procédé selon la revendication 4, où le débit du fluide en un point de détermination de l'écoulement dans le conduit avec deux éléments hydrauliques entre les emplacements auxquels la pression est mesurée, et avec un élément hydraulique entre le point de détermination de la pression et l'un des emplacements auxquels la pression est mesurée, est déterminé au moyen de l'équation suivante :

$$\begin{pmatrix} h_2 \\ q_2 \end{pmatrix} = \begin{bmatrix} p_{a3,11} & p_{a3,12} \\ p_{a3,21} & p_{a3,22} \end{bmatrix} \begin{bmatrix} e_{a2,11} & e_{a2,12} \\ e_{a2,21} & e_{a2,22} \end{bmatrix} \begin{bmatrix} p_{a2,11} & p_{a2,12} \\ p_{a2,21} & p_{a2,22} \end{bmatrix} \begin{bmatrix} e_{a1,11} & e_{a1,12} \\ e_{a1,21} & e_{a1,22} \end{bmatrix} \begin{bmatrix} p_{a1,11} & p_{a1,12} \\ p_{a1,21} & p_{a1,22} \end{bmatrix} \begin{pmatrix} h_1 \\ q_1 \end{pmatrix}$$

$$\begin{pmatrix} h_3 \\ q_3 \end{pmatrix} = \begin{bmatrix} p_{b2,11} & p_{b2,12} \\ p_{b2,21} & p_{b2,22} \end{bmatrix} \begin{bmatrix} e_{b11} & e_{b12} \\ e_{b21} & e_{b22} \end{bmatrix} \begin{bmatrix} p_{b1,11} & p_{b1,12} \\ p_{b1,21} & p_{b1,22} \end{bmatrix} \begin{pmatrix} h_2 \\ q_2 \end{pmatrix}.$$

6. Procédé selon la revendication 4, où le débit du fluide au point de détermination de l'écoulement avec un élément hydraulique entre les emplacements auxquels la pression est mesurée, et avec un élément hydraulique entre le point de détermination de la pression et l'un des emplacements auxquels la pression est mesurée, est déterminé au moyen de l'équation suivante :

$$\begin{pmatrix} h_2 \\ q_2 \end{pmatrix} = \begin{bmatrix} p_{a2,11} & p_{a2,12} \\ p_{a2,21} & p_{a2,22} \end{bmatrix} \begin{bmatrix} e_{a11} & e_{a12} \\ e_{a21} & e_{a22} \end{bmatrix} \begin{bmatrix} p_{a1,11} & p_{a1,12} \\ p_{a1,21} & p_{a1,22} \end{bmatrix} \begin{pmatrix} h_1 \\ q_1 \end{pmatrix}$$

$$\begin{pmatrix} h_3 \\ q_3 \end{pmatrix} = \begin{bmatrix} p_{b2,11} & p_{b2,12} \\ p_{b2,21} & p_{b2,22} \end{bmatrix} \begin{bmatrix} e_{b11} & e_{b12} \\ e_{b21} & e_{b22} \end{bmatrix} \begin{bmatrix} p_{b1,11} & p_{b1,12} \\ p_{b1,21} & p_{b1,22} \end{bmatrix} \begin{pmatrix} h_2 \\ q_2 \end{pmatrix},$$

où le débit au point de détermination de l'écoulement peut être préférablement déterminé au moyen de l'équation suivante :

$$q_3 = \left( \frac{u_{b22}}{u_{a12}} \right) \Delta h + \left( \frac{u_{b21} u_{a12}}{u_{a12}} + \frac{u_{b22} u_{a11}}{u_{a12}} - \frac{u_{b22}}{u_{a12}} \right) h_2$$

où

$$u_a = \begin{bmatrix} p_{a2,11} & p_{a2,12} \\ p_{a2,21} & p_{a2,22} \end{bmatrix} \begin{bmatrix} e_{a11} & e_{a12} \\ e_{a21} & e_{a22} \end{bmatrix} \begin{bmatrix} p_{a1,11} & p_{a1,12} \\ p_{a1,21} & p_{a1,22} \end{bmatrix}$$

$$u_b = \begin{bmatrix} p_{b2,11} & p_{b2,12} \\ p_{b2,21} & p_{b2,22} \end{bmatrix} \begin{bmatrix} e_{b11} & e_{b12} \\ e_{b21} & e_{b22} \end{bmatrix} \begin{bmatrix} p_{b1,11} & p_{b1,12} \\ p_{b1,21} & p_{b1,22} \end{bmatrix}$$

$$u_{a11} = \cosh(\mu_{a2} l_{a2}) \cosh(\mu_{a1} l_{a1}) + \left( \left( -\frac{2\Delta H_0}{Q_0} \right) \cosh(\mu_{a2} l_{a2}) - Z_{ca2} \sinh(\mu_{a2} l_{a2}) \right) \left( -\frac{1}{Z_{ca1}} \sinh(\mu_{a1} l_{a1}) \right)$$

$$u_{a12} = \cosh(\mu_{a2} l_{a2}) \left( -Z_{ca1} \sinh(\mu_{a1} l_{a1}) \right) + \left( \left( -\frac{2\Delta H_0}{Q_0} \right) \cosh(\mu_{a2} l_{a2}) - Z_{ca2} \sinh(\mu_{a2} l_{a2}) \right) \cosh(\mu_{a1} l_{a1})$$

$$u_{b21} = \left( -\frac{1}{Z_{cb2}} \sinh(\mu_{b2} l_{b2}) \right) \cosh(\mu_{b1} l_{b1}) + \left( \left( \frac{2\Delta H_0}{Z_{cb2} Q_0} \right) \sinh(\mu_{b2} l_{b2}) + \cosh(\mu_{b2} l_{b2}) \right) \left( -\frac{1}{Z_{cb1}} \sinh(\mu_{b1} l_{b1}) \right)$$

$$u_{b22} = \left( -\frac{1}{Z_{cb2}} \sinh(\mu_{b2} l_{b2}) \right) \left( -Z_{cb1} \sinh(\mu_{b1} l_{b1}) \right) + \left( \left( \frac{2\Delta H_0}{Z_{cb2} Q_0} \right) \sinh(\mu_{b2} l_{b2}) + \cosh(\mu_{b2} l_{b2}) \right) \cosh(\mu_{b1} l_{b1})$$

$$\Delta h = h_2 - h_1,$$

$h_3$ = hauteur de pression adimensionnelle variable dans le temps au point de détermination de l'écoulement,

$h_1$ = hauteur de pression adimensionnelle variable dans le temps mesurée par un premier capteur,

$h_2$ = hauteur de pression adimensionnelle variable dans le temps mesurée par un second capteur,

$l_{a1}$ = distance entre un premier transducteur et un premier élément hydraulique,

$l_{a2}$ = distance entre un second transducteur et le premier élément hydraulique,

$l_{b1}$ = distance entre le second transducteur et un second élément hydraulique,

$l_{b2}$ = distance entre le second élément hydraulique et le point de détermination de l'écoulement,

$Z_{cx}$ = l'impédance caractéristique pour la section de conduit x,

$\mu_x$ = la constante de propagation pour la section de conduit x,

où x désigne les sections de conduit $a_1$, $a_2$, et $b_1$, et $b_2$

$Q_0$ = débit moyen dans le temps,

$H_0$ = hauteur de pression moyenne dans le temps, et

$q_3$ = débit variable dans le temps au point de détermination de l'écoulement.

7. Procédé selon l'une quelconque des revendications 1 à 6, comportant en outre l'étape consistant à déterminer un type de conduit à travers lequel le fluide s'écoule et le débit du fluide au point de détermination de l'écoulement en se fondant au moins sur la vitesse d'onde de fluide déterminée et des caractéristiques du type de conduit qui comprennent l'impédance caractéristique du conduit $Z_c$ et la constante de propagation $\mu$.

8. Procédé selon l'une quelconque des revendications 1 à 7, comportant en outre :

l'étape consistant à déterminer un premier ensemble de caractéristiques de signal relatif à un débit déterminé du fluide entre une première paire de capteurs,
l'étape consistant à déterminer un second ensemble de caractéristiques de signal relatif à un débit déterminé du fluide entre une seconde paire de capteurs, et
l'étape consistant à comparer les premier et second ensembles de caractéristiques de signal pour corriger toute erreur dans le débit du fluide,
où soit la première paire de capteurs et la seconde paire de capteurs comprennent un capteur commun, soit les capteurs de la première paire de capteurs sont différents des capteurs de la seconde paire de capteurs ; et où les caractéristiques de signal déterminées pour le premier et le second ensemble comprennent préférablement des valeurs de phase et d'amplitude relatives au débit.

9. Appareil pour déterminer un débit d'un fluide s'écoulant dans un conduit, comportant :

un générateur pour générer une onde transitoire de fluide ;
au moins deux capteurs à positionner sur ou dans le conduit pour mesurer une pression de l'onde de fluide en au moins deux emplacements dans le conduit ; et
un processeur couplé aux capteurs, le processeur étant adapté pour déterminer une vitesse d'onde de fluide en se fondant sur la pression de l'onde de fluide mesurée aux au moins deux emplacements dans le conduit, **caractérisé par** :

**le fait que** le processeur est en outre adapté pour déterminer le débit du fluide en se fondant sur la vitesse d'onde déterminée, sur des pressions mesurées en deux emplacements du conduit et sur un régime d'écoulement déterminé du fluide, où le régime d'écoulement du fluide comporte soit un écoulement laminaire soit un écoulement turbulent et comporte soit un écoulement permanent soit un écoulement transitoire, où le processeur est adapté pour déterminer si le régime d'écoulement du fluide dans le conduit comporte soit un écoulement laminaire soit un écoulement turbulent et comporte soit un écoulement permanent soit un écoulement transitoire en se fondant au moins sur un nombre de Reynolds du fluide, et où le processeur est adapté pour déterminer le débit du fluide dans le conduit en se fondant en outre sur un terme de résistance R associé au régime d'écoulement, qui est sélectionné

a) si l'on détermine que le régime d'écoulement est un écoulement permanent laminaire, de manière à remplir l'équation suivante (1) :

$$(1)\ R_s = \frac{32u}{gAD^2}$$

où

g = accélération causée par la gravité,
u = viscosité cinématique,
A = section transversale du conduit, et
D = diamètre du conduit ;

b) si l'on détermine que le régime d'écoulement est un écoulement permanent turbulent, de manière à remplir l'équation suivante (2) :

$$(2)\ R_s = \frac{fQ}{gAD^2}$$

où

g = accélération causée par la gravité,
f = facteur de friction,
Q = débit moyen dans le temps,
A = section transversale du conduit, et
D = diamètre du conduit ;

c) si l'on détermine que le régime d'écoulement laminaire ou turbulent est un régime d'écoulement transitoire, un terme de résistance supplémentaire $R_u$ défini par l'équation suivante (3) est ajouté au terme de résistance $R_s$ fourni par l'équation (1) ou (2) :

$$(3) \quad R_U = \frac{4j\omega}{gA} \int_0^\infty e^{\left(-\frac{j\omega D^2}{4v}\tau\right)} W(t)\, d\tau$$

où

u = viscosité cinématique,
g = accélération causée par la gravité,
A = section transversale du conduit,
D = diamètre du conduit

$$j = \sqrt{-1}$$

ω = fréquence angulaire,
W = fonction de pondération, et

$\tau$ = temps adimensionnel ( $= \frac{4v}{D^2}(t - t^*),$ où t* est le temps utilisé dans l'intégrale de convolution).

10. Appareil selon la revendication 9, où l'appareil est agencé pour ajuster le débit du fluide à travers le conduit si le débit déterminé diffère substantiellement d'un débit attendu.

11. Appareil selon la revendication 9 ou 10, où le processeur est adapté pour utiliser la vitesse d'onde déterminée dans les équations suivantes pour déterminer le débit du fluide en un point de détermination de l'écoulement dans un conduit sans éléments hydrauliques :

$$\begin{pmatrix} h_2 \\ q_2 \end{pmatrix} = \begin{bmatrix} p_{a11} & p_{a12} \\ p_{a21} & p_{a22} \end{bmatrix} \begin{pmatrix} h_1 \\ q_1 \end{pmatrix},$$

$$\begin{pmatrix} h_3 \\ q_3 \end{pmatrix} = \begin{bmatrix} p_{b11} & p_{b12} \\ p_{b21} & p_{b22} \end{bmatrix} \begin{pmatrix} h_2 \\ q_2 \end{pmatrix}$$

où

$q_3$ = débit variable dans le temps au point de détermination de l'écoulement,
$q_1$ = débit variable dans le temps à l'emplacement du premier capteur,
$q_2$ = débit variable dans le temps à l'emplacement du second capteur,
$h_3$ = hauteur de pression adimensionnelle variable dans le temps au point de détermination de l'écoulement,
$h_1$ = hauteur de pression adimensionnelle variable dans le temps mesurée par un premier capteur,

$h_2$ = hauteur de pression adimensionnelle variable dans le temps mesurée par un second capteur,

$p_{a11}$ = $cosh(\mu l_a)$,

$p_{a12}$ = - $Z_c sinh(\mu l_a)$,

$p_{b21}$ = - $sinh(\mu l_b)/Z_c$,

$p_{b22}$ = $cosh(\mu l_b)$,

$l_a$ = distance entre les capteurs,

$l_b$ = distance entre l'un des capteurs et le point de détermination de l'écoulement, et

$Z_c$ = impédance caractéristique du conduit, et

$\mu$ = constante de propagation.

**12.** Appareil la revendication 9 ou 10, où le processeur est adapté pour déterminer le débit du fluide en un point de détermination de l'écoulement dans le conduit avec un nombre *n* d'élément(s) hydraulique(s) entre les emplacements, où la pression est mesurée pour la détermination du débit, et avec un nombre *m* d'élément(s) hydraulique(s) entre le point de détermination de l'écoulement et l'un des emplacements, où la pression est mesurée pour la détermination du débit, où *n* et *m* sont des nombres entiers, est déterminé au moyen de l'équation suivante :

$$\begin{pmatrix} h_2 \\ q_2 \end{pmatrix} = \begin{bmatrix} p_{a(n+1),11} & p_{a(n+1),12} \\ p_{a(n+1),21} & p_{a(n+1),22} \end{bmatrix} \begin{bmatrix} e_{an,11} & e_{an,12} \\ e_{an,21} & e_{an,22} \end{bmatrix} \begin{bmatrix} p_{an,11} & p_{an,12} \\ p_{an,21} & p_{an,22} \end{bmatrix} \cdots \begin{bmatrix} e_{a1,11} & e_{a1,12} \\ e_{a1,21} & e_{a1,22} \end{bmatrix} \begin{bmatrix} p_{a1,11} & p_{a1,12} \\ p_{a1,21} & p_{a1,22} \end{bmatrix} \begin{pmatrix} h_1 \\ q_1 \end{pmatrix}$$

$$\begin{pmatrix} h_3 \\ q_3 \end{pmatrix} = \begin{bmatrix} p_{b(m+1),11} & p_{b(m+1),12} \\ p_{b(m+1),21} & p_{b(m+1),22} \end{bmatrix} \begin{bmatrix} e_{bm,11} & e_{bm,12} \\ e_{bm,21} & e_{bm,22} \end{bmatrix} \begin{bmatrix} p_{bm,11} & p_{bm,12} \\ p_{bm,21} & p_{bm,22} \end{bmatrix} \cdots \begin{bmatrix} e_{b1,11} & e_{b1,12} \\ e_{b1,21} & e_{b1,22} \end{bmatrix} \begin{bmatrix} p_{b1,11} & p_{b1,12} \\ p_{b1,21} & p_{b1,22} \end{bmatrix} \begin{pmatrix} h_2 \\ q_2 \end{pmatrix}$$

où

$q_3$ = débit variable dans le temps au point de détermination de l'écoulement,

$q_1$ = débit variable dans le temps à l'emplacement du premier capteur,

$q_2$ = débit variable dans le temps à l'emplacement du second capteur,

$h_3$ = hauteur de pression adimensionnelle variable dans le temps au point de détermination de l'écoulement,

$h_1$ = hauteur de pression adimensionnelle variable dans le temps mesurée par un premier capteur,

$h_2$ = hauteur de pression adimensionnelle variable dans le temps mesurée par un second capteur,

$p_{x,11}$ = $cosh(\mu l_x)$,

$p_{x,12}$ = - $Z_c Sinh(\mu l_x)$,

$p_{x,21}$ = - $sinh(\mu l_x)/Z_c$,

$p_{x,22}$ = $cosh(\mu l_x)$,

$$\begin{bmatrix} e_{x,11} & e_{x,12} \\ e_{x,21} & e_{x,22} \end{bmatrix}$$

est l'expression matricielle E pour l'élément hydraulique à x,

où x désigne des sections de conduit $a_1$, $a_2$, ..., $a_n$, et $b_1$, $b_2$, ..., $b_m$,

$l_x$ = longueur d'une section de conduit x,

$Z_c$ = une impédance caractéristique du conduit, et

$\mu$ = la constante de propagation, où la matrice E pour un élément hydraulique à perte de débit est de préférence donnée par :

$$E = \begin{bmatrix} e_{11} & e_{12} \\ e_{21} & e_{22} \end{bmatrix} = \begin{bmatrix} 1 & 0 \\ \Delta loss & 1 \end{bmatrix}$$

où *Δloss* est une variable en rapport avec l'amplitude de la perte de débit, ou bien où la matrice E pour un élément hydraulique à perte de charge est de préférence donnée par :

$$E = \begin{bmatrix} 1 & \Delta loss \\ 0 & 1 \end{bmatrix}$$

où $\Delta loss$ est une variable en rapport avec l'amplitude de la perte de charge.

13. Appareil selon la revendication 12, où le processeur est adapté pour déterminer le débit du fluide en un point de détermination de l'écoulement dans le conduit avec deux éléments hydrauliques entre les emplacements, où la pression est mesurée, et avec un élément hydraulique entre le point de détermination de l'écoulement et l'un des emplacements, où la pression est mesurée, est déterminé au moyen de l'équation suivante :

$$\begin{pmatrix} h_2 \\ q_2 \end{pmatrix} = \begin{bmatrix} p_{a3,11} & p_{a3,12} \\ p_{a3,21} & p_{a3,22} \end{bmatrix} \begin{bmatrix} e_{a2,11} & e_{a2,12} \\ e_{a2,21} & e_{a2,22} \end{bmatrix} \begin{bmatrix} p_{a2,11} & p_{a2,12} \\ p_{a2,21} & p_{a2,22} \end{bmatrix} \begin{bmatrix} e_{a1,11} & e_{a1,12} \\ e_{a1,21} & e_{a1,22} \end{bmatrix} \begin{bmatrix} p_{a1,11} & p_{a1,12} \\ p_{a1,21} & p_{a1,22} \end{bmatrix} \begin{pmatrix} h_1 \\ q_1 \end{pmatrix}$$

$$\begin{pmatrix} h_3 \\ q_3 \end{pmatrix} = \begin{bmatrix} p_{b2,11} & p_{b2,12} \\ p_{b2,21} & p_{b2,22} \end{bmatrix} \begin{bmatrix} e_{b11} & e_{b12} \\ e_{b21} & e_{b22} \end{bmatrix} \begin{bmatrix} p_{b1,11} & p_{b1,12} \\ p_{b1,21} & p_{b1,22} \end{bmatrix} \begin{pmatrix} h_2 \\ q_2 \end{pmatrix} .$$

14. Procédé selon la revendication 12, où le processeur est adapté pour déterminer le débit du fluide au point de détermination de l'écoulement dans le conduit avec un élément hydraulique entre les emplacements, où la pression est mesurée, et avec un élément hydraulique entre le point de détermination de la pression et l'un des emplacements, où la pression est mesurée, est déterminé au moyen de l'équation suivante :

$$\begin{pmatrix} h_2 \\ q_2 \end{pmatrix} = \begin{bmatrix} p_{a2,11} & p_{a2,12} \\ p_{a2,21} & p_{a2,22} \end{bmatrix} \begin{bmatrix} e_{a11} & e_{a12} \\ e_{a21} & e_{a22} \end{bmatrix} \begin{bmatrix} p_{a1,11} & p_{a1,12} \\ p_{a1,21} & p_{a1,22} \end{bmatrix} \begin{pmatrix} h_1 \\ q_1 \end{pmatrix}$$

$$\begin{pmatrix} h_3 \\ q_3 \end{pmatrix} = \begin{bmatrix} p_{b2,11} & p_{b2,12} \\ p_{b2,21} & p_{b2,22} \end{bmatrix} \begin{bmatrix} e_{b11} & e_{b12} \\ e_{b21} & e_{b22} \end{bmatrix} \begin{bmatrix} p_{b1,11} & p_{b1,12} \\ p_{b1,21} & p_{b1,22} \end{bmatrix} \begin{pmatrix} h_2 \\ q_2 \end{pmatrix} ,$$

où le processeur est adapté pour déterminer le débit au point de détermination de l'écoulement au moyen de l'équation suivante :

$$q_3 = \left( \frac{u_{b22}}{u_{a12}} \right) \Delta h + \left( \frac{u_{b21} u_{a12}}{u_{a12}} + \frac{u_{b22} u_{a11}}{u_{a12}} - \frac{u_{b22}}{u_{a12}} \right) h_2$$

où

$$u_a = \begin{bmatrix} p_{a2,11} & p_{a2,12} \\ p_{a2,21} & p_{a2,22} \end{bmatrix} \begin{bmatrix} e_{a11} & e_{a12} \\ e_{a21} & e_{a22} \end{bmatrix} \begin{bmatrix} p_{a1,11} & p_{a1,12} \\ p_{a1,21} & p_{a1,22} \end{bmatrix}$$

$$u_b = \begin{bmatrix} p_{b2,11} & p_{b2,12} \\ p_{b2,21} & p_{b2,22} \end{bmatrix} \begin{bmatrix} e_{b11} & e_{b12} \\ e_{b21} & e_{b22} \end{bmatrix} \begin{bmatrix} p_{b1,11} & p_{b1,12} \\ p_{b1,21} & p_{b1,22} \end{bmatrix}$$

$$u_{a11} = \cosh(\mu_{a2}l_{a2})\cosh(\mu_{a1}l_{a1}) + \left(\left(-\frac{2\Delta H_0}{Q_0}\right)\cosh(\mu_{a2}l_{a2}) - Z_{ca2}\sinh(\mu_{a2}l_{a2})\right)\left(-\frac{1}{Z_{ca1}}\sinh(\mu_{a1}l_{a1})\right)$$

$$u_{a12} = \cosh(\mu_{a2}l_{a2})\left(-Z_{ca1}\sinh(\mu_{a1}l_{a1})\right) + \left(\left(-\frac{2\Delta H_0}{Q_0}\right)\cosh(\mu_{a2}l_{a2}) - Z_{ca2}\sinh(\mu_{a2}l_{a2})\right)\cosh(\mu_{a1}l_{a1})$$

$$u_{b21} = \left(-\frac{1}{Z_{cb2}}\sinh(\mu_{b2}l_{b2})\right)\cosh(\mu_{b1}l_{b1}) + \left(\left(\frac{2\Delta H_0}{Z_{cb2}Q_0}\right)\sinh(\mu_{b2}l_{b2}) + \cosh(\mu_{b2}l_{b2})\right)\left(-\frac{1}{Z_{cb1}}\sinh(\mu_{b1}l_{b1})\right)$$

$$u_{b22} = \left(-\frac{1}{Z_{cb2}}\sinh(\mu_{b2}l_{b2})\right)\left(-Z_{cb1}\sinh(\mu_{b1}l_{b1})\right) + \left(\left(\frac{2\Delta H_0}{Z_{cb2}Q_0}\right)\sinh(\mu_{b2}l_{b2}) + \cosh(\mu_{b2}l_{b2})\right)\cosh(\mu_{b1}l_{b1})$$

$$\Delta h = h_2 - h_1,$$

$h_3$ = hauteur de pression adimensionnelle variable dans le temps au point de détermination de l'écoulement,

$h_1$ = hauteur de pression adimensionnelle variable dans le temps mesurée par un premier capteur,

$h_2$ = hauteur de pression adimensionnelle variable dans le temps mesurée par un second capteur,

$l_{a1}$ = distance entre un premier transducteur et un premier élément hydraulique,

$l_{a2}$ = distance entre un second transducteur et le premier élément hydraulique,

$l_{b1}$ = distance entre le second transducteur et un second élément hydraulique,

$l_{b2}$ = distance entre le second élément hydraulique et le point de détermination de l'écoulement,

$Z_{cx}$ = l'impédance caractéristique pour la section de conduit x,

$\mu_x$ = la constante de propagation pour la section de conduit x,

où x désigne les sections de conduit $a_1$, $a_2$, et $b_1$, et $b_2$

$Q_0$ = débit moyen dans le temps,

$H_0$ = hauteur de pression moyenne dans le temps, et

$q_3$ = débit variable dans le temps au point de détermination de l'écoulement.

**FIGURE 1**

**FIGURE 2**

**FIGURE 3**

100

101
Raw pressure data
Pressure input 1
Pressure input 2

102
Wave speed
Calculation

System
wave speed

103

104
Pressure data
modification

Modified
pressure inputs

105
Flow
calculation

106
Flow rate

# FIGURE 4

Input: x[n]

$n_1$

System

Transfer function : g[n]

$\Delta n = |n_1 - n_2|$

Output: y[n]

$n_2$

# FIGURE 5

FIGURE 6

200

Measure pressure at two points | 201

Pressure measurements
in time (x[n] and y[n])

Fast Fourier transform the measured pressure | 202

Pressure measurements
in frequency (X[ω] and Y[ω])

Determination of transfer function: G[ω] = Y[ω]/X[ω] | 203

Transfer function
in frequency (G[ω])

Inverse fast Fourier transform the determined transfer function | 204

Transfer function
in time (g[n])

Determine the location of the largest spike | 205

Delay, Δn

Known information
Transducer spacing
Sampling frequency

206

⊕ 207

System wave speed | 208

FIGURE 7

300

Raw pressure data | 301

Resister the start and end points of the raw data | 302

Calculate the difference: ( start point - end point ) | 303

if
difference < tolerance | 304

Shift the end point | 305

NO

YES

Use the chosen data set for KDP method | 306

# FIGURE 8

# FIGURE 9

**FIGURE 10**

**FIGURE 11**

# FIGURE 12A

# FIGURE 12B

## FIGURE 13A

## FIGURE 13B

**FIGURE 14**

**FIGURE 15**

EP 2 726 827 B1

# FIGURE 16A

# FIGURE 16B

800

Data acquisition  101

Pressure input 1
Pressure input2

Wave speed calculation  102

System
wave speed

103

Data modification  104

Modified
pressure inputs
wave speed

Flow calculation  105

Calculated
flow rate

Wave speed
Transducer
spacing

107

108

Correction  109

Corrected
flow rate  106

# FIGURE 17

**FIGURE 18**

**FIGURE 19**

EP 2 726 827 B1

**FIGURE 20A**

**FIGURE 20B**

**FIGURE 20C**

**FIGURE 20D**

74

FIGURE 21A

FIGURE 21B

FIGURE 21C

FIGURE 21D

**FIGURE 21E**

**FIGURE 21F**

**FIGURE 21G**

**FIGURE 21H**

—True response  —Predicted response

## FIGURE 21I

—True flow response  —Predicted flow response

## FIGURE 21J

**FIGURE 22A**

**FIGURE 22B**

$--- \Delta t' = 0.05 \quad — \Delta t' = 0.075$

**FIGURE 23A**

0.5% error ---- 1% error 1.5% error
···· 3% error — 5% error 10% error

**FIGURE 23B**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9615427 A

**Non-patent literature cited in the description**

- **DOEBELIN, E. O.** Measurement systems: application and design. McGraw-Hill, 1990
- **WASHIO, S. ; TAKAHASHI, S. ; YU, Y. ; YAMAGUCHI, S.** Study of unsteady orifice flow characteristics in hydraulic oil lines. *Journal of Fluids Engineering, Transactions of the ASME,* 1996, vol. 118 (4), 743-748
- **CATANIA, A. E. ; FERRARI, A.** Development and assessment of a new operating principle for the measurement of unsteady flow rates in high-pressure pipelines. *Flow Measurement and Instrumentation,* 2009, vol. 20 (6), 230-240
- **WYLIE, E. B. ; STREETER, V. L.** Fluid Transients in Systems. Prentice Hall, 1993